(19) Europäisches Patentamt
European Patent Office
Office européen des brevets

(11) **EP 4 436 282 A1**

(12) **EUROPEAN PATENT APPLICATION**
published in accordance with Art. 153(4) EPC

(43) Date of publication:
**25.09.2024 Bulletin 2024/39**

(21) Application number: **21964436.6**

(22) Date of filing: **19.11.2021**

(51) International Patent Classification (IPC):
**H04W 72/04** (2023.01)     **H04W 4/48** (2018.01)
**H04L 5/00** (2006.01)     **H04L 1/18** (2023.01)

(52) Cooperative Patent Classification (CPC):
**H04L 1/18; H04L 5/00; H04W 4/48; H04W 72/04**

(86) International application number:
**PCT/CN2021/131920**

(87) International publication number:
**WO 2023/087282 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHAO, Zhenshan**
**Dongguan, Guangdong 523860 (CN)**

(74) Representative: **RGTH**
**Patentanwälte PartGmbB**
**Neuer Wall 10**
**20354 Hamburg (DE)**

(54) **WIRELESS COMMUNICATION METHOD, FIRST TERMINAL DEVICE, AND SECOND TERMINAL DEVICE**

(57) Embodiments of this application provide a wireless communication method, a first terminal device, and a second terminal device. The method relates to the field of communications, and the method includes: receiving a first physical sidelink shared channel PSSCH in a first slot; determining a first transmission resource from a PSFCH transmission resource set included in a second slot; and transmitting a first PSFCH on the first transmission resource, where the second slot is determined based on the first slot, and the first PSFCH carries sidelink feedback information that is in response to the first PSSCH. According to the wireless communication method provided in this application, PSFCH transmission of a first terminal device can be implemented, so that system performance can be enhanced, and resource utilization can also be improved.

<u>200</u>

| |
|---|
| Receive a first physical sidelink shared channel PSSCH in a first slot — S210 |
| Determine a first transmission resource from a PSFCH transmission resource set included in a second slot — S220 |
| Transmit a first PSFCH on the first transmission resource, where the second slot is determined based on the first slot, and the first PSFCH carries sidelink feedback information that is in response to the first PSSCH — S230 |

FIG. 15

EP 4 436 282 A1

**Description**

**TECHNICAL FIELD**

Embodiments of this application relate to the field of communications, and more specifically, to a wireless communication method, a first terminal device, and a second terminal device.

**BACKGROUND**

In existing new radio (New Radio, NR) sidelink (Sidelink, SL) transmission, a physical sidelink feedback channel (Physical Sidelink Feedback Channel, PSFCH) occupies one resource block (Resource Block, RB) in frequency domain, and a transmission resource of a physical sidelink shared channel (Physical Sidelink Shared Channel, PSSCH) is in a one-to-one correspondence with a PSFCH transmission resource. That is, for each PSSCH, a receiving terminal may determine a unique RB, and perform sidelink feedback on the RB.

However, for a sidelink transmission technology, such as device to device (Device to Device, D2D) or vehicle to everything (Vehicle to Everything, V2X), a terminal device may work on an unlicensed spectrum. In this case, how to perform PSFCH transmission on an unlicensed spectrum is an urgent technical problem to be solved in the art.

**SUMMARY**

Embodiments of this application provide a wireless communication method, a first terminal device, and a second terminal device, so that PSFCH transmission of the first terminal device can be implemented, system performance can be enhanced, and resource utilization can also be improved.

According to a first aspect, this application provides a wireless communication method, including:

receiving a first physical sidelink shared channel PSSCH in a first slot;
determining a first transmission resource from a PSFCH transmission resource set included in a second slot; and
transmitting a first PSFCH on the first transmission resource.

The second slot is determined based on the first slot, and the first PSFCH carries sidelink feedback information that is in response to the first PSSCH.

According to a second aspect, this application provides a wireless communication method, including:

transmitting a first physical sidelink shared channel PSSCH in a first slot;
determining a first transmission resource from a PSFCH transmission resource set included in a second slot; and
receiving a first PSFCH on the first transmission resource.

The second slot is determined based on the first slot, and the first PSFCH carries sidelink feedback information that is in response to the first PSSCH.

According to a third aspect, this application provides a first terminal device, configured to execute the method in the first aspect or in each implementation of the first aspect. Specifically, the first terminal device includes a function module configured to execute the method according to the first aspect or in each implementation of the first aspect.

In an implementation, the first terminal device may include a processing unit, and the processing unit is configured to execute a function related to information processing. For example, the processing unit may be a processor.

In an implementation, the first terminal device may include a transmitting unit and/or a receiving unit. The transmitting unit is configured to execute a function related to transmitting, and the receiving unit is configured to execute a function related to receiving. For example, the transmitting unit may be a transmitting set or a transmitter, and the receiving unit may be a receiving set or a receiver. For another example, the first terminal device is a communications chip, the transmitting unit may be an input circuit or an interface of the communications chip, and the transmitting unit may be an output circuit or an interface of the communications chip.

According to a fourth aspect, this application provides a second terminal device, configured to execute the method according to the second aspect or in each implementation of the second aspect. Specifically, the second terminal device includes a function module configured to execute the method according to the second aspect or in each implementation of the second aspect.

In an implementation, the second terminal device may include a processing unit, and the processing unit is configured to execute a function related to information processing. For example, the processing unit may be a processor.

In an implementation, the second terminal device may include a transmitting unit and/or a receiving unit. The transmitting unit is configured to execute a function related to transmitting, and the receiving unit is configured to execute a function related to receiving. For example, the transmitting unit may be a transmitting set or a transmitter, and the receiving unit may be a receiving set or a receiver. For another example, the second terminal device is a communications chip, the receiving unit may be an input circuit or an interface of the communications chip, and the transmitting unit may be an output circuit or an interface of the communications chip.

According to a fifth aspect, this application provides a first terminal device, including a processor and a memory. The memory is configured to store a computer program, and the processor is configured to invoke and run the computer program stored in the memory to execute the method according to the first aspect or in each implementation of the first aspect.

In an implementation, there is one or more processors, and there is one or more memories.

In an implementation, the memory may be integrated with the processor, or the memory is disposed separately from the processor.

In an implementation, the first terminal device further includes a transmitting set (transmitter) and a receiving set (receiver).

According to a sixth aspect, this application provides a second terminal device, including a processor and a memory. The memory is configured to store a computer program, and the processor is configured to invoke and run the computer program stored in the memory to execute the method according to the second aspect or in each implementation of the second aspect.

In an implementation, there is one or more processors, and there is one or more memories.

In an implementation, the memory may be integrated with the processor, or the memory is disposed separately from the processor.

In an implementation, the second terminal device further includes a transmitting set (transmitter) and a receiving set (receiver).

According to a seventh aspect, this application provides a chip, configured to implement the method according to any one of the first aspect and the second aspect or in each implementation of the first aspect and the second aspect. Specifically, the chip includes a processor, configured to invoke and run a computer program from a memory, to cause a device installed with the chip to execute the method according to any one of the first aspect and the second aspect or in each implementation of the first aspect and the second aspect.

According to an eighth aspect, this application provides a computer-readable storage medium, configured to store a computer program, where the computer program causes a computer to execute the method according to any one of the first aspect and the second aspect or in each implementation of the first aspect and the second aspect.

According to a ninth aspect, this application provides a computer program product, including computer program instructions, where the computer program instructions cause a computer to execute the method according to any one of the first aspect and the second aspect or in each implementation of the first aspect and the second aspect.

According to a tenth aspect, this application provides a computer program, and when the computer program runs on a computer, the computer executes the method according to any one of the first aspect and the second aspect or in each implementation of the first aspect and the second aspect.

Based on the foregoing technical solutions, a PSFCH transmission resource set is introduced based on a second slot, and a first PSFCH corresponding to a first PSSCH received in a first slot is designed to be transmitted on a first transmission resource determined in the PSFCH transmission resource set. In this way, a first terminal device may implement transmission of the first PSFCH based on the first transmission resource, thereby improving system performance. In addition, PSFCHs corresponding to PSSCHs in different slots may be multiplexed and transmitted in a same slot in a same manner, thereby improving resource utilization.

## BRIEF DESCRIPTION OF DRAWINGS

FIG. 1 to FIG. 7 show examples of scenarios according to this application.

FIG. 8 is a schematic diagram of sidelink feedback according to this application.

FIG. 9 is a schematic diagram of a slot structure of a PSFCH and a PSCCH/PSSCH according to this application.

FIG. 10 is a schematic diagram of a resource of a sidelink feedback channel according to this application.

FIG. 11 is an example of an interlace-based transmission resource according to an embodiment of this application.

FIG. 12 and FIG. 13 are schematic diagrams of an interlace-based frame structure according to an embodiment of this application.

FIG. 14 is an example of a resource pool configured on an unlicensed spectrum according to an embodiment of this application.

FIG. 15 is a schematic flowchart of a wireless communication method according to an embodiment of this application.

FIG. 16 shows an example of an index of a transmission resource set available for transmission of a PSFCH according to an embodiment of this application.

FIG. 17 shows an example in which there is a one-to-one correspondence between an interlace included in a PSSCH resource pool and an interlace in a PSFCH slot according to an embodiment of this application.

FIG. 18 shows an example in which there is a many-to-one correspondence between an interlace included in a PSSCH resource pool and an interlace in a PSFCH slot according to an embodiment of this application.

FIG. 19 shows an example in which there is a one-to-many correspondence between an interlace included in a PSSCH resource pool and an interlace in a PSFCH slot according to an embodiment of this application.

FIG. 20 is another schematic flowchart of a wireless communication method according to an embodiment of this application.

FIG. 21 is a schematic block diagram of a first terminal device according to an embodiment of this application.

FIG. 22 is a schematic block diagram of a second terminal device according to an embodiment of this application.

FIG. 23 is a schematic block diagram of a communications device according to an embodiment of this application.

FIG. 24 is a schematic block diagram of a chip according to an embodiment of this application.

## DESCRIPTION OF EMBODIMENTS

The following describes the technical solutions in embodiments of this application with reference to the accompanying drawings.

The embodiments of this application may be applicable to any communications framework from a terminal device to a terminal device, for example, vehicle to a vehicle (Vehicle to Vehicle, V2V), vehicle to everything (Vehicle to Everything, V2X), and device to device (Device to Device, D2D). A terminal device in this application may be any device or apparatus configured with a physical layer and a media access control layer, and the terminal device may also be referred to as an access terminal, for example, a user equipment (User Equipment, UE), a subscriber unit, a subscriber station, a mobile site, a mobile station, a remote station, a remote terminal, a mobile device, a user terminal, a terminal, a wireless communications device, a user agent, or a user apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another linear processing device connected to a wireless modem, a vehicle-mounted device, a wearable device, or the like. Embodiments of the disclosure are described by using a vehicle-mounted terminal as an example, but are not limited thereto.

The technical solutions in embodiments of this application may be applied to various communications systems, for example, a global system of mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Networks, NTN) system, a universal mobile telecommunication system (Universal Mobile Telecommunication System, UMTS), wireless local area networks (Wireless Local Area Networks, WLAN), wireless fidelity (Wireless Fidelity, WiFi), a 5th generation (5th-Generation, 5G) system, or another communications system.

Generally, a quantity of connections supported by a conventional communication system is limited and is also easy to implement. However, with development of communication technologies, a mobile communications system not only supports conventional communication, but also supports, for example, device-to-device (Device to Device, D2D) communication, machine to machine (Machine to Machine, M2M) communication, machine type communication (Machine Type Communication, MTC), vehicle to vehicle (Vehicle to Vehicle, V2V) communications, or vehicle to everything (Vehicle to everything, V2X) communication. Embodiments of this application may also be applied to these communications systems.

Optionally, a communications system in this application may be applied to a carrier aggregation (Carrier Aggregation, CA) scenario, a dual connectivity (Dual Connectivity, DC) scenario, or a standalone (Standalone, SA) networking scenario.

Optionally, the communications system in this application may be applied to an unlicensed spectrum, and the unlicensed spectrum may also be considered as a shared spectrum. Alternatively, the communications system in this application may be applied to a licensed spectrum, and the licensed spectrum may also be considered as a non-shared spectrum.

Embodiments of this application are described with reference to a network device and a terminal device. The terminal device may also be referred to as a user equipment (User Equipment, UE), an access terminal, a user unit, a user station, a mobile station, a mobile station, a remote station, a remote terminal, a mobile device, a user terminal, a terminal, a wireless communications device, a user agent, a user apparatus, or the like.

The terminal device may be a station (STATION, ST) in a WLAN, and may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device, another processing device connected to a wireless modem, a vehicle-mounted device, a wearable device, a terminal device in a next-generation communications system such as an NR network, or a terminal device in a public land mobile network (Public Land Mobile Network, PLMN), or the like.

In this application, the terminal device may be deployed on land, including being indoors or outdoors, and may be handheld, wearable, or vehicle-mounted. The terminal device may also be deployed on water (for example, on a ship). The terminal device may also be deployed in the air (for example, on an airplane, an air balloon, or a satellite).

In this application, the terminal device may be a mobile phone (Mobile Phone), a pad (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self driving (self-driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home) or the like.

As an example rather than limitation, in this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide full or partial functions without relying on a smart phone, for example, a smart watch or smart glasses, and devices that only focus on a specific type of application function and need to cooperate with another device such as a smart phone for use, for example, various smart bracelets and smart jewelries for physical sign monitoring.

In this application, the network device may be a device configured to communicate with a mobile device. The network device may be an access point (Access Point, AP) in a WLAN, may be a base transceiver station (Base Transceiver Station, BTS) in GSM or CDMA, may be a NodeB (NodeB, NB) in WCDMA, or may be an evolutional Node B (Evolutional Node B, eNB or eNodeB) in LTE, or a relay station or an access point, or a vehicle-mounted device, a wearable device, a network device or gNB (gNB) in an NR network, or a network device in a future evolved PLMN, or a network device in an NTN, or the like.

By way of example rather than limitation, in this application, the network device may have a mobility characteristic. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. Optionally, the network device may alternatively be a base station disposed in a location such as land or water.

In this application, the network device may provide a service for a cell. The terminal device communicates with the network device by using a transmission resource (for example, a frequency domain resource or a spectrum resource) used in the cell. The cell may be a cell corresponding to a network device (for example, a base station). The cell may belong to a macro base station, or may be a base station corresponding to a small cell (Small cell). The small cell herein may include a metro cell (Metro cell), a micro cell (Micro cell), a pico cell (Pico cell), a femto cell (Femto cell), and the like. These small cells have characteristics such as small coverage and low transmit power, and are suitable for providing a high-rate data transmission service.

It should be understood that the terms "system" and "network" may often be used interchangeably herein. In this specification, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

The terms used in implementations of this application are only used to illustrate specific embodiments of this application, but are not intended to limit this application. The terms "first", "second", "third", "fourth", and the like in the specification, claims, and drawings of this application are used for distinguishing different objects from each other, rather than defining a specific order. In addition, the terms "include" and "have" and any variations thereof are intended to cover a non-exclusive inclusion.

It should be understood that, the "indication" mentioned in embodiments of this application may be a direct indication or an indirect indication, or indicate an association. For example, if A indicates B, it may mean that A directly indicates B, for example, B can be obtained from A. Alternatively, it may mean that A indicates B indirectly, for example, A indicates C and B can be obtained from C. Alternatively, it may mean that there is an association between A and B.

In the description of embodiments of this application, the term "corresponding" may mean that there is a direct or indirect correspondence between two elements, or that there is an association between two elements, or that there is a relationship of "indicating" and "being indicated", "configuring" and "being configured", or the like.

In this application, the "predefined" can be implemented by pre-storing a corresponding code or table in a device (for example, including the terminal device and the network device) or in other manners that can be used for indicating related information, and a specific implementation thereof is not limited in this application. For example, pre-defined may refer to defined in a protocol.

In this application, the "protocol" may refer to a standard protocol in the communication field, which may include, for example, an LTE protocol, an NR protocol, and a related protocol applied to a future communications system, and the disclosure is not limited in this regard.

Sidelink communication may be divided, depending on a network coverage status of a communicating terminal, into sidelink communication within network coverage, sidelink communication with partial network coverage, and sidelink communication out of network coverage.

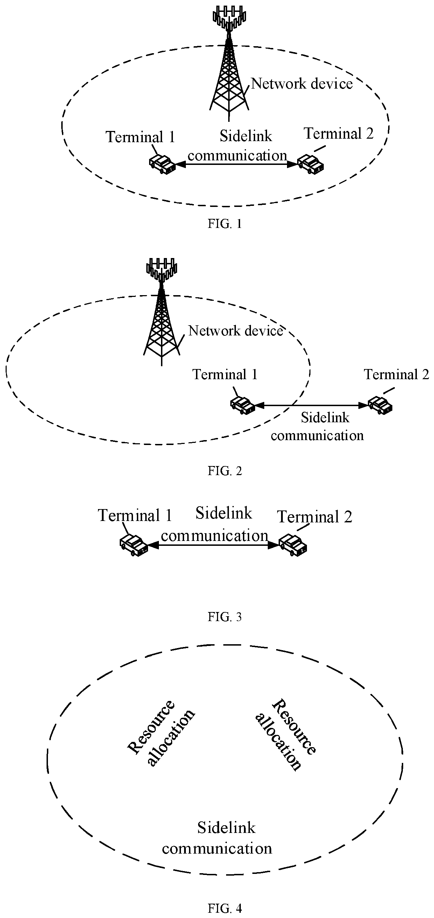

FIG. 1 to FIG. 5 show system frameworks from a vehicle-mounted terminal to a vehicle-mounted terminal according to this application.

As shown in FIG. 1, in the sidelink communication within network coverage, all terminals (including a terminal 1 and a terminal 2) that perform sidelink communication are in coverage of a network device. Thus, all terminals may perform sidelink communication based on a same sidelink configuration by receiving configuration signaling from the network device.

As shown in FIG. 2, in a case of the sidelink communication with partial network coverage, some terminals that perform sidelink communication are located in coverage of a network device. These terminals (namely, a terminal 1) can receive configuration signaling from the network device, and perform sidelink communication according to a configuration of the network device. However, a terminal (namely, a terminal 2) located outside the network coverage cannot receive configuration signaling from the network device. In this case, the terminal outside the network coverage determines, based on pre-configuration (pre-configuration) information and information carried in a physical sidelink broadcast channel (Physical Sidelink Broadcast Channel, PSBCH) transmitted by the terminals located in the network coverage, a sidelink configuration for sidelink communication.

As shown in FIG. 3, for the sidelink communication out of network coverage, all terminals (including a terminal 1 and a terminal 2) that perform sidelink communication are located outside network coverage, and all terminals perform sidelink communication according to a sidelink configuration determined based on pre-configuration information.

As shown in FIG. 4, for side communication with a central control node, a plurality of terminals (including a terminal 1, a terminal 2, and a terminal 3) form a communication group, and the communication group has a central control node, which may also be referred to as a cluster header (Cluster Header, CH). The central control node has one of following functions: responsible for establishment of the communication group; joining and leaving of a group member; resource coordination, allocation of sidelink transmission resources for another terminal, and reception of sidelink feedback information from the another terminal; resource coordination with another communication group; and other functions. For example, the terminal 1 shown in FIG. 4 is a central control node in a communication group formed by the terminal 1, the terminal 2, and the terminal 3.

Device-to-device communication is a sidelink (Sidelink, SL) transmission technology based on D2D. Different from a traditional cellular system in which communication data is received or transmitted via a network device, in a V2X system, D2D direct communication is adopted, which therefore has higher spectral efficiency and lower transmission latency. Two transmission modes are defined in 3GPP: Mode 1 and Mode 2.

Mode 1:

Transmission resources of a terminal are allocated by a network device, and the terminal transmits data on a sidelink based on the resources allocated by the network device. The network device may allocate, to the terminal, a resource for single transmission, or may allocate, to the terminal, a resource for semi-static transmission. As shown in FIG. 1, a terminal is located in the network coverage, and a network allocates, to the terminal, a transmission resource used for sidelink transmission.

Mode 2:

A terminal selects a resource from a resource pool for data transmission. As shown in FIG. 3, a terminal is located outside coverage of a cell, and the terminal independently selects a transmission resource from a pre-configured resource pool for sidelink transmission. Alternatively, in FIG. 1, a terminal independently selects a transmission resource from a resource pool configured by a network to perform sidelink transmission.

In NR-V2X, autonomous driving is supported. Thus, higher requirements are imposed on data interaction between vehicles, such as higher throughput, lower latency, higher reliability, larger coverage, and more flexible resource allocation.

In LTE-V2X, broadcast transmission is supported. In NR-V2X, unicast and multicast transmissions are introduced.

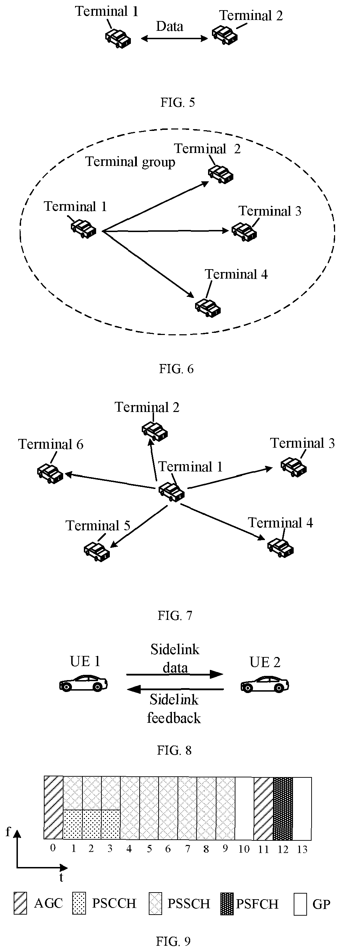

For the unicast transmission, there is only one receiving terminal. FIG. 5 is a schematic diagram of unicast transmission according to this application. As shown in FIG. 5, unicast transmission is performed between a terminal 1 and a terminal 2.

For the multicast transmission, all terminals in a communication group or all terminals in a specific transmission distance are receiving terminals. FIG. 6 is a schematic diagram of multicast transmission according to this application. As shown in FIG. 6, a terminal 1, a terminal 2, a terminal 3, and a terminal 4 form a communication group, where the terminal 1 transmits data, and other terminal devices in the group are all receiving terminals.

For the broadcast transmission, any terminal around a transmitting terminal is a receiving terminal. FIG. 7 is a schematic diagram of broadcast transmission according to this application. As shown in FIG. 7, a terminal 1 is a transmitting terminal, other terminals, namely, a terminal 2 to a terminal 6, around the terminal 1 are all receiving terminals.

To better understand embodiments of this application, a sidelink feedback channel related to this application is described.

In NR-V2X, in order to improve reliability, a sidelink feedback channel is introduced.

FIG. 8 is a schematic diagram of sidelink feedback according to this application.

As shown in FIG. 8, for unicast transmission, a transmitting terminal transmits sidelink data (including a physical sidelink control channel (Physical Sidelink Control Channel, PSCCH) and a physical sidelink shared channel (Physical Sidelink Shared Channel, PSSCH)) to a receiving terminal, the receiving terminal transmits hybrid automatic repeat request (Hybrid Automatic Repeat reQuest, HARQ) feedback information (including acknowledgement (Acknowledgement, ACK) or negative acknowledgement (Negative Acknowledgement, NACK)) to the transmitting terminal, and the transmitting terminal determines, based on the feedback information from the receiving terminal, whether retransmission needs to be performed. The HARQ feedback information is carried on a sidelink feedback channel, for example, a PSFCH.

For example, sidelink feedback may be activated or deactivated by using pre-configuration information or network configuration information, or sidelink feedback may be activated or deactivated by a transmitting terminal. If the sidelink feedback is activated, the receiving terminal receives sidelink data sent by the transmitting terminal, and feeds back ACK or NACK to the transmitting terminal based on a detection result. The transmitting terminal determines, based on feedback information from the receiving terminal, to transmit retransmission data or new data. If the sidelink feedback is deactivated, the receiving terminal does not need to transmit feedback information, and the transmitting terminal generally transmits data in a blind retransmission manner. For example, the transmitting terminal repeatedly transmits each piece of sidelink data K times, instead of determining, based on feedback information from the receiving terminal, to transmit retransmission data.

To better understand embodiments of this application, a format of a sidelink feedback channel related to this application is described.

In NR-V2X, a sidelink feedback channel PSFCH is introduced. The PSFCH carries 1-bit hybrid automatic repeat request acknowledgement (Hybrid Automatic Repeat request Acknowledgement, HARQ-ACK) information, occupies two time domain symbols in time domain (the second symbol carries sidelink feedback information, and data on the first symbol is replication of data on the second symbol. However, the symbol is generally used as automatic gain control (Automatic gain control, AGC) at a receiving terminal), and occupies one resource block (resource block, RB) in frequency domain.

FIG. 9 is a schematic diagram of a slot structure of a PSFCH and a PSCCH/PSSCH according to this application.

As shown in FIG. 9, one slot may include time domain symbols occupied by a PSFCH, a PSCCH, and a PSSCH. Specifically, in one slot, the last symbol is used as a guard period (Guard Period, GP), the last-but-one symbol is used for PSFCH transmission, data on the last-but-two symbol is the same as data of a PSFCH symbol and used as AGC, and the last-but-three symbol is also used as GP. Data on the first symbol in the slot is the same as data on the second time domain symbol in the slot, and generally used as AGC. The PSCCH occupies three time domain symbols, and a remaining symbol may be used for PSSCH transmission. It should be understood that the figure only schematically shows time domain symbol information occupied by a PSFCH channel and a PSCCH/PSSCH channel in one slot, and does not reflect a relationship between frequency domain resources occupied by different channels.

To better understand embodiments of this application, resources of a sidelink feedback channel related to this application are described.

To reduce overheads of a PSFCH channel, one slot in every P slots is defined to include a PSFCH transmission resource, that is, a period of a sidelink feedback resource is P slots, where P = {1, 2, 4}, and the parameter P is pre-configured or configured by a network.

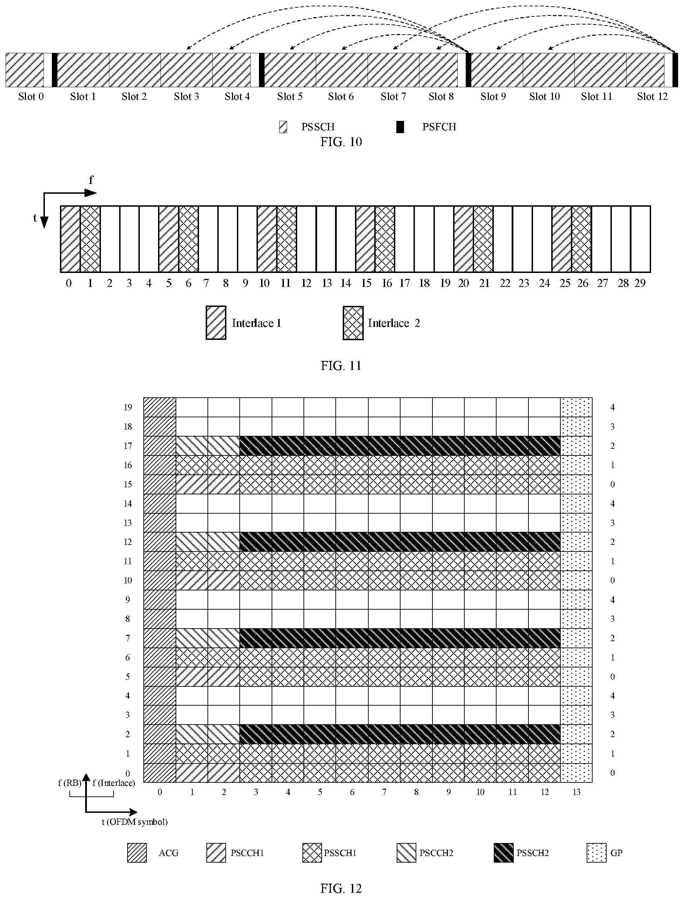

FIG. 10 is a schematic diagram of a resource of a sidelink feedback channel according to this application.

As shown in FIG. 10, it is assumed that P = 4, and a minimum time interval between a PSSCH and a PSFCH associated with the PSSCH is two slots. Therefore, the PSSCH is transmitted in slots 3, 4, 5, and 6, and feedback information of the PSSCH is transmitted in a slot 8. Therefore, slots {3, 4, 5, 6} may be considered as a slot set, the PSSCH is transmitted in the slot set, and a PSFCH corresponding to the PSSCH is transmitted in a same slot. It should be understood that FIG. 10 schematically shows time domain positions of a PSSCH and a PSFCH when the PSSCH and the PSFCH are included in one slot, and the last GP symbol is not reflected in the slot.

An unlicensed spectrum is a spectrum that is classified by a country and a region and that can be used for communication of a radio device. The spectrum is generally considered as a shared spectrum, that is, a communications device in different communications systems can use the spectrum provided that a regulatory requirement set for the spectrum by a country or a region is met, and there is no need to apply for a dedicated spectrum grant to a government.

In order to enable communications systems performing wireless communication by using an unlicensed spectrum to coexist on the spectrum, some countries or regions specify some regulatory requirements that must be met when the unlicensed spectrum is used. For example, a communications device follows a rule of "listen before talk (Listen Before Talk, LBT)", that is, before the communications device transmits a signal on a channel in an unlicensed spectrum, channel listening needs to be performed first, and the communications device can perform signal transmission only when a channel listening result is that the channel is idle; if the channel listening result of the communications device on the channel of the unlicensed spectrum is that the channel is busy, the communications device cannot perform signal transmission. To ensure fairness, in one transmission, duration in which the communications device performs signal transmission on a channel by using an unlicensed spectrum cannot exceed maximum channel occupancy time (Maximum Channel Occupancy Time, MCOT).

In this application, a sidelink transmission system (referred to as an SL-U system) based on an unlicensed spectrum is studied. Communication on an unlicensed spectrum generally needs to meet a corresponding regulatory requirement. For example, if a terminal performs communication by using an unlicensed spectrum, a range of a frequency band occupied by the terminal needs to be greater than or equal to 80% of system bandwidth. Therefore, in order to enable more users to access a channel in a same time as possible, an interlace (interlace)-based resource configuration manner is introduced in this application. One interlace includes N RBs, and a total of M interlaces are included in a frequency band range. The $m^{th}$ interlace includes {m, M+m, 2M+m, 3M+m, ...}. For a definite an interlace index, the interlace includes a plurality of resource blocks, which are referred to as interlaced resource blocks (Interlaced Resource Blocks, IRBs). A quantity of resource blocks between two consecutive interlaced resource blocks in one interlace is fixed as M, and a specific value of M is determined based on a subcarrier spacing. When the subcarrier spacing is 15 KHz, M is 10; when the subcarrier spacing is 30 KHz, M is 5. Similarly, M interlaces may be orthogonally multiplexed in frequency domain, and the M interlace indexes range from 0 to M-1.

It should be noted that the interlace, the interlace resource, or the interlace index described in embodiments of this application may be replaced with each other, which is not limited in embodiments of this application. For example, one interlace includes a plurality of RBs, which may be replaced with that one interlace resource includes a plurality of RBs, or one interlace index includes a plurality of RBs.

FIG. 11 is an example of an interlace-based transmission resource according to an embodiment of this application.

As shown in FIG. 11, it is assumed that a system bandwidth includes 30 RBs, and the 30 RBs may also be classified as five interlaces, that is, M = 5. In one interlace, there are five RBs between two adjacent RBs, and each interlace may include six RBs.

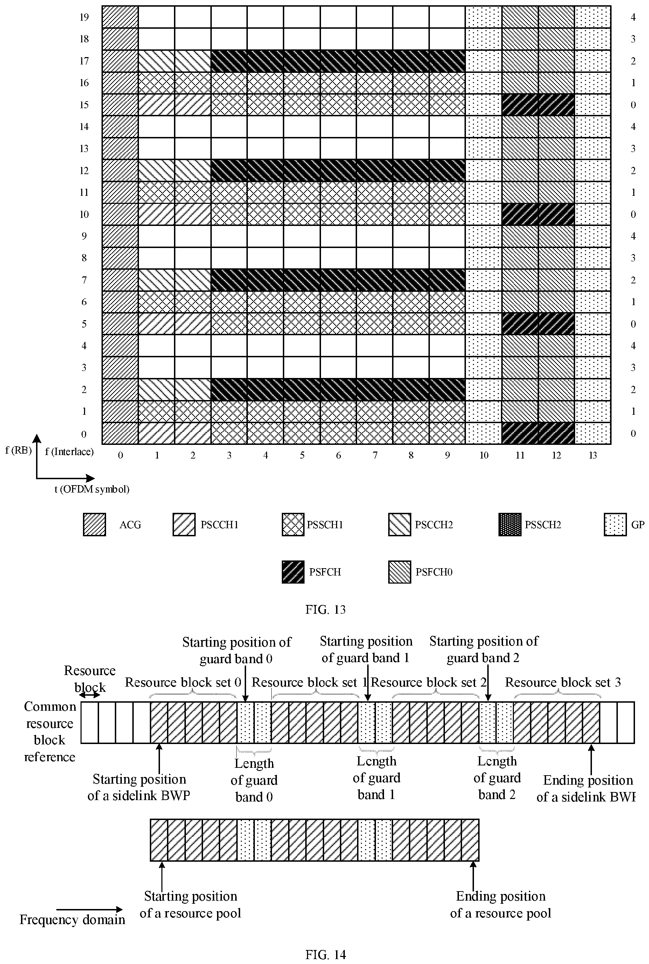

If an interlace-based resource allocation granularity is used, channels such as a PSCCH, a PSSCH, and a PSFCH in an SL-U system are all based on an interlace structure. FIG. 12 and FIG. 13 are schematic diagrams of an interlace-based frame structure according to an embodiment of this application. FIG. 12 is a schematic diagram of a frame structure that includes only a PSCCH and a PSSCH and does not include a PSFCH in a slot; and FIG. 13 is a schematic diagram of a frame structure that includes a PSCCH, a PSSCH, and a PSFCH in a slot. In the figures, a system bandwidth includes 20 RBs, and is configured with five interlaces, that is, M = 5. Each interlace includes four RBs, where a digit on the left denotes an RB index, and a digit on the right denotes an interlace index.

As shown in FIG. 12, for the frame structure that does not include a PSFCH, a system configures that the PSCCH occupies one interlace, and occupies two OFDM symbols in time domain. The PSSCH is in a unit of interlace. Data on the first symbol in the slot is the same as data on the second time domain symbol in the slot, and generally used as AGC. The last symbol is a GP symbol. For example, a PSSCH 1 occupies an interlace 0 and an interlace 1, and a PSCCH 1 corresponding to the PSSCH 1 occupies the interlace 0, that is, a frequency domain starting position of the PSCCH and the PSSCH scheduled by the PSCCH is the same. For another example, a PSSCH 2 occupies an interlace 2, and a PSCCH 2 corresponding to the PSSCH 2 also occupies the interlace 2. FIG. 13 is a corresponding slot structure including a PSFCH resource. One PSFCH occupies one interlace, for example, a PSFCH 0 occupies an interlace 0, and occupies two time domain symbols in time domain. Data transmitted on two time domain symbols is the same. For example, data on the first symbol is a repetition of data on the second symbol, or data on the second symbol is a repetition of data on the first symbol. In addition, a symbol before the first time domain symbol occupied by the PSFCH is a GP symbol, and a symbol after the last time domain symbol occupied by the PSFCH is a GP symbol. In addition, data on the first time domain symbol shown in FIG. 12 and FIG. 13 may be a repetition of the data on the second symbol, and the symbol is generally used as AGC.

It should be noted that FIG. 12 and FIG. 13 are merely examples in this application, and should not be construed as a limitation to this application. For example, in another alternative embodiment, the frame structures shown in the figures may further include a resource occupied by second-stage sidelink control information (Sidelink Control Information, SCI) and a resource occupied by a PSCCH demodulation reference signal (Demodulation Reference Signal, DMRS) and a PSSCH DMRS.

However, as described above, for a PSFCH transmitted based on an RB, to reduce overheads of the PSFCH, one slot in every P slots is defined to include a PSFCH transmission resource. Correspondingly, after interlace-based sidelink transmission is introduced, how to implement PSFCH transmission based on an interlace is an urgent technical problem to be solved. Based on this, embodiments of this application provide a wireless communication method, a first terminal device, and a second terminal device, in which an interlace used to transmit a PSFCH is specified, so that system performance can be enhanced, and resource utilization can also be improved.

In addition, in an SL-U system, a resource pool may be configured on an unlicensed spectrum or a shared spectrum by using pre-configuration information or network configuration information, and the resource pool may be used for sidelink transmission. In some implementations, the resource pool includes M1 resource block sets (Resource Block Set, RB set), one resource block set includes M2 resource blocks (Resource Block, RB), and M1 and M2 are positive integers. In some implementations, one resource block set corresponds to one channel (channel) on an unlicensed spectrum (or a shared spectrum), or one resource block set corresponds to a minimum frequency domain granularity for performing LBT, or one resource block set corresponds to an LBT sub-band.

For example, a bandwidth corresponding to a channel on an unlicensed spectrum is 20 MHz, that is, a bandwidth corresponding to one resource block set is also 20 MHz. Alternatively, a bandwidth of a channel on an unlicensed spectrum is 20 MHz, which is corresponding to M3 RBs. The M3 RBs are all RBs included in one channel, or all RBs available for data transmission on one channel. For example, if M3 = 100 (corresponding to the subcarrier spacing 15 kHz), one RB set also corresponds to 100 RBs, that is, M2 = 100.

For another example, on unlicensed spectra, whether an unlicensed spectrum can be used needs to be determined by using a result of LBT If a minimum frequency domain granularity for performing LBT is 20 MHz, one resource block set corresponds to a quantity of RBs included in 20 MHz. Alternatively, one resource block set includes M2 = 100 RBs (corresponding to the subcarrier spacing 15 kHz), and a minimum frequency domain granularity for LBT is one resource block set, that is, 100 RBs.

It should be noted that, in embodiments of this application, the resource block set may also be referred to as a channel or an LBT sub-band, which is not limited in embodiments of this application.

In some implementations, a frequency domain starting position of the resource pool is the same as a frequency domain starting position of a first resource block set in the M1 resource block sets, and the first resource block set may be a resource block set with the lowest frequency domain position in the M1 resource block sets.

In some implementations, a frequency domain end position of the resource pool is the same as a frequency domain end position of a second resource block set in the M1 resource block sets, and the second resource block set may be a resource block set with the highest frequency domain position in the M1 resource block sets.

FIG. 14 is an example of a resource pool configured on an unlicensed spectrum according to an embodiment of this application.

As shown in FIG. 14, it is assumed that the resource pool includes M1=3 resource block sets, and corresponding the resource block set indexes are respectively a resource block set 0, a resource block set 1, and a resource block set 2. A frequency domain position of the resource block set 0 is the lowest, and a frequency domain position of the resource block set 2 is the highest. Therefore, a frequency domain starting position of the resource pool is the same as a frequency domain starting position of the resource block set 0, or a frequency domain starting position of the resource pool is determined based on a frequency domain starting position of the resource block set 0. A frequency domain ending position of the resource pool is the same as a frequency domain ending position of the resource block set 2, or a frequency domain ending position of the resource pool is determined based on a frequency domain ending position of the resource block set 2.

In some implementations, a guard band (Guard Band, GB) is included between two adjacent resource block sets in the M1 resource block sets included in the resource pool.

In some implementations, a frequency domain starting position and a frequency domain size of the guard band may be determined based on pre-configuration information or network configuration information. In other words, a terminal device acquires pre-configuration information or network configuration information, and the pre-configuration information or network configuration information is used to configure a guard band (Guard Band, GB). In some implementations, the guard band is used to separate resource block sets (RB sets).

For example, with reference to FIG. 14, three guard bands are configured in a sidelink bandwidth part (Bandwidth Part, BWP), and are respectively corresponding to a guard band 0, a guard band 1, and a guard band 2. Four resource block sets are separated by the three guard bands. A frequency domain starting position and ending position of each resource block set may be determined according to a frequency domain starting position of a sidelink BWP (namely, a starting position of the sidelink BWP shown in the figure) and a frequency domain starting position of each guard band (namely, a starting position of a guard band shown in the figure) and a frequency domain size of a guard band (namely, a length of a guard band shown in the figure). Because the resource pool includes three resource block sets, namely, a resource block set 0 to a resource block set 2, a frequency domain starting position of the resource pool (namely, a starting position of the resource pool shown in the figure) corresponds to the frequency domain starting position of the resource block set 0, and a frequency domain ending position of the resource pool (namely, an ending position of the resource pool shown in the figure) corresponds to the frequency domain ending position of the resource block set 2.

In some implementations, one resource block set includes a plurality of interlaces.

For example, with reference to FIG. 14, each resource block set from the resource block set 0 to the resource block set 2 may include a plurality of interlaces.

In some implementations, one PSSCH may be transmitted in one or more resource block sets. Alternatively, one PSSCH may occupy a transmission resource in one or more resource block sets.

In still another implementation, one PSSCH may be transmitted in one or more resource block sets, and the one PSSCH occupies one or more interlaces in the one or more resource block sets. For example, with reference to FIG. 14, the resource pool includes three resource block sets, namely, a resource block set 0, a resource block set 1, and a resource block set 2. Further, when a size of subcarrier spacing is 15 kHz, 100 RBs are included in one resource block set, and corresponding to 10 interlaces, namely, an interlace 0 to an interlace 9. One PSSCH may be transmitted in one resource block set. Further, the one PSSCH may occupy a resource corresponding to some or all interlaces in the resource block set. For example, a PSSCH 1 is transmitted in the resource block set 0, and the PSSCH 1 occupies a resource corresponding to all interlaces in the resource block set 0, that is, the PSSCH 1 occupies a resource corresponding to the interlace 0 to the interlace 9 in the resource block set 0. A PSSCH 2 is transmitted in the resource block set 1, and the PSSCH 2 occupies a resource corresponding to two interlaces in the resource block set 1, for example, the PSSCH 2 occupies a resource corresponding to the interlace 0 and the interlace 1 in the resource block set 1. APSSCH 3 is transmitted in the resource block set 1 and the resource block set 2, and the PSSCH 3 separately occupies resources corresponding to three interlaces in the two resource block sets. For example, the PSSCH 3 separately occupies resources corresponding to the interlace 3, the interlace 4, and the interlace 5 in the resource block set 1 and the resource block set 2.

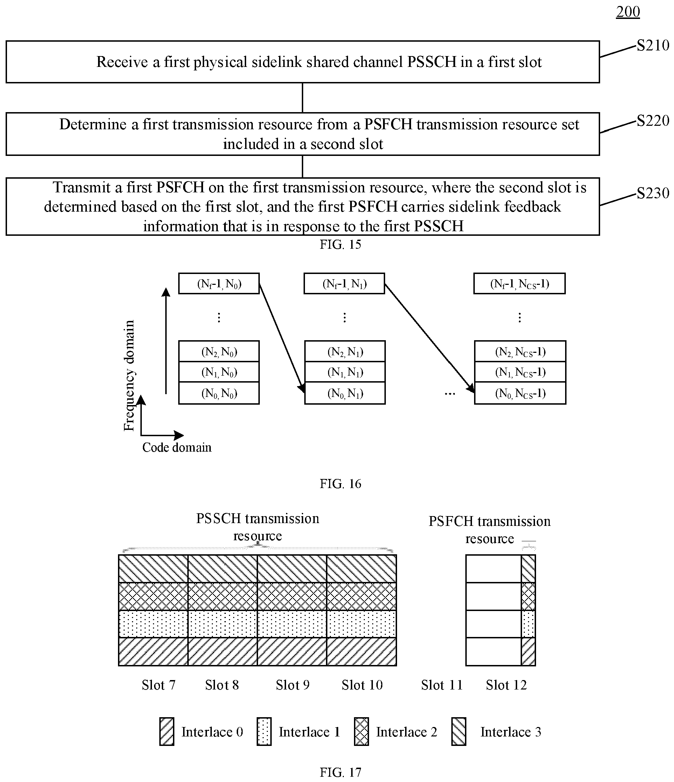

FIG. 15 is a schematic flowchart of a wireless communication method 200 according to an embodiment of this application. The method 200 may be performed by a first terminal device. The first terminal device may be a receiving terminal for receiving a PSSCH. For example, the first terminal device may be the terminal B mentioned above, or the first terminal device may be the terminal A mentioned above.

S210: Receive a first physical sidelink shared channel PSSCH in a first slot.

S220: Determine a first transmission resource from a PSFCH transmission resource set included in a second slot.

S230: Transmit a first PSFCH on the first transmission resource.

The second slot is determined based on the first slot, and the first PSFCH carries sidelink feedback information that is in response to the first PSSCH.

In this embodiment, the PSFCH transmission resource set is introduced based on the second slot, and the first PSFCH corresponding to the first PSSCH received in the first slot is designed to be transmitted on the first transmission resource determined in the PSFCH transmission resource set. In this way, the first terminal device may implement transmission of the first PSFCH based on the first transmission resource, thereby improving system performance. In addition, PSFCHs corresponding to PSSCHs in different slots may be multiplexed and transmitted in a same slot in a same manner, thereby improving resource utilization. Optionally, the first PSFCH carries sidelink feedback information corresponding to the first PSSCH, and the sidelink feedback information includes ACK or NACK.

Optionally, a size of a frequency domain resource of the first PSFCH is a physical resource block.

Optionally, the first transmission resource in this application may include a time domain resource, a frequency domain resource, or a code domain resource.

Optionally, the second slot may be determined based on a first slot where the first PSSCH is located.

For example, the first terminal device may determine, based on a slot where the first PSSCH is located and a minimum time interval between a PSSCH and a PSFCH, a slot where the first PSFCH is located. For example, the minimum time interval between the PSSCH and the PSFCH is k slots. If the first terminal device receives the first PSSCH in a slot n, the slot where the first PSFCH is located, namely, the second slot, is the first slot that is located after slot n+k (including the slot n+k) and that includes a PSFCH transmission resource.

It should be understood that in another alternative embodiment, the first PSSCH may also be replaced with another physical sidelink channel on which feedback needs to be performed, that is, the first PSSCH may be replaced with a first physical sidelink channel; the first PSFCH may also be replaced with any other physical sidelink channel that can carry feedback information, that is, the first PSFCH may be replaced with a second physical sidelink channel, and the second physical sidelink channel is used to carry feedback information corresponding to the first physical sidelink channel; and the first slot and the second slot may be respectively replaced with time units of another granularity, that is, the first slot and the second slot may be respectively replaced with a first time unit and a second time unit. Optionally, the first time unit includes but is not limited to a time domain time unit such as a frame, a subframe, a slot, and a symbol. Optionally, the second time unit includes but is not limited to a time domain time unit such as a frame, a subframe, a slot, and a symbol.

In other words, the first terminal device may receive the first physical sidelink channel on the first time unit, determine the first transmission resource from a transmission resource set included in the second time unit and used to transmit feedback information, and transmit, on the first transmission resource, feedback information corresponding to the first physical sidelink channel. Optionally, the first physical sidelink channel may be a PSSCH. Optionally, the feedback information may be carried on a second physical sidelink channel, and the second physical sidelink channel may be a PSFCH. Optionally, the first time unit includes but is not limited to a time domain time unit such as a frame, a subframe, a slot, and a symbol. Optionally, the second time unit includes but is not limited to a time domain time unit such as a frame, a subframe, a slot, and a symbol.

In some embodiments, the first PSSCH occupies at least one sub-channel (sub-channel). The step S220 may include:

determining a first transmission resource set based on information about a resource block set where the first PSSCH is located and index information corresponding to a sub-channel occupied by the first PSSCH, where the first transmission resource set includes the first transmission resource, and the index information corresponding to the sub-channel occupied by the first PSSCH includes at least one of following information:

index information corresponding to the first sub-channel in sub-channels occupied by the first PSSCH;
index information corresponding to all sub-channels occupied by the first PSSCH; and
a quantity of sub-channels occupied by the first PSSCH.

Optionally, one resource block set may include one or more sub-channels, and each sub-channel includes a plurality of RBs that are consecutive in frequency domain.

In other words, because the transmission resource of the first PSSCH is a sub-channel-based resource, one resource pool may include a plurality of resource block sets, and one resource block set may include a plurality of sub-channels. On such a basis, when determining the first transmission resource, the first terminal device may determine, from the PSFCH transmission resource set included in the second slot, the first transmission resource set available for transmission of the first PSFCH based on the information about the resource block set where the first PSSCH is located and the index information corresponding to the sub-channel occupied by the first PSSCH. Optionally, the first transmission resource set includes a frequency domain resource available for transmission of the first PSFCH and a code domain resource available for transmission of the first PSFCH. Optionally, the frequency domain resource available for transmission of the first PSFCH is determined based on the information about the resource block set where the first PSSCH is located and/or the index information corresponding to the sub-channel occupied by the first PSSCH.

In some embodiments, the resource block set where the first PSSCH is located includes at least one first resource block set, the first transmission resource set includes at least one second resource block set, and the at least one second resource block set is determined based on information about the at least one first resource block set.

In other words, one resource pool may include a plurality of resource block sets, and the transmission resource of the first PSSCH may occupy one or more resource block sets. Therefore, when determining the first transmission resource, the first terminal device may determine, from the PSFCH transmission resource set included in the second slot and based on at least one first resource block set occupied by the first PSSCH, at least one second resource block set corresponding to the at least one first resource block set, and further may determine, from the at least one second resource block set, a frequency domain resource corresponding to the first PSFCH and a corresponding code domain resource.

For example, when a PSSCH resource pool includes a resource block set, a PSFCH transmission resource may be configured in two manners:

Manner 1:

The PSSCH resource pool includes A resource block sets, and a PSFCH transmission resource set in a PSFCH slot includes B resource block sets, where A and B are positive integers, and preferably, A = B. Each resource block set in the B resource block sets is configured with a corresponding PSFCH transmission resource. Optionally, the PSFCH transmission resource includes a physical resource block available for transmission of a PSFCH. Optionally, a same PSFCH transmission resource is configured for each resource block set in the B resource block sets. For example, when determining a transmission resource of the first PSFCH based on the transmission resource of the first PSSCH, the first terminal device may determine, based on information about at least one first resource block set where the first PSSCH is located, information about at least one second resource block set used to transmit the first PSFCH. Further, the first terminal device may determine, based on index information corresponding to a sub-channel occupied by the first PSSCH in the at least one first resource block set, information about a physical resource block in at least one corresponding second resource block set.

Manner 2:

The PSSCH resource pool includes A resource block sets, and a PSFCH transmission resource set in a PSFCH slot includes B resource block sets, where A and B are positive integers, and preferably, A = B. Only one group of physical resource blocks available for transmission of a PSFCH is configured during configuration of a PSFCH transmission resource. For example, when determining a transmission resource of the first PSFCH based on the transmission resource of the first PSSCH, the first terminal device may determine information about a corresponding physical resource block from a physical resource block set available for transmission of a PSFCH based on information about at least one first resource block set where the first PSSCH is located and index information corresponding to a sub-channel occupied by the first PSSCH.

For example, a parameter sl-PSFCH-RB-Set in resource pool configuration information is used to configure a physical resource block set available for transmission of the PSFCH. For Manner 1, each resource block set has a corresponding parameter sl-PSFCH-RB-Set, or the resource pool configuration information includes only one parameter sl-PSFCH-RB-Set. However, a physical resource block set configured by using the parameter is applicable to each resource block set in the B resource block sets. For Manner 2, the resource pool configuration information includes only one parameter sl-PSFCH-RB-Set, and a PSFCH transmission resource corresponding to the PSSCH transmitted in the A resource block sets is located in a physical resource block set indicated by the parameter sl-PSFCH-RB-Set.

It should be noted that the foregoing two manners are used to determine a frequency domain resource, including a resource block set or a physical resource block, in a transmission resource of the first PSFCH. Further, the first terminal device may further determine a first transmission resource set (one transmission resource includes a frequency domain resource and a code domain resource) based on code domain resource information (or cyclic shift pair information) supported in one physical resource block, and then the first terminal device may determine a specific transmission resource in the first transmission resource set based on identities of a transmitting terminal and a receiving terminal.

In some embodiments, the method 200 may further include:

determining the at least one second resource block set based on index information corresponding to the at least one first resource block set, where the index information corresponding to the at least one first resource block set includes at least one of following information:
index information corresponding to the first first resource block set in the at least one first resource block set;
index information corresponding to all first resource block sets in the at least one first resource block set; and
a quantity of resource block sets included in the at least one first resource block set.

In some embodiments, transmission resources included in the first transmission resource set are indexed in following order:
indexing first according to a frequency domain resource, and then according to a code domain resource.

FIG. 16 shows an example of an index of a transmission resource set available for transmission of a PSFCH according to an embodiment of this application.

As shown in FIG. 16, it is assumed that a quantity of transmission resources included in a first transmission resource set of a PSFCH is $N_{total} = N_rN_{cs}$, that is, including $N_\varepsilon$ frequency domain resources. A range of indexes of the $N_\varepsilon$ frequency domain resources is 0, 1, ..., $N_f$-1, each of the $N_\varepsilon$ frequency domain resources supports Ncs cyclic shift pairs, and a range of index values of the Ncs cyclic shift pairs is 0, 1, ..., Ncs-1. In this case, an ascending resource index order of the transmission resources in the first transmission resource set corresponds to an order that is indexed first in an ascending order of frequency domain resources, and then in an ascending order of cyclic shift pairs. Optionally, the cyclic shift pair in this application may also be referred to as a code domain resource.

In some embodiments, the indexing first according to a frequency domain resource includes: indexing first according to an ascending order of a resource block set index, and then according to an ascending order of a physical resource block index; or indexing first according to an ascending order of a physical resource block index, and then according to an ascending order of a resource block set index.

With reference to FIG. 16, the $N_\varepsilon$ frequency domain resources may be physical resource blocks obtained by indexing first according to an ascending order of a resource block set index, and then according to an ascending order of a physical resource block index; or the $N_\varepsilon$ frequency domain resources may be physical resource blocks obtained by indexing first according to an ascending order of a physical resource block index, and then according to an ascending order of a resource block set index. Correspondingly, $N_{CS}$ may denote a quantity of cyclic shift pairs supported in one resource block.

In some embodiments, the method 200 may further include:
determining the first transmission resource in the first transmission resource set based on identity information of the first terminal device and/or identity information of a second terminal device, where the second terminal device is a terminal device that transmits the first PSSCH.

In other words, the first terminal device may determine the first transmission resource from a first transmission resource set available for transmission of the first PSFCH based on identity information of a transmitting terminal of the first PSFCH (corresponding to a receiving terminal of the first PSSCH) and identity information of a receiving terminal of the first PSFCH (corresponding to a transmitting terminal of the first PSSCH).

Optionally, an index of the first transmission resource in the first transmission resource set is determined according to a formula as follows:

$$S = (P_{ID} + M_{ID}) \bmod N_{total},$$

where S denotes an index of the first transmission resource, $P_{ID}$ denotes the identity of the second terminal device, $M_{ID}$ denotes the identity of the first terminal device, $N_{total}$ denotes a quantity of PSFCH transmission resources included in the first transmission resource set, and mod denotes a modulo operation.

Optionally, the identity information of the first terminal device is determined based on a member identity of the first terminal device in a communication group, or the identity information of the first terminal device is 0.

For example, the identity information of the first terminal device is the member identity of the first terminal device in a communication group.

For example, for multicast communication, when the first terminal device feeds back ACK or NACK, the identity information of the first terminal device is determined based on a member ID (member identity) of the first terminal device in a communication group; for the multicast communication, when the first terminal device feeds back only NACK (namely, a NACK-only feedback manner), the identity information of the first terminal device is 0; and for unicast communication, the identity information of the first terminal device is 0. Certainly, in another alternative embodiment, the identity information of the first terminal device may alternatively be set to another value, which is not limited in this application.

Optionally, the identity information of the second terminal device is determined based on source identity information carried in sidelink control information SCI corresponding to the first PSSCH.

For example, the identity information of the second terminal device is source identity information carried in sidelink control information SCI corresponding to the first PSSCH.

In some embodiments, the identity information of the second terminal device is determined based on the source identity information carried in the SCI associated with the first PSSCH, and the identity information of the first terminal device is determined based on identity information of a group member of the first terminal device, or the identity information of the first terminal device is 0.

In some embodiments, the first PSSCH occupies at least one first interlace. The S220 may include:
determining a second transmission resource set in the second slot based on at least one of following information:

  information about a resource block set where the first PSSCH is located;
  information about the at least one first interlace;
  a quantity of code domain resources supported in one interlace;
  code domain resource information supported by one interlace;
  a quantity of code domain resources supported in one resource block;
  code domain resource information supported by one resource block;
  a PSFCH period;
  an index of the first slot;
  a quantity of interlaces included in a PSSCH resource pool; and
  a quantity of interlaces included in a PSFCH slot.

The second transmission resource set includes the first transmission resource.

Optionally, one resource block set may include one or more interlaces, and each interlace includes a plurality of RBs that are discrete in frequency domain.

In other words, because the transmission resource of the first PSSCH is a resource based on an interlace structure, a resource pool may include a plurality of resource block sets, and a resource block set may include one or more interlaces. On such a basis, when determining the first transmission resource, the first terminal device may determine, from the PSFCH transmission resource set included in the second slot, the second transmission resource set available for transmission of the first PSFCH based on at least one of following information:

information about a resource block set where the first PSSCH is located;
information about the at least one first interlace;
a quantity of code domain resources supported in one interlace;
code domain resource information supported by one interlace;
a quantity of code domain resources supported in one resource block;
code domain resource information supported by one resource block;
a PSFCH period;
an index of the first slot;
a quantity of interlaces included in a PSSCH resource pool; and
a quantity of interlaces included in a PSFCH slot.

In other words, the second transmission resource set may include a frequency domain resource and a code domain resource, and the frequency domain resource in the second transmission resource set may include a resource block set available for transmission of the first PSFCH and an interlace available for transmission of the first PSFCH. The interlace available for transmission of the first PSFCH may be an interlace in a resource block set available for transmission of the first PSFCH. The code domain resource in the second transmission resource set may include a code domain resource available for transmission of the first PSFCH in one interlace or a code domain resource available for transmission of the first PSFCH in one resource block. For example, the code domain resource in the second transmission resource set may include a code domain resource available for transmission of the first PSFCH in one interlace available for transmission of the first PSFCH, or the code domain resource in the second transmission resource set may include a code domain resource available for transmission of the first PSFCH in one resource block available for transmission of the first PSFCH. Correspondingly, information used to determine the frequency domain resource in the second resource set may include: information used to determine the resource block set available for transmission of the first PSFCH; and information used to determine an interlace available for transmission of the first PSFCH. Information used to determine the code domain resource of the second transmission resource set may include information used to determine, in one interlace or one resource block, a code domain resource available for transmission of the first PSFCH.

In some embodiments, the information about the at least one first interlace includes at least one of following information:

index information corresponding to the first first interlace in the at least one first interlace;
index information corresponding to all interlaces included in the at least one first interlace; and
a quantity of interlaces included in the at least one first interlace.

In some embodiments, the transmission resources included in the second transmission resource set are indexed in following order:
indexing first according to a frequency domain resource, and then according to a code domain resource.

As shown in FIG. 16, it is assumed that a quantity of transmission resources included in a first transmission resource set of a PSFCH is $N_{total} = NrNcs$, that is, including $N\varepsilon$ frequency domain resources. A range of indexes of the $N\varepsilon$ frequency domain resources is 0, 1, ..., $N_f$-1. Each frequency domain resource (including one interlace or one physical resource block) of the $N\varepsilon$ frequency domain resources supports Ncs cyclic shift pairs, and a range of index values of the Ncs cyclic shift pairs is 0, 1, ..., Ncs-1. In this case, an ascending resource index order of the transmission resources in the second transmission resource set corresponds to an order that is indexed first in an ascending order of frequency domain resources, and then in an ascending order of cyclic shift pairs. Optionally, the cyclic shift pair in this application may also be referred to as a code domain resource.

In some embodiments, the indexing first according to a frequency domain resource includes: indexing first according to an ascending order of a resource block set index, and then according to an ascending order of an interlace index; or indexing first according to an ascending order of an interlace index, and then according to an ascending order of a resource block set index.

With reference to FIG. 16, in an implementation, the $N\varepsilon$ frequency domain resources may be interlaces obtained by indexing first according to an ascending order of a resource block set index, and then according to an ascending order of an interlace index; or the $N\varepsilon$ frequency domain resources may be interlaces obtained by indexing first according to an ascending order of an interlace index, and then according to an ascending order of a resource block set index.

In some embodiments, the resource block set where the first PSSCH is located includes at least one third resource block set, the second transmission resource set includes at least one fourth resource block set, and the at least one fourth resource block set is determined based on information about the at least one third resource block set.

In other words, because the transmission resource of the first PSSCH is a resource based on an interlace structure, a resource pool may include a plurality of resource block sets, and a resource block set may include one or more interlaces. On such a basis, when determining the second transmission resource, the first terminal device may determine, from the PSFCH transmission resource set included in the second slot and based on at least one third resource block set occupied by the first PSSCH, at least one fourth resource block set corresponding to the at least one third resource block set. Further, the first terminal device may determine, from the at least one fourth resource block set, at least one second interlace available for transmission of the first PSFCH and a corresponding code domain resource. In consideration of a CDM multiplexing mode, the code domain resource in this application may be a code domain resource supported in one resource block, or may be a code domain resource supported in one interlace. This is not limited in this application.

In some embodiments, the method 200 may further include:

determining the at least one fourth resource block set based on index information corresponding to the at least one third resource block set, where the index information corresponding to the at least one third resource block set includes at least one of following information:

index information corresponding to the first third resource block set in the at least one third resource block set;
index information corresponding to all third resource block sets in the at least one third resource block set; and
a quantity of resource block sets included in the at least one third resource block set.

In some embodiments, the second transmission resource set includes at least one second interlace, and the second interlace is determined based on at least one of following information:

information about a resource block set where the first PSSCH is located;
information about the at least one first interlace;
a PSFCH period;
an index of the first slot;
a quantity of interlaces included in a PSSCH resource pool; and
a quantity of interlaces included in a PSFCH slot.

Optionally, the at least one second interlace may be determined from the PSFCH transmission resource set based on the information about the at least one first interlace.

In other words, because both the first PSSCH and the first PSFCH uses a frequency domain resource granularity of interlace, an interlace occupied by the first PSSCH may correspond to an interlace of the first PSFCH, that is, an interlace where a transmission resource of the first PSSCH is located and an interlace where a transmission resource of the first PSFCH is located may correspond to each other. That is to say, the interlace where the transmission resource of the first PSFCH is located may be determined based on the interlace where the transmission resource of the first PSSCH is located. In an example, the interlace where the transmission resource of the first PSFCH is located may be determined based on an interlace index corresponding to a frequency domain starting position of the transmission resource of the first PSSCH, or the interlace where the transmission resource of the first PSFCH is located may be determined based on an index of all interlaces corresponding to the transmission resource of the first PSSCH.

Optionally, the second transmission resource set includes the at least one second interlace in each of the at least one fourth resource block set.

Optionally, the information about the at least one first interlace includes at least one of following:

index information of the first first interlace in the at least one first interlace;
a quantity of interlaces included in the at least one first interlace; and
index information of all first interlaces in the at least one first interlace.

In other words, the information about the at least one first interlace may also be referred to as information about the first interlace occupied by the first PSSCH. That is to say, the information about the at least one first interlace includes at least one of following:

index information of the first first interlace occupied by the first PSSCH;
a quantity of interlaces included in the first interlace occupied by the first PSSCH; and
index information of all first interlaces occupied by the first PSSCH.

For example, an index of the at least one second interlace may be determined based on an index of the first first interlace in the at least one first interlace. For example, if the first PSSCH occupies an interlace 0 and an interlace 1, the index of the at least one second interlace is determined based on the interlace 0. For example, the index of the first first interlace in the at least one first interlace is determined as the index of the at least one second interlace, that is, the index of the at least one second interlace is the interlace 0.

For example, the index of the at least one second interlace may be determined based on indexes of all interlaces in the at least one first interlace. For example, if the first PSSCH occupies an interlace 0 and an interlace 1, the index of the at least one second interlace is determined based on the interlace 0 and the interlace 1. For example, the indexes of all interlaces in the at least one first interlace are determined as the index of the at least one second interlace, that is, the index of the at least one second interlace includes the interlace 0 and the interlace 1.

For example, if the first PSSCH occupies $N_1$ interlace, it may be determined that a quantity of interlaces occupied by the first PSFCH is $N_3$. If the interlace of the first PSFCH is determined based on the index of the first first interlace occupied by the first PSSCH, $N_3 = 1$. If the interlace of the PSFCH is determined based on the indexes of all first interlaces occupied by the PSSCH, $N_3$ is greater than or equal to 1.

For example, if a PSSCH resource pool includes $N_4$ interlaces, and a PSFCH slot includes $N_5$ interlaces, where $N_4 = K_1 \times N_5$, and $K_1$ are positive integers, then every $K_1$ first interlaces in the PSSCH slot are corresponding to one interlace in the PSFCH slot. If $N_5 = K_2 \times N_4$, and $K_2$ are positive integers, one first interlace in the PSSCH slot is corresponding to $K_2$ interlaces in the PSFCH slot. Further, in combination with the foregoing description, a second interlace resource used to transmit a PSFCH may be determined based on information about a first interlace occupied by a PSSCH.

For example, the quantity $N_4$ of interlaces included in the PSSCH resource pool and the quantity $N_5$ of interlaces included in the PSFCH slot are determined by using resource pool configuration information. In some implementations, $N_4$ is an integer multiple of $N_5$, or $N_5$ is an integer multiple of $N_4$. That is, a quantity of interlaces in the PSSCH resource pool configured by using the resource pool configuration information may be exactly divided by a quantity of interlaces included in the PSFCH slot, or a quantity of interlaces included in the PSFCH slot configured by using the resource pool configuration information may be exactly divided by a quantity of interlaces in the PSSCH resource pool.

Optionally, there is a correspondence between an interlace included in the PSSCH resource pool and an interlace in the PSFCH slot.

In other words, there is a correspondence between an interlace in a resource pool where a PSSCH is located and an interlace used to transmit a PSFCH. For example, one interlace in the resource pool where the PSSCH is located may correspond to one interlace used to transmit the PSFCH, or a plurality of interlaces in the resource pool where the PSSCH is located may correspond to one interlace used to transmit the PSFCH, or one interlace in the resource pool where the PSSCH is located may correspond to a plurality of interlaces used to transmit the PSFCH.

For example, there is a correspondence between at least one first interlace occupied by the first PSSCH and at least one second interlace where the first PSFCH is located.

For example, an interlace resource corresponding to the first PSFCH and associated with the first PSSCH may be determined based on an interlace resource occupied by the first PSSCH. For example, according to a configuration in the resource pool configuration information, the PSSCH resource pool includes $N_4$ interlaces, and a transmission resource available for transmission of the PSFCH in the PSFCH slot includes $N_5$ interlaces. Each interlace in the PSSCH resource pool has a corresponding interlace in the PSFCH slot. If the first PSSCH occupies $N_1$ interlaces, $N_3$ interlaces corresponding to the $N_1$ interlaces may be determined in the PSFCH slot. A transmission resource, associated with the first PSSCH, of the first PSFCH is located in the $N_3$ interlaces, where $N_1$, $N_3$, $N_4$, and $N_5$ are positive integers.

For example, an interlace X in the PSSCH slot corresponds to an interlace Y in the PSFCH slot, which represents that an available transmission resource of a PSFCH that corresponds to a PSSCH transmitted on the interlace X in the PSSCH slot includes the interlace Y in the PSFCH slot; an interlace X and an interlace Y in the PSSCH slot are corresponding to an interlace Z in the PSFCH slot, which represents that an available transmission resource of a PSFCH that corresponds to a PSSCH transmitted on the interlace X in the PSSCH slot and/or on the interlace Y in the PSSCH slot includes the interlace Z in the PSFCH slot; and an interlace X in the PSSCH slot corresponds to an interlace Y and an interlace Z in the PSFCH slot, which represents that an available transmission resource of a PSFCH that corresponds to a PSSCH transmitted on the interlace X in the PSSCH slot includes the interlace Y and/or the interlace Z in the PSFCH slot, where X, Y and Z denote interlace indexes.

For example, the first PSSCH may occupy $N_1$ interlaces, and a size of $N_1$ is related to a size of a transport block corresponding to sidelink data carried in the first PSSCH. The first PSFCH may occupy $N_2$ interlaces, $N_2$ is predefined or determined based on a resource pool configuration parameter, and preferably, $N_2 = 1$. It should be understood that if $N_2 = 1$, one PSFCH occupies one interlace; however, $N_1$ interlaces occupied by the first PSSCH may correspond to $N_3$ interlaces available for transmission of the PSFCH. Therefore, a transmission resource of the first PSFCH is located in the $N_3$ interlaces available for transmission of the PSFCH, where $N_1$, $N_2$, and $N_3$ are positive integers.

Certainly, an interlace included in the PSSCH resource pool and an interlace in the PSFCH slot may be in a one-to-one correspondence, or may be in a many-to-one correspondence, or may be in a one-to-many correspondence, which is not limited in this application.

The following exemplarily describes a correspondence between an interlace included in the PSSCH resource pool and an interlace in the PSFCH slot with reference to the accompanying drawings.

Optionally, an interlace included in the PSSCH resource pool and an interlace in the PSFCH slot are a one-to-one correspondence.

FIG. 17 shows an example in which there is a one-to-one correspondence between an interlace included in a PSSCH resource pool and an interlace in a PSFCH slot according to an embodiment of this application.

As shown in FIG. 17, it is assumed that a PSFCH period is four slots, and a minimum time interval between a PSSCH and a PSFCH associated with the PSSCH is two slots. In an example, PSSCH transmission resources include a slot 7 to a slot 10 in time domain, and an interlace 0 to an interlace 3 in frequency domain. PSFCH transmission resources include an interlace 0 to an interlace 3 in a slot 12. PSFCHs corresponding to PSSCHs transmitted in the slot 7 to the slot 10 are all transmitted in the slot 12, that is to say, PSSCH slots associated with a PSFCH slot 12 include the slot 7 to the slot 10. It should be understood that, the figure only schematically shows that one slot includes four interlaces, without showing that one interlace is corresponding to a plurality of discrete RBs in frequency domain. It should be understood that interlace resources shown in the figure belong to one resource block set. When a PSSCH resource pool includes a plurality of resource block sets, the interlace resources shown in the figure may be interlace resources included in any resource block set. Alternatively, a structure of interlace resources in any resource block set in a resource pool is shown in FIG. 17.

In addition, there is a one-to-one correspondence between an interlace where a transmission resource of a PSSCH is located and an interlace where a transmission resource, of a PSFCH corresponding to the PSSCH, is located. That is, for a PSSCH transmitted on the interlace 0 and in the slot 7 to the slot 10, an available transmission resource of a PSFCH corresponding to the PSSCH includes the interlace 0 of the slot 12. For a PSSCH transmitted on the interlace 1 and in the slot 7 to the slot 10, an available transmission resource of a PSFCH corresponding to the PSSCH includes the interlace 1 of the slot 12. For a PSSCH transmitted on the interlace 2 and in the slot 7 to the slot 10, an available transmission resource of a PSFCH corresponding to the PSSCH includes the interlace 2 of the slot 12. For a PSSCH transmitted on the interlace 3 and in the slot 7 to the slot 10, an available transmission resource of a PSFCH corresponding to the PSSCH includes the interlace 3 of the slot 12.

With reference to this application, the second slot is determined based on a first slot where the first PSSCH is located. For example, it is assumed that a slot where a transmission resource of the first PSSCH is located is a slot from the slot 7 to the slot 10, a PSFCH period P is set to four slots, and a minimum time interval between a PSSCH and a PSFCH is two slots. In this case, the second slot is the slot 12, that is, a slot including a transmission resource of the PSFCH is the slot 12. In addition, interlaces in each PSSCH slot include an interlace 0, an interlace 1, an interlace 2, and an interlace 3, and the PSFCH slot (that is, interlaces corresponding to the second slot) includes the interlace 0, the interlace 1, the interlace 2, and the interlace 3. Therefore, there is a one-to-one correspondence between an interlace in the PSSCH slot and an interlace in the PSFCH slot. For example, if at least one first interlace where the transmission resource of the first PSSCH is located includes the interlace 1, the at least one second interlace may also include the interlace 1.

In some embodiments, there is a many-to-one correspondence between an interlace included in the PSSCH resource pool and an interlace in the PSFCH slot.

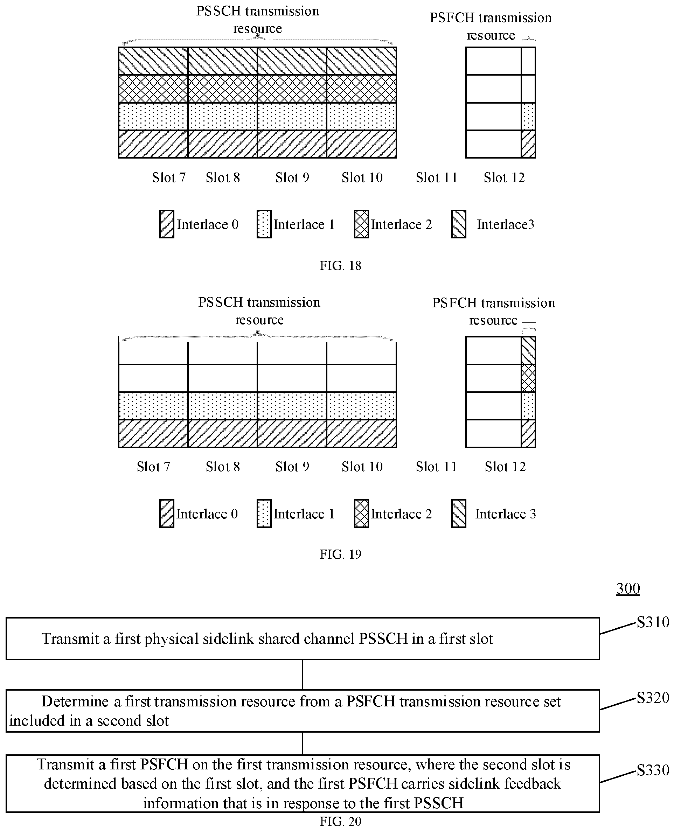

FIG. 18 shows an example in which there is a many-to-one correspondence between an interlace included in a PSSCH resource pool and an interlace in a PSFCH slot according to an embodiment of this application.

As shown in FIG. 18, it is assumed that a PSFCH period is four slots, and a minimum time interval between a PSSCH and a PSFCH associated with the PSSCH is two slots. In an example, PSSCH transmission resources include a slot 7 to a slot 10 in time domain, and an interlace 0 to an interlace 3 in frequency domain. PSFCH transmission resources include an interlace 0 to an interlace 1 in a slot 12. PSFCHs corresponding to PSSCHs transmitted in the slot 7 to the slot 10 are all transmitted in the slot 12, that is to say, PSSCH slots associated with a PSFCH slot 12 include the slot 7 to the slot 10. It should be understood that, the figure only schematically shows that one slot includes four interlaces, without showing that one interlace is corresponding to a plurality of discrete RBs in frequency domain. It should be understood that interlace resources shown in the figure belong to one resource block set. When a PSSCH resource pool includes a plurality of resource block sets, the interlace resources shown in the figure may be interlace resources included in any resource block set. Alternatively, a structure of interlace resources in any resource block set in a resource pool is shown in FIG. 18.

In addition, there is a many-to-one correspondence between an interlace where a transmission resource of a PSSCH is located and an interlace where a transmission resource, of a PSFCH corresponding to the PSSCH, is located. That is to say, $N_4 = 4$, and $N_5 = 2$, that is, two interlaces in a PSSCH slot are corresponding to one interlace in a PSFCH slot. For example, for a PSSCH transmitted on the interlace 0 and/or the interlace 1 and in the slot 7 to the slot 10, an available transmission resource of a PSFCH corresponding to the PSSCH includes the interlace 0 of the slot 12. For a PSSCH transmitted on the interlace 2 and/or the interlace 3 and in the slot 7 to the slot 10, an available transmission resource of a PSFCH corresponding to the PSSCH includes the interlace 1 of the slot 12. For example, if one PSSCH occupies Ni=2 interlaces, for example, the interlace 0 and the interlace 1, it may be determined, in a PSFCH slot, that an interlace occupied by a PSFCH corresponding to the PSSCH is the interlace 0. If one PSSCH occupies Ni=1 interlace, for example, the interlace 0, it may be determined, in a PSFCH slot, that the interlace occupied by the PSFCH corresponding to the PSSCH is the interlace 0. If one PSSCH occupies Ni=1 interlace, for example, the interlace 2, it may be determined, in a PSFCH slot, that the interlace occupied by the PSFCH corresponding to the PSSCH is the interlace 1.

With reference to this application, the second slot is determined based on a first slot where the first PSSCH is located. For example, it is assumed that a slot where a transmission resource of the first PSSCH is located is a slot from the slot 7 to the slot 10, a PSFCH period P is set to four slots, and a minimum time interval between a PSSCH and a PSFCH is two slots. In this case, the second slot is the slot 12, that is, a slot including a transmission resource of the PSFCH is the slot 12. In addition, interlaces in each PSSCH slot include an interlace 0, an interlace 1, an interlace 2, and an interlace 3, and the PSFCH transmission resource set (namely, interlaces corresponding to the second slot) includes the interlace 0 and the interlace 1. Therefore, there is a many-to-one correspondence between an interlace included in the PSSCH resource pool and an interlace in the PSFCH slot. For example, if at least one first interlace where the transmission resource of the first PSSCH is located includes the interlace 0 and/or the interlace 1, the at least one second interlace may include the interlace 0.

In some embodiments, there is a one-to-many correspondence between an interlace included in the PSSCH resource pool and an interlace in the PSFCH slot.

FIG. 19 shows an example in which there is a one-to-many correspondence between an interlace included in a PSSCH resource pool and an interlace in a PSFCH slot according to an embodiment of this application.

As shown in FIG. 19, it is assumed that a PSFCH period is four slots, and a minimum time interval between a PSSCH and a PSFCH associated with the PSSCH is two slots. In an example, PSSCH transmission resources include a slot 7 to a slot 10 in time domain, and an interlace 0 and an interlace 1 in frequency domain. PSFCH transmission resources include an interlace 0 to an interlace 3 in a slot 12. PSFCHs corresponding to PSSCHs transmitted in the slot 7 to the slot 10 are all transmitted in the slot 12, that is to say, PSSCH slots associated with a PSFCH slot 12 include the slot 7 to the slot 10. It should be understood that, the figure only schematically shows that one slot includes four interlaces, without showing that one interlace is corresponding to a plurality of discrete RBs in frequency domain. It should be understood that interlace resources shown in the figure belong to one resource block set. When a PSSCH resource pool includes a plurality of resource block sets, the interlace resources shown in the figure may be interlace resources included in any resource block set. Alternatively, a structure of interlace resources in any resource block set in a resource pool is shown in FIG. 19.

In addition, there is a one-to-many correspondence between an interlace where a transmission resource of a PSSCH is located and an interlace where a transmission resource, of a PSFCH corresponding to the PSSCH, is located. That is to say, $N_4 = 2$, and $N_5 = 4$, that is, one interlace in a PSSCH slot is corresponding to two interlaces in a PSFCH slot. For example, for a PSSCH transmitted on the interlace 0 and in the slot 7 to the slot 10, an available transmission resource of a PSFCH corresponding to the PSSCH includes the interlace 0 and the interlace 1 of the slot 12. For a PSSCH transmitted on the interlace 1 and in the slot 7 to the slot 10, an available transmission resource of a PSFCH corresponding to the PSSCH includes the interlace 2 and the interlace 3 of the slot 12. For example, if one PSSCH occupies Ni=1 interlace, for example, the interlace 0, it may be determined, in a PSFCH slot, that transmission resources of a PSFCH corresponding to the PSSCH include the interlace 0 and the interlace 1. If one PSSCH occupies Ni=2 interlaces, for example, the interlace 0 and the interlace 1, it may be determined, in a PSFCH slot, that transmission resources of a PSFCH corresponding to the PSSCH include the interlace 0, the interlace 1, the interlace 2, and the interlace 3.

With reference to this application, the second slot is determined based on a first slot where the first PSSCH is located. For example, it is assumed that a slot where a transmission resource of the first PSSCH is located is a slot from the slot 7 to the slot 10, a PSFCH period P is set to four slots, and a minimum time interval between a PSSCH and a PSFCH is two slots. In this case, the second slot is the slot 12, that is, a slot including a transmission resource of the PSFCH is the slot 12. In addition, interlaces in each PSSCH slot include an interlace 0 and an interlace 1, and the PSFCH transmission resource set (namely, interlaces corresponding to the second slot) includes an interlace 0, an interlace 1, an interlace 2, and an interlace 3. Therefore, there is a one-to-many correspondence between an interlace included in the PSSCH resource pool and an interlace in the PSFCH slot. For example, if at least one first interlace where the transmission resource of the first PSSCH is located includes the interlace 0, the at least one second interlace may include the interlace 0 and the interlace 1.

In still another embodiment, when a quantity of interlaces included in the PSSCH resource pool is less than a quantity of interlaces in a PSFCH slot, the at least one second interlace is determined based on the at least one first interlace and the first slot.

As shown in FIG. 19, it is assumed that a PSFCH period is four slots, and a minimum time interval between a PSSCH and a PSFCH associated with the PSSCH is two slots. In an example, PSSCH transmission resources include a slot 7 to a slot 10 in time domain, and an interlace 0 and an interlace 1 in frequency domain. PSFCH transmission resources include an interlace 0 to an interlace 3 in a slot 12. PSFCHs corresponding to PSSCHs transmitted in the slot 7 to the slot 10 are all transmitted in the slot 12, that is to say, PSSCH slots associated with a PSFCH slot 12 include the slot 7 to the slot 10. It should be understood that, the figure only schematically shows that one slot includes four interlaces, without showing that one interlace is corresponding to a plurality of discrete RBs in frequency domain. It should be understood that interlace resources shown in the figure belong to one resource block set. When a PSSCH resource pool includes a plurality of resource block sets, the interlace resources shown in the figure may be interlace resources included in any resource block set. Alternatively, a structure of interlace resources in any resource block set in a resource pool is shown in FIG. 19.

For example, the PSSCH resource pool includes two interlaces, that is, $N_4 = 2$, and the PSFCH slot includes four interlaces, that is, $N_5 = 4$. In this case, transmission resources of PSFCHs corresponding to PSSCHs transmitted in different PSSCH slots may correspond to different interlaces in the PSFCH slot. For example, a transmission resource of a PSFCH corresponding to a PSSCH transmitted on the interlace 0 of the slot 7 includes the interlace 0 of the slot 12; a transmission resource of a PSFCH corresponding to a PSSCH transmitted on the interlace 1 of the slot 7 includes the interlace 1 of the slot 12; a transmission resource of a PSFCH corresponding to a PSSCH transmitted on the interlace 0 of the slot 8 includes the interlace 2 of the slot 12; a transmission resource of a PSFCH corresponding to a PSSCH transmitted on the interlace 1 of the slot 8 includes the interlace 3 of the slot 12; a transmission resource of a PSFCH corresponding to a PSSCH transmitted on the interlace 0 of the slot 9 includes the interlace 0 of the slot 12; a transmission resource of a PSFCH corresponding to a PSSCH transmitted on the interlace 1 of the slot 9 includes the interlace 1 of the slot 12; a transmission resource of a PSFCH corresponding to a PSSCH transmitted on the interlace 0 of the slot 10 includes the interlace 2 of the slot 12; and a transmission resource of a PSFCH corresponding to a PSSCH transmitted on the interlace 1 of the slot 10 includes the interlace 3 of the slot 12. That is to say, transmission resources of PSFCHs corresponding to PSSCHs transmitted in the slot 7 and the slot 8 are corresponding to different interlaces in the slot 12, that is, PSFCHs corresponding to PSSCHs transmitted in the slot 7 and the slot 8 are frequency division multiplexed in the slot 12; and transmission resources of PSFCHs corresponding to PSSCHs transmitted in the slot 9 and the slot 10 are corresponding to different interlaces in the slot 12, that is, PSFCHs corresponding to PSSCHs transmitted in the slot 9 and the slot 10 are frequency division multiplexed in the slot 12. In addition, transmission resources of PSFCHs corresponding to PSSCHs transmitted on a same interlace in the slot 7 and the slot 9 are corresponding to a same interlace in the slot 12. Further, different code domain resource sets may be determined in the same interlace, so that transmission resources of PSFCHs corresponding to PSSCHs transmitted on a same interlace in the slot 7 and the slot 9 are code division multiplexed in the slot 12; and transmission resources of PSFCHs corresponding to PSSCHs transmitted on a same interlace in the slot 8 and the slot 10 are corresponding to a same interlace in the slot 12. Further, different code domain resource sets may be determined in the same interlace, so that transmission resources of PSFCHs corresponding to PSSCHs transmitted on a same interlace in the slot 8 and the slot 10 are code division multiplexed in the slot 12.

It can be learned that when a quantity of interlaces included in the PSSCH resource pool is less than a quantity of interlaces in the PSFCH slot, transmission resources of PSFCHs corresponding to PSSCHs transmitted in different PSSCH slots may be frequency division multiplexed or code division multiplexed in the PSFCH slot, and interlace resources, in the PSFCH slot, of the PSFCHs corresponding to the PSSCHs may be determined based on information of slots where the PSSCHs are located and information about interlaces occupied by the PSSCHs.

It should be understood that FIG. 17 to FIG. 19 are merely examples of this application, and should not be construed as a limitation to this application. For example, for ease of example, one interlace in FIG. 17 to FIG. 19 includes one RB. However, in actual implementation, a plurality of RBs included in one interlace should be evenly distributed in a frequency domain range. Details are not described in this application. In addition, FIG. 17 to FIG. 19 show examples in which a frequency domain resource in one slot includes four or two interlaces. However, in another alternative embodiment, a frequency domain resource in one slot may alternatively include another quantity of interlaces. In addition, FIG. 17 shows that one interlace where a PSSCH transmission resource is located corresponds to one interlace in a PSFCH slot, that is, there is a one-to-one correspondence between an interlace where a PSFCH transmission resource is located and an interlace where a PSSCH transmission resource is located. However, in another alternative embodiment, there may be a one-to-many or many-to-one correspondence. This is not specifically limited in this application. For example, FIG. 18 shows that two interlaces where PSSCH transmission resources are located correspond to one interlace in the PSFCH slot, that is, one interlace where a PSFCH transmission resource is located corresponds to two interlaces where the PSSCH transmission resources are located. For another example, FIG. 19 shows that one interlace where a PSSCH transmission resource is located corresponds to two interlaces in a PSFCH slot, that is, two interlaces where PSFCH transmission resources are located correspond to one interlace where the PSSCH transmission resource is located.

In some embodiments, the second transmission resource set includes a first code domain resource set, and the first code domain resource set is determined based on at least one of following information:

a quantity of code domain resources supported in one interlace;
code domain resource information supported by one interlace;
a quantity of code domain resources supported in one resource block;
code domain resource information supported by one resource block;
a PSFCH period;
an index of the first slot;
a quantity of interlaces included in a PSSCH resource pool; and
a quantity of interlaces included in a PSFCH slot.

Optionally, the first code domain resource set may be a code domain resource set corresponding to one interlace (for example, an interlace used to transmit a PSSCH).

For example, it is assumed that the first PSSCH occupies at least one first interlace in at least one third resource block set, and the first PSFCH occupies at least one second interlace in at least one fourth resource block set. In this case, the first code domain resource set includes a code domain resource, in one second interlace, corresponding to one first interlace in the at least one first interlace. In other words, the first code domain resource set includes a code domain resource, in one second interlace in a PSFCH slot, corresponding to one first interlace in a PSSCH slot. That is to say, if a slot where the first PSSCH is located is a first slot, and a slot where the first PSFCH is located is a second slot, the first code domain resource set includes a code domain resource, in one second interlace in the second slot, corresponding to one first interlace in the first slot. Alternatively, if the interlace where the first PSSCH is located is at least one first interlace, and the interlace where the first PSFCH is located is at least one second interlace, the first code domain resource set includes a code domain resource, in one second interlace, corresponding to one first interlace in the at least one first interlace.

For example, assuming that a transmission resource available for transmission of the first PSFCH is a second transmission resource set, and that the second transmission resource set includes at least one fourth resource block set, the first code domain resource set is a code domain resource set corresponding to one interlace in the at least one fourth resource block set.

Optionally, the first code domain resource set may be a code domain resource set corresponding to a slot (for example, a slot used to transmit a PSSCH).

For example, it is assumed that the first PSSCH occupies at least one first interlace in the at least one third resource block set, and the first PSFCH occupies at least one second interlace in the at least one fourth resource block set. In this case, the first code domain resource set includes a code domain resource, corresponding to the first slot, in one second interlace in the at least one second interlace. In other words, the first code domain resource set includes a code domain resource, in one second interlace in a PSFCH slot, corresponding to a first slot where the first PSSCH is located. That is to say, if a slot where the first PSSCH is located is a first slot, and a slot where the first PSFCH is located is a second slot, the first code domain resource set includes a code domain resource, corresponding to the first slot, in one second interlace in the second slot.

For example, it is assumed that the first PSSCH occupies at least one first resource block of at least one first interlace in the at least one third resource block set, and the first PSFCH occupies at least one second resource block of at least one second interlace in the at least one fourth resource block set. In this case, the first code domain resource set includes a code domain resource, corresponding to the first slot, in one second resource block of the at least one second resource block. In other words, the first code domain resource set includes a code domain resource, in one second resource block in a PSFCH slot, corresponding to a first slot where the first PSSCH is located. That is to say, if a slot where the first PSSCH is located is a first slot, and a slot where the first PSFCH is located is a second slot, the first code domain resource set includes a code domain resource, corresponding to the first slot, in one second resource block in the second slot.

Optionally, the first code domain resource set may be a code domain resource set corresponding to one resource block (for example, one resource block in one interlace used to transmit a PSSCH).

For example, it is assumed that the first PSSCH occupies at least one first resource block of at least one first interlace in the at least one third resource block set, and the first PSFCH occupies at least one second resource block of at least one second interlace in the at least one fourth resource block set. In this case, the first code domain resource set includes a code domain resource, in one second resource block, corresponding to one first resource block of the at least one first resource block. In other words, the first code domain resource set includes a code domain resource, in one second resource block in a PSFCH slot, corresponding to one first resource block in a PSSCH slot. That is to say, if a slot where the first PSSCH is located is a first slot, and a slot where the first PSFCH is located is a second slot, the first code domain resource set includes a code domain resource, in one second resource block in the second slot, corresponding to one first resource block in the first slot. Alternatively, if the resource block where which the first PSSCH is located is at least one first resource block, and the resource block where the first PSFCH is located is at least one second resource block, the first code domain resource set includes a code domain resource, in one second resource block, corresponding to one first resource block of the at least one first resource block.

For example, assuming that a transmission resource available for transmission of the first PSFCH is a second transmission resource set, and that the second transmission resource set includes at least one fourth resource block set, the first code domain resource set is a code domain resource set, of one resource block in one interlace, in the at least one fourth resource block set.

In this embodiment, because the first code domain resource set may be a code domain resource set corresponding to one interlace, one slot, or even one resource block, a frequency domain resource and a code domain resource of one transmission resource in the second transmission resource set are definite. In other words, different transmission resources in the second transmission resource set have different code domain resources and/or different frequency domain resources, which is equivalent to that, in this embodiment, one PSFCH in a slot including a PSFCH transmission resource may correspond to PSSCHs transmitted in P slots. That is, in this embodiment, PSFCHs corresponding to PSSCHs in a plurality of slots can be carried in one slot, so as to implement frequency division multiplexing and/or code division multiplexing on the PSFCHs in a PSFCH slot.

Optionally, the quantity of code domain resources supported in one interlace is determined based on pre-configuration information or network configuration information.

Optionally, the quantity of code domain resources supported in one interlace may be a quantity of code domain resources supported in one second interlace, and the second interlace is an interlace used to transmit a PSFCH.

For example, assuming that the first PSFCH occupies at least one second interlace, the quantity of code domain resources supported in one interlace may be a quantity of code domain resources supported in one second interlace of the at least one second interlace. For example, assuming that a transmission resource available for transmission of the first PSFCH is a second transmission resource set, and that the second transmission resource set includes at least one fourth resource block set, the quantity of code domain resources supported in one interlace may be a quantity of code domain resources supported in one interlace in the at least one fourth resource block set.

Optionally, the code domain resource information supported by one interlace may be understood as code domain resource information supported by one second interlace. The second interlace is an interlace used to transmit a PSFCH, and the code domain resource information may include index information of a code domain resource, such as an index number or an index value.

For example, assuming that the first PSFCH occupies at least one second interlace, the code domain resource information supported by one interlace may be code domain resource information supported by one second interlace of the at least one second interlace. For example, assuming that a transmission resource available for transmission of the first PSFCH is a second transmission resource set, and that the second transmission resource set includes at least one fourth resource block set, the code domain resource information supported by one interlace may be code domain resource information supported by one interlace in the at least one fourth resource block set.

Optionally, the quantity of code domain resources supported in one resource block is determined based on pre-configuration information or network configuration information.

Optionally, the quantity of code domain resources supported in one resource block may be understood as a quantity of code domain resources supported in one resource block in the at least one second interlace. The second interlace is an interlace used to transmit a PSFCH.

For example, assuming that the first PSFCH occupies at least one second interlace, the quantity of code domain resources supported in one resource block may be a quantity of code domain resources supported in one resource block in one second interlace of the at least one second interlace. For example, assuming that a transmission resource available for transmission of the first PSFCH is a second transmission resource set, and that the second transmission resource set includes at least one fourth resource block set, the quantity of code domain resources supported in one resource block may be a quantity of code domain resources supported in one resource block in one interlace of the at least one fourth resource block set.

Optionally, the code domain resource information supported by one resource block may be understood as code domain resource information supported by one resource block in the at least one second interlace. The second interlace is an interlace used to transmit a PSFCH, and the code domain resource information may include index information of a code domain resource, such as an index number or an index value.

For example, assuming that the first PSFCH occupies at least one second interlace, the code domain resource information supported by one interlace may be code domain resource information supported by one resource block in one second interlace of the at least one second interlace. For example, assuming that a transmission resource available for transmission of the first PSFCH is a second transmission resource set, and that the second transmission resource set includes at least one fourth resource block set, the code domain resource information supported by one interlace may be code domain resource information supported by one resource block of one interlace in the at least one fourth resource block set.

The first code domain resource set may be a code domain resource set corresponding to an interlace used to transmit a PSSCH, a slot used to transmit a PSSCH, or a resource block used to transmit a PSSCH. Therefore, a quantity of code domain resources in the first code domain resource set may be a quantity of code domain resources corresponding to a slot used to transmit a PSSCH, or may be a quantity of code domain resources corresponding to one interlace in a slot used to transmit a PSSCH, or may even be a quantity of code domain resources corresponding to one resource block in one interlace in a slot used to transmit a PSSCH.

In some embodiments, the quantity of code domain resources in the first code domain resource set is determined based on the quantity of code domain resources supported in one interlace or the quantity of code domain resources supported in one resource block.

For example, assuming that the first PSFCH occupies at least one second interlace, the quantity of code domain resources in the first code domain resource set is determined based on the quantity of code domain resources supported in one second interlace of the at least one second interlace, or the quantity of code domain resources in the first code domain resource set is determined based on the quantity of code domain resources supported in one resource block in one second interlace of the at least one second interlace.

For example, the quantity of code domain resources included in the first code domain resource set is directly proportional to the quantity of code domain resources supported in one interlace or the quantity of code domain resources supported in one resource block. For example, the larger the quantity of code domain resources supported in one interlace or the larger the quantity of code domain resources supported in one resource block, the larger the quantity of code domain resources included in the first code domain resource set. For another example, the smaller the quantity of code domain resources supported in one interlace or the smaller the quantity of code domain resources supported in one resource block, the smaller the quantity of code domain resources included in the first code domain resource set.

In some embodiments, the quantity of code domain resources in the first code domain resource set is determined based on following information: the quantity of code domain resources supported in one interlace or the quantity of code domain resources supported in one resource block, and the PSFCH period.

In other words, the first terminal device may determine, based on the PSFCH period and the quantity of code domain resources supported in one interlace, a quantity of code domain resources occupied by each slot in the PSFCH period in the code domain resources supported in one interlace or the code domain resources supported in one resource block.

For example, it is assumed that the quantity of code domain resources supported in one interlace is Ncsi, the PSFCH period is P, and a quantity of code domain resources corresponding to each PSSCH slot in the PSFCH period is Ncsi/P, that is, a quantity of code domain resources included in the first code domain resource set corresponding to a first slot where the first PSSCH is located is Ncsi/P. In some implementations, the quantity Ncsi of code domain resources supported in one interlace and the PSFCH period P may be determined based on resource pool configuration information, where Ncsi can be exactly divided by P. It should be understood that the foregoing formula indicates a case in which Ncsi can be exactly divided by P. If Ncsi cannot be exactly divided by P, rounding up or rounding down needs to be further performed for the foregoing formula, which is not limited in this application.

In some embodiments, a quantity of code domain resources in the first code domain resource set is determined based on following information: the quantity of code domain resources supported in one interlace or the quantity of code domain resources supported in one resource block, the PSFCH period, the quantity of interlaces included in a PSSCH resource pool, and the quantity of interlaces included in a PSFCH slot.

For example, the quantity of code domain resources in the first code domain resource set is ($N_{CS1}/(P \times K)$), where Ncsi denotes the quantity of code domain resources supported in one interlace or the quantity of code domain resources supported in one resource block, P denotes the PSFCH period, K is determined based on $N_4$ and $N_5$, $N_4$ denotes the quantity of interlaces included in a PSSCH resource pool, and $N_5$ denotes the quantity of interlaces included in a PSFCH slot.

In some embodiments, K = max(1, $N_4/N_5$).

It should be noted that in this application, $N_4$ and $N_5$ may be equal or not equal, which is not limited in this application.

For example, a quantity of code domain resources included in a PSFCH transmission resource set, in a PSFCH slot, corresponding to one interlace in one PSSCH slot is ($N_5 \cdot N_{CS1})/(N_4 \cdot P$). It should be understood that the foregoing formula indicates a case in which $N_5 \cdot N_{CS1}$ can be exactly divided by $N_4 \cdot P$, or $N_{CS1}$ can be exactly divided by ($P \cdot K_1$). If it cannot be exactly divided, rounding up or rounding down needs to be further performed for the foregoing formula, which is not limited in this application, where $K_1 = N_4/N_5$.

For example, if $N_4 = K_1 \cdot N_5$, and $K_1$ is a positive integer, the quantity of code domain resources included in a PSFCH transmission resource set, in a PSFCH slot, corresponding to one interlace in one PSSCH slot is $N_{CS1}/(P \cdot K_1)$ or ($N_5 \cdot N_{CS1})/(N_4 \cdot P$); otherwise, the quantity of code domain resources included in a PSFCH transmission resource set, in a PSFCH slot, corresponding to one interlace in one PSSCH slot is $N_{CS1}/P$. In other words, if $N_4 = K_1 \cdot N_5$, and $K_1$ is a positive integer, the quantity of code domain resources included in a PSFCH transmission resource set, in a PSFCH slot, corresponding to one interlace in one PSSCH slot may be: ($N_5 \cdot N_{CS1})/(N_4 \cdot P$). If $N_5 = K_2 \cdot N_4$, and $K_2$ is a positive integer, the quantity of code domain resources included in a PSFCH transmission resource set, in a PSFCH slot, corresponding to one interlace in one PSSCH slot may be: $N_{CS1}/P$.

For another example, if $N_4$ is greater than $N_5$, the quantity of code domain resources included in a PSFCH transmission resource set, in a PSFCH slot, corresponding to one interlace in one PSSCH slot is: $(N_5 \cdot N_{CS1})/(N_4 \cdot P)$; otherwise, the quantity of code domain resources included in a PSFCH transmission resource set, in a PSFCH slot, corresponding to one interlace in one PSSCH slot is $N_{CS1}/P$. In other words, if $N_4$ is greater than $N_5$, the quantity of code domain resources included in a PSFCH transmission resource set, in a PSFCH slot, corresponding to one interlace in one PSSCH slot may be: $(N_5 \cdot N_{CS1})/(N_4 \cdot P)$; if $N_4$ is less than or equal to $N_5$, the quantity of code domain resources included in a PSFCH transmission resource set, in a PSFCH slot, corresponding to one interlace in one PSSCH slot may be: $N_{CS1}/P$.

In some embodiments, the first PSSCH occupies at least one first interlace in each third resource block set in the at least one third resource block set, and a slot where the first PSFCH is located is a second slot. The second transmission resource set includes at least one second interlace in each fourth resource block set in the at least one fourth resource block set, and the first code domain resource set is a quantity of code domain resources occupied by one first interlace in the at least one first interlace in a PSFCH transmission set included in the second slot. The quantity of code domain resources included in the second transmission resource set is determined based on the at least one fourth resource block set, a quantity of at least one second interlace, and the quantity of code domain resources included in the first code domain resource set.

For example, a quantity of transmission resources included in a PSFCH transmission set corresponding to the first PSSCH (occupying $N_4$ first interlaces) is $N_7 \times N_3 \times (N_{CS1}/(P \times K))$, where $N_7$ denotes a quantity of fourth resource block sets corresponding to $N_6$ third resource block sets occupied by the first PSSCH, $N_3$ denotes a quantity of second interlaces corresponding to $N_1$ first interlaces occupied by the first PSSCH, K is determined based on $N_4$ and $N_5$, $N_4$ denotes the quantity of interlaces included in a PSSCH resource pool, and $N_5$ denotes the quantity of interlaces included in a PSFCH slot. In an implementation, $K = \max(1, N_4/N_5)$.

In other words, a quantity of transmission resources included in the second transmission resource set may be $N_7 \times N_3 \times (N_{CS1}/(P \times K))$ or $N_7 \times N_3 \times (N_{CS1}/P)$.

The following exemplarily describes, with reference to the accompanying drawings, an implementation of determining the quantity of code domain resources in the first code domain resource set when the quantity $N_4$ of interlaces included in a PSSCH resource pool and the quantity $N_5$ of interlaces included in the PSFCH resource pool are different.

In some embodiments, it is assumed that $N_4 = K_r N_s$, where $K_1$ is a positive integer, $N_4$ denotes the quantity of interlaces included in a PSSCH resource pool, and $N_5$ denotes the quantity of interlaces included in a PSFCH slot. That is to say, the quantity of interlaces included in a PSSCH resource pool is greater than the quantity of interlaces included in a PSFCH resource pool, that is, every $K_1$ first interlace in the PSSCH resource pool is corresponding to one second interlace in the PSFCH slot. Therefore, in P PSSCH slots corresponding to one PSFCH slot, code division multiplexing (Code Division Multiplexing, CDM) also needs to be performed on transmission resources in the PSFCH slot corresponding to different interlaces in one PSSCH slot, in addition to transmission resources in the PSFCH slot corresponding to PSSCHs in different slots, so as to implement transmitting, in one slot in a code division multiplexing manner, PSFCHs corresponding to PSSCHs in a plurality of slots.

With reference to FIG. 18, it is assumed that a PSSCH resource pool includes four interlaces (that is, $N_4 = 4$), which are respectively an interlace 0, an interlace 1, an interlace 2, and an interlace 3; and a PSFCH slot includes two interlaces (that is, $N_5 = 2$), which are respectively an interlace 0 and an interlace 1. In this case, interlaces of every $K_1$ ($N_4/N_5 = 2$, that is, $K_1 = 2$) PSSCHs are corresponding to one interlace of the PSFCH slot, that is, for a PSSCH transmitted on each of interlaces of the $K_1$ PSSCHs, a transmission resource of a PSFCH corresponding to the PSSCH includes a same interlace in the PSFCH slot. For example, the interlace 0 and the interlace 1 in a PSSCH slot are corresponding to the interlace 0 in a PSFCH slot, and the interlace 2 and the interlace 3 in the PSSCH slot are corresponding to the interlace 1 in the PSFCH slot. In this case, the first terminal device may group, according to the PSFCH period and Ki, code domain resources supported in one interlace to determine the quantity of code domain resources in the first code domain resource set. For example, the quantity of code domain resources in the first code domain resource set may be $N_{CS2} = N_{CS1}/(P \cdot K_1)$.

Specifically, because Ki=2, every two interlaces in a PSSCH slot are corresponding to one interlace in a PSFCH slot. For example, the interlace 0 and the interlace 1 in a PSSCH slot are corresponding to the interlace 0 in a PSFCH slot, that is, for a PSSCH transmitted on the interlace 0 and/or the interlace 1 in the PSSCH slot, a transmission resource of a PSFCH corresponding to the PSSCH includes the interlace 0 in the PSFCH slot; and the interlace 2 and the interlace 3 in the PSSCH slot are corresponding to the interlace 1 in the PSFCH slot, that is, for a PSSCH transmitted on the interlace 2 and/or the interlace 3 in the PSSCH slot, a transmission resource of a PSFCH corresponding to the PSSCH includes the interlace 1 in the PSFCH slot.

Assuming that Ncsi = 24, a range of indexes of corresponding code domain resources includes [0, 23], P = 4, and $K_1 = 2$, then $N_{CS2} = 3$; that is, one interlace in a PSSCH slot is corresponding to three code domain resources in a PSFCH slot. For example, the interlace 0 in a PSSCH slot 7 is corresponding to code domain resources [0, 2] of the interlace 0 in the PSFCH slot, and the interlace 1 in the PSSCH slot 7 is corresponding to code domain resources [3, 5] of the interlace 0 in the PSFCH slot; the interlace 0 in a PSSCH slot 8 is corresponding to code domain resources [6, 8] of the interlace 0 in the PSFCH slot, and the interlace 1 in the PSSCH slot 8 is corresponding to code domain resources [9, 11] of the interlace 0 in the PSFCH slot; the interlace 0 in a PSSCH slot 9 is corresponding to code domain resources [12, 14] of the interlace 0 in the PSFCH slot, and the interlace 1 in the PSSCH slot 9 is corresponding to code domain resources [15, 17] of the interlace 0 in the PSFCH slot; and the interlace 0 in a PSSCH slot 10 is corresponding to code domain resources [18, 20] of the interlace 0 in the PSFCH slot, and the interlace 1 in the PSSCH slot 10 is corresponding to code domain resources [21, 23] of the interlace 0 in the PSFCH slot. Similarly, the interlace 2 in the PSSCH slot 7 is corresponding to code domain resources [0, 2] of the interlace 1 in the PSFCH slot, and the interlace 3 in the PSSCH slot 7 is corresponding to code domain resources [3, 5] of the interlace 1 in the PSFCH slot; the interlace 2 in the PSSCH slot 8 is corresponding to code domain resources [6, 8] of the interlace 1 in the PSFCH slot, and the interlace 3 in the PSSCH slot 8 is corresponding to code domain resources [9, 11] of the interlace 1 in the PSFCH slot; the interlace 2 in the PSSCH slot 9 is corresponding to code domain resources [12, 14] of the interlace 1 in the PSFCH slot, and the interlace 3 in the PSSCH slot 9 is corresponding to code domain resources [15, 17] of the interlace 1 in the PSFCH slot; and the interlace 2 in the PSSCH slot 10 is corresponding to code domain resources [18, 20] of the interlace 1 in the PSFCH slot, and the interlace 3 in the PSSCH slot 10 is corresponding to code domain resources [21, 23] of the interlace 1 in the PSFCH slot.

It should be noted that, in embodiments of this application, an interlace Y in a PSSCH slot X is corresponding to code domain resources [A, B] of an interlace Z in a PSFCH slot, which indicates that for a PSSCH transmitted on the interlace Y in the PSSCH slot X, an available transmission resource of a PSFCH corresponding to the PSSCH includes the interlace Z in the PSFCH slot, and an available code domain resource of the PSFCH corresponding to the PSSCH includes a code domain resource in the code domain resource set [A, B], where X denotes a slot index, Y and Z denote interlace indexes, and A and B denote code domain resource indexes.

It may be learned from the foregoing that, in this embodiment, each of the interlace 0 and the interlace 1 in the slot 7 to the slot 10 may correspond to 24 code domain resources of the interlace 0 in the slot 12, and each of the interlace 2 and the interlace 3 in the slot 7 to the slot 10 may correspond to 24 code domain resources of the interlace 1 in the slot 12, so that PSFCHs corresponding to PSSCHs in a plurality of slots can be transmitted in one slot in a code division multiplexing manner.

In some embodiments, it is assumed that $N_5 = K_2 \times N_4$, where $K_2$ is a positive integer, $N_4$ denotes the quantity of interlaces included in a PSSCH resource pool, and $N_5$ denotes the quantity of interlaces included in a PSFCH slot. That is to say, the quantity of interlaces included in a PSSCH resource pool is less than the quantity of interlaces included in a PSFCH slot, that is, one interlace in the PSSCH resource pool is corresponding to $K_2$ interlaces in the PSFCH slot. Therefore, in P PSSCH slots, code division multiplexing (CDM) may be performed only on transmission resources in a PSFCH slot corresponding to PSSCHs in different slots, that is, PSFCHs corresponding to PSSCHs in a plurality of slots may be transmitted in one slot in a code division multiplexing manner.

With reference to FIG. 19, it is assumed that PSSCH transmission resources include two interlaces (that is, $N_4 = 2$), which are respectively an interlace 0 and an interlace 1; and PSFCH transmission resources include four interlaces (that is, $N_4 = 4$), which are respectively an interlace 0, an interlace 1, an interlace 2, and an interlace 3. In this case, an interlace of one PSSCH is corresponding to $K_2$ ($N_5/N_4 = 2$, that is, $K_2 = 2$) interlaces of the PSFCH slot. For example, the interlace 0 in a PSSCH slot is corresponding to the interlace 0 and the interlace 1 in a PSFCH slot, that is, for a PSSCH transmitted on the interlace 0 in the PSSCH slot, transmission resources of a PSFCH corresponding to the PSSCH include the interlace 0 and the interlace 1 in the PSFCH slot; and the interlace 1 in the PSSCH slot is corresponding to the interlace 2 and the interlace 3 in the PSFCH slot, that is, for a PSSCH transmitted on the interlace 1 in the PSSCH slot, transmission resources of a PSFCH corresponding to the PSSCH include the interlace 2 and the interlace 3 in the PSFCH slot. In this case, the first terminal device may determine, according to the PSFCH period, the quantity of code domain resources in the first code domain resource set. For example, the quantity of code domain resources in the first code domain resource set may be Ncsi/P.

Specifically, because $K_2 = 2$, one interlace of a PSSCH is corresponding to two interlaces of a PSFCH slot. For example, the interlace 0 in the PSSCH slot is corresponding to the interlace 0 and the interlace 1 in the PSFCH slot; and the interlace 1 in the PSSCH slot is corresponding to the interlace 2 and the interlace 3 in the PSFCH slot.

Assuming that Ncsi = 24, a range of indexes of corresponding code domain resources includes [0, 23], P = 4, and $K_2 = 2$, then $N_{CS2} = 6$; that is, one interlace in a PSSCH slot is corresponding to 6 code domain resources in a PSFCH slot. For example, the interlace 0 in a PSSCH slot 7 is corresponding to code domain resources [0, 5] of the interlace 0 and code domain resources [0, 5] of the interlace 1 in the PSFCH slot; the interlace 0 in a PSSCH slot 8 is corresponding to code domain resources [6, 11] of the interlace 0 and code domain resources [6, 11] of the interlace 1 in the PSFCH slot; the interlace 0 in a PSSCH slot 9 is corresponding to code domain resources [12, 17] of the interlace 0 and code domain resources [12, 17] of the interlace 1 in the PSFCH slot; and the interlace 0 in a PSSCH slot 10 is corresponding to code domain resources [18, 23] of the interlace 0 and code domain resources [18, 23] of the interlace 1 in the PSFCH slot. Similarly, the interlace 1 in the PSSCH slot 7 is corresponding to code domain resources [0, 5] of the interlace 2 and code domain resources [0, 5] of the interlace 3 in the PSFCH slot; the interlace 1 in the PSSCH slot 8 is corresponding to code domain resources [6, 11] of the interlace 2 and code domain resources [6, 11] of the interlace 3 in the PSFCH slot; the interlace 1 in the PSSCH slot 9 is corresponding to code domain resources [12, 17] of the interlace 2 and code domain resources [12, 17] of the interlace 3 in the PSFCH slot; and the interlace 1 in the PSSCH slot 10 is corresponding to code domain resources [18, 23] of the interlace 2 and code domain resources [18, 23] of the interlace 3 in the PSFCH slot.

It should be noted that, in embodiments of this application, an interlace Y in a PSSCH slot X is corresponding to code domain resources [A, B] of an interlace Z and code domain resources [C, D] of an interlace Q in a PSFCH slot, which indicates that for a PSSCH transmitted on the interlace Y in the PSSCH slot X, available transmission resources of a PSFCH corresponding to the PSSCH include the interlace Z and the interlace Q in the PSFCH slot, and available code domain resources of the PSFCH corresponding to the PSSCH include a code domain resource in the code domain resource set [A, B] of the interlace Z and a code domain resource in the code domain resource set [C, D] of the interlace Q, where X denotes a slot index, Y, Z, and Q denote interlace indexes, and A, B, C, and D denote code domain resource indexes.

It may be learned from the foregoing that, in this embodiment, the interlaces 0 in the slot 7 to the slot 10 may be separately corresponding to 24 code domain resources of the interlace 0 and 24 code domain resources of the interlace 1 in the slot 12, and the interlaces 1 in the slot 7 to the slot 10 may be separately corresponding to 24 code domain resources of the interlace 2 and 24 code domain resources of the interlace 3 in the slot 12, so that PSFCHs corresponding to PSSCHs in a plurality of slots can be transmitted in one slot in a code division multiplexing manner.

In some embodiments, it is assumed that $N_5 = K_2 \times N_4$, where $K_2$ is a positive integer, $N_4$ denotes the quantity of interlaces included in a PSSCH resource pool, and $N_5$ denotes the quantity of interlaces included in a PSFCH slot. In this case, in P PSSCH slots, frequency division multiplexing (FDM) and code division multiplexing (CDM) may be performed on transmission resources in a PSFCH slot corresponding to PSSCHs in different slots, so that PSFCHs corresponding to PSSCHs in a plurality of slots may be transmitted in one slot in a code division multiplexing manner.

With reference to FIG. 19, it is assumed that PSSCH transmission resources include two interlaces (that is, $N_4$ = 2), which are respectively an interlace 0 and an interlace 1; and PSFCH transmission resources include four interlaces (that is, $N_5$ = 4), which are respectively an interlace 0, an interlace 1, an interlace 2, and an interlace 3. A transmission resource of a PSFCH corresponding to a PSSCH transmitted on the interlace 0 of a PSSCH slot 7 includes the interlace 0 of a PSFCH slot 12; a transmission resource of a PSFCH corresponding to a PSSCH transmitted on the interlace 1 of the PSSCH slot 7 includes the interlace 1 of the PSFCH slot 12; a transmission resource of a PSFCH corresponding to a PSSCH transmitted on the interlace 0 of a PSSCH slot 8 includes the interlace 2 of a PSFCH slot 12; a transmission resource of a PSFCH corresponding to a PSSCH transmitted on the interlace 1 of the PSSCH slot 8 includes the interlace 3 of the PSFCH slot 12; a transmission resource of a PSFCH corresponding to a PSSCH transmitted on the interlace 0 of a PSSCH slot 9 includes the interlace 0 of a PSFCH slot 12; a transmission resource of a PSFCH corresponding to a PSSCH transmitted on the interlace 1 of the PSSCH slot 9 includes the interlace 1 of the PSFCH slot 12; a transmission resource of a PSFCH corresponding to a PSSCH transmitted on the interlace 0 of a PSSCH slot 10 includes the interlace 2 of a PSFCH slot 12; and a transmission resource of a PSFCH corresponding to a PSSCH transmitted on the interlace 1 of the PSSCH slot 10 includes the interlace 3 of the PSFCH slot 12. In this case, the first terminal device may determine, based on following information, the quantity of code domain resources in the first code domain resource set: the PSFCH period, the quantity $N_4$ of interlaces included in a PSSCH resource pool, and the quantity $N_5$ of interlaces included in a PSFCH slot. For example, the quantity of code domain resources in the first code domain resource set may be $K_2 \times N_{CS1}/P$, where $K_2 = N_4/N_5$.

Assuming that Ncsi = 24, a range of indexes of corresponding code domain resources includes [0, 23], P = 4, and $K_2$ = 2, then $N_{CS2}$ = 12; that is, one interlace in a PSSCH slot is corresponding to 12 code domain resources in a PSFCH slot. For example, the interlace 0 in a PSSCH slot 7 is corresponding to code domain resources [0, 11] of the interlace 0 in a PSFCH slot 12; the interlace 1 in the PSSCH slot 7 is corresponding to code domain resources [0, 11] of the interlace 1 in the PSFCH slot 12; the interlace 0 in a PSSCH slot 8 is corresponding to code domain resources [0, 11] of the interlace 2 in the PSFCH slot 12; the interlace 1 in the PSSCH slot 8 is corresponding to code domain resources [0, 11] of the interlace 3 in the PSFCH slot 12; the interlace 0 in a PSSCH slot 9 is corresponding to code domain resources [12, 23] of the interlace 0 in the PSFCH slot 12; the interlace 1 in the PSSCH slot 9 is corresponding to code domain resources [12, 23] of the interlace 1 in the PSFCH slot 12; the interlace 0 in a PSSCH slot 10 is corresponding to code domain resources [12, 23] of the interlace 2 in the PSFCH slot 12; and the interlace 1 in the PSSCH slot 10 is corresponding to code domain resources [12, 23] of the interlace 3 in the PSFCH slot 12. It can be learned that a PSFCH, corresponding to a PSSCH transmitted on an interlace in the slot 7 and a PSSCH transmitted on an interlace in the slot 8, is corresponding to different interlaces in the slot 12, that is, using frequency division multiplexing; a PSFCH, corresponding to a PSSCH transmitted on an interlace in the slot 9 and a PSSCH transmitted on an interlace in the slot 10, is corresponding to different interlaces in the slot 12, that is, using frequency division multiplexing; a PSFCH, corresponding to a PSSCH transmitted on an interlace in the slot 7 and a PSSCH transmitted on an interlace in the slot 9, is corresponding to a same interlace in the slot 12, but corresponding to different code domain resources, that is, using code division multiplexing; and a PSFCH, corresponding to a PSSCH transmitted on an interlace in the slot 8 and a PSSCH transmitted on an interlace in the slot 10, is corresponding to a same interlace in the slot 12, but corresponding to different code domain resources, that is, using code division multiplexing.

It should be noted that, in embodiments of this application, an interlace Y in a PSSCH slot X is corresponding to code domain resources [A, B] of an interlace Q in a PSFCH slot Z, which indicates that for a PSSCH transmitted on the interlace Y in the PSSCH slot X, an available transmission resource of a PSFCH corresponding to the PSSCH includes the interlace Q in the PSFCH slot Z, and an available code domain resource of the PSFCH corresponding to the PSSCH includes a code domain resource in the code domain resource set [A, B], where X and Z denote slot indexes, Y and Q denote interlace indexes, and A and B denote code domain resource indexes.

In some embodiments, the method 200 may further include:
determine, based on at least one of following information, index information corresponding to a code domain resource in the first code domain resource set:

an index of the first slot;
information about the at least one first interlace;
a quantity of code domain resources in the first code domain resource set;
the code domain resource information supported by one interlace; and
the code domain resource information supported by one resource block.

Optionally, the information about the at least one first interlace includes at least one of following:

index information of the first first interlace occupied by the first PSSCH;
a quantity of interlaces included in the first interlace occupied by the first PSSCH; and
index information of all first interlaces occupied by the first PSSCH.

It should be noted that, assuming that the first PSFCH occupies at least one second interlace, the code domain resource information supported by one interlace may be understood as code domain resource information supported by one second interlace of the at least one second interlace. Optionally, the code domain resource information may be index information of a code domain resource, such as an index number or an index value.

For example, the first terminal device may group code domain resources supported in one interlace according to a PSFCH period, and determine, in a grouping process, index information corresponding to the code domain resources in the first code domain resource set. Code domain resources in each group are separately corresponding to one PSSCH slot in P PSSCH slots associated with a PSFCH slot.

For example, the first terminal device may determine index information corresponding to a code domain resource in the first code domain resource set according to following formula:

$$R = [0, 1, \ldots, N_{CS2}-1]+p \cdot N_{CS2};$$

or

$$R = [0, 1, \ldots, (N_{CS2}-1) \cdot P] + p.$$

R denotes an index of a code domain resource included in the first code domain resource set, $N_{CS2}$ denotes a quantity of code domain resources in the first code domain resource set, p denotes an index of the first slot, and a value range of p is 0, 1, ..., P-1, and P denotes the PSFCH period. Alternatively, p denotes the $p^{th}$ PSSCH slot in the P PSSCH slots corresponding to one PSFCH slot. Certainly, in another alternative embodiment, a value range of p may alternatively be 1, 2, ..., P, which is not specifically limited in this application.

For example, the first PSSCH occupies at least one first interlace; and the first terminal device may determine, based on the PSFCH period and information about the at least one first interlace, index information corresponding to a code domain resource in the first code domain resource set.

For example, the first terminal device may determine index information corresponding to a code domain resource in the first code domain resource set according to following formula:

$$R = f(P, I_{\text{interlace}}, p, N_{CS2}).$$

R denotes an index of a code domain resource included in the first code domain resource set, $N_{CS2}$ denotes a quantity of code domain resources in the first code domain resource set, p denotes an index of the first slot, and a value range of p is 0, 1, ..., P-1, and P denotes the PSFCH period. Alternatively, p denotes the $p^{\text{th}}$ PSSCH slot in the P PSSCH slots corresponding to one PSFCH slot. Certainly, in another alternative embodiment, a value range of p may alternatively be 1, 2, ..., P, which is not specifically limited in this application. $I_{\text{interlace}}$ denotes index information determined based on the at least one first interlace.

With reference to FIG. 18, a PSFCH period P is 4, a PSSCH resource pool includes four interlaces, a PSFCH slot includes two interlaces, and $K_1 = 2$, that is, two interlaces in the PSSCH slot are corresponding to one interlace in the PSFCH slot. If a quantity Ncsi of code domain resources supported in one interlace in the PSFCH slot is 24, and an index range of corresponding code domain resources includes [0, 23], a quantity of code domain resources corresponding to one interlace in one PSSCH slot may be determined based on the PSFCH period, that is, $N_{CS2} = 3$, that is, one interlace in one PSSCH slot is corresponding to three code domain resources in the PSFCH slot. For example, the interlace 0 in a PSSCH slot 7 is corresponding to code domain resources [0, 2] of the interlace 0 in the PSFCH slot, and the interlace 1 in the PSSCH slot 7 is corresponding to code domain resources [3, 5] of the interlace 0 in the PSFCH slot; the interlace 0 in a PSSCH slot 8 is corresponding to code domain resources [6, 8] of the interlace 0 in the PSFCH slot, and the interlace 1 in the PSSCH slot 8 is corresponding to code domain resources [9, 11] of the interlace 0 in the PSFCH slot; the interlace 0 in a PSSCH slot 9 is corresponding to code domain resources [12, 14] of the interlace 0 in the PSFCH slot, and the interlace 1 in the PSSCH slot 9 is corresponding to code domain resources [15, 17] of the interlace 0 in the PSFCH slot; and the interlace 0 in a PSSCH slot 10 is corresponding to code domain resources [18, 20] of the interlace 0 in the PSFCH slot, and the interlace 1 in the PSSCH slot 10 is corresponding to code domain resources [21, 23] of the interlace 0 in the PSFCH slot. Similarly, the interlace 2 in the PSSCH slot 7 is corresponding to code domain resources [0, 2] of the interlace 1 in the PSFCH slot, and the interlace 3 in the PSSCH slot 7 is corresponding to code domain resources [3, 5] of the interlace 1 in the PSFCH slot; the interlace 2 in the PSSCH slot 8 is corresponding to code domain resources [6, 8] of the interlace 1 in the PSFCH slot, and the interlace 3 in the PSSCH slot 8 is corresponding to code domain resources [9, 11] of the interlace 1 in the PSFCH slot; the interlace 2 in the PSSCH slot 9 is corresponding to code domain resources [12, 14] of the interlace 1 in the PSFCH slot, and the interlace 3 in the PSSCH slot 9 is corresponding to code domain resources [15, 17] of the interlace 1 in the PSFCH slot; and the interlace 2 in the PSSCH slot 10 is corresponding to code domain resources [18, 20] of the interlace 1 in the PSFCH slot, and the interlace 3 in the PSSCH slot 10 is corresponding to code domain resources [21, 23] of the interlace 1 in the PSFCH slot. Further, index information corresponding to a code domain resource in a first code domain resource set is determined based on information about a first interlace occupied by the first PSSCH. For example, if the first interlace occupied by the first PSSCH includes the interlace 0 in the slot 7, index information corresponding to code domain resources in a first code domain resource set corresponding to the interlace 0 is [0, 2]; if the first interlace occupied by the first PSSCH includes the interlace 1 in the slot 7, index information corresponding to code domain resources in a corresponding first code domain resource set is [3, 5]; if the first interlaces occupied by the first PSSCH include the interlace 0 and the interlace 1 in the slot 7, index information corresponding to code domain resources in a corresponding first code domain resource set is [0, 5]; if the first interlaces occupied by the first PSSCH include the interlace 1 and the interlace 2 in the slot 7, index information corresponding to code domain resources in a corresponding first code domain resource set includes code domain resources [3, 5] of the interlace 0 and code domain resources [0, 2] of the interlace 1 in the PSFCH slot.

It should be noted that, in embodiments of this application, an interlace Y in a PSSCH slot X is corresponding to code domain resources [A, B] of an interlace Z in a PSFCH slot, which indicates that for a PSSCH transmitted on the interlace Y in the PSSCH slot X, an available transmission resource of a PSFCH corresponding to the PSSCH includes the interlace Z in the PSFCH slot, and an available code domain resource of the PSFCH corresponding to the PSSCH includes a code domain resource in the code domain resource set [A, B], where X denotes a slot index, Y and Z denote interlace indexes, and A and B denote code domain resource indexes.

In some embodiments, the method 200 may further include:
obtaining, based on pre-configuration information or network configuration information, the code domain resource information supported by one interlace or the code domain resource information supported by one resource block.

In other words, the code domain resource information supported by one interlace or the code domain resource information supported by one resource block is obtained by using pre-configuration information or network configuration information. For example, the first terminal device may obtain, based on resource pool configuration information in the pre-configuration information or the network configuration information, the code domain resource information supported by one interlace or the code domain resource information supported by one resource block. Optionally, the resource pool configuration information includes indication information used to indicate a cyclic shift pair supported by one interlace, and the indication information may indicate the code domain resource information supported by one interlace.

In some embodiments, the method 200 may further include:

obtaining a correspondence between index information of a code domain resource and the code domain resource, where the correspondence is predefined, pre-configured, or configured by a network; and

determining, based on index information corresponding to a code domain resource in the first code domain resource set and the correspondence, a code domain resource included in the first code domain resource set.

For example, the correspondence may include at least one code domain resource, index information of each code domain resource in the at least one code domain resource, and a quantity of code domain resources supported in one interlace.

Optionally, the code domain resource may be represented by using a cyclic shift pair. Optionally, the index information of a code domain resource may also be referred to as an index of a cyclic shift pair. Optionally, the quantity of code domain resources supported in one interlace may also be understood as a quantity of cyclic shift pairs supported in one interlace.

In some embodiments, a first code domain resource in the first code domain resource set includes a first cyclic shift pair, and a first cyclic shift value in the first cyclic shift pair is determined based on index information of the first code domain resource. A second cyclic shift value in the first cyclic shift pair is determined based on the first cyclic shift value and a maximum quantity of cyclic shift pairs supported in one interlace, and the maximum quantity of cyclic shift pairs supported in one interlace is determined based on a maximum quantity of code domain resources supported in one interlace. Alternatively, the second cyclic shift value is determined based on the first cyclic shift value and a maximum quantity of cyclic shift pairs supported in one resource block, and the maximum quantity of cyclic shift pairs supported in one resource block is determined based on a maximum quantity of code domain resources supported in one resource block.

For example, the maximum quantity of cyclic shift pairs supported in one interlace is equal to the maximum quantity of code domain resources supported in one interlace. In some implementations, the maximum quantity of cyclic shift pairs supported in one interlace is determined based on predefined or pre-configured information, or network configuration information. In some implementations, the maximum quantity of code domain resources supported in one interlace is determined based on predefined or pre-configured information, or network configuration information.

For example, the maximum quantity of cyclic shift pairs supported in one resource block is equal to the maximum quantity of code domain resources supported in one resource block. In some implementations, the maximum quantity of cyclic shift pairs supported in one resource block is determined based on predefined or pre-configured information, or network configuration information. In some implementations, the maximum quantity of code domain resources supported in one resource block is determined based on predefined or pre-configured information, or network configuration information.

In some embodiments, that a first cyclic shift value in the first cyclic shift pair is determined based on index information of the first code domain resource includes: the first cyclic shift value is determined based on the index information of the first code domain resource and the quantity of code domain resources supported in one interlace; or the first cyclic shift value is determined based on the index information of the first code domain resource and the quantity of code domain resources supported in one resource block.

For example, the first terminal device may first determine, based on the index information of the first code domain resource and the quantity of code domain resources supported in one interlace, a value m0 corresponding to the first cyclic shift value, and then determine the first cyclic shift value based on the value m0 corresponding to the first cyclic shift value. Further, the first terminal device may determine, based on the value m0 corresponding to the first cyclic shift value and the maximum quantity of cyclic shift pairs supported in one interlace (or the maximum quantity of code domain resources supported in one resource block), a value m1 corresponding to the second cyclic shift value, and then determine the second cyclic shift value based on the value m1 corresponding to the second cyclic shift value; or the first terminal device may determine the second cyclic shift value based on the value m0 corresponding to the first cyclic shift value and the maximum quantity of cyclic shift pairs supported in one interlace (or the maximum quantity of code domain resources supported in one resource block). For example, the first terminal device may determine a sum of the first cyclic shift value and the maximum quantity of cyclic shift pairs supported in one interlace (or the maximum quantity of code domain resources supported in one resource block) as the value m1 corresponding to the second cyclic shift value. In other words, the value m1 corresponding to the second cyclic shift value may be equal to $m0+N_{CS, total}$, where $N_{cs, total}$ denotes the maximum quantity of cyclic shift pairs supported in one interlace (or the maximum quantity of code domain resources supported in one resource block). Optionally, the quantity of code domain resources supported in one interlace (or the quantity of code domain resources supported in one resource block) is $N_{csi}$, where $N_{csi}$ is less than or equal to $N_{CS, total}$.

Certainly, in another alternative embodiment, the first cyclic shift value is determined based on the index information of the first code domain resource and the quantity of cyclic shift pairs supported by one interlace. Optionally, the quantity of cyclic shift pairs supported in one interlace is determined based on the quantity of code domain resources supported in one interlace. For example, the quantity of cyclic shift pairs supported in one interlace is equal to the quantity of code domain resources supported in one interlace.

For example, if one interlace includes four RBs, when one interlace carries one PSFCH, the PSFCH corresponds to a sequence whose length is 48. In this case, it is equivalent to that there may be a maximum of 48 cyclic shift values in one interlace, that is, one interlace may correspond to a maximum of 24 cyclic shift pairs, that is, $N_{cs, total} = 24$. However, the quantity of code domain resources supported in one interlace is obtained based on pre-configuration information or network configuration information.

The following describes an implementation of determining m0 corresponding to the first cyclic shift with reference to a code domain resource index and a quantity of cyclic shift pairs supported in one interlace shown in Table 1.

Table 1 Correspondence between a code domain resource index and a code domain resource

| Ncsi | m0 | | | | | | | |
|---|---|---|---|---|---|---|---|---|
| | Index 0 | Index 1 | Index 2 | Index 3 | Index 4 | Index 5 | Index 6 | Index 7 |
| 1 | 0 | - | - | - | - | - | - | - |
| 2 | 0 | 12 | - | - | - | - | - | - |
| 3 | 0 | 8 | 16 | - | - | - | - | - |
| 6 | 0 | 4 | 8 | 12 | 16 | 20 | - | - |
| 8 | 0 | 3 | 6 | 9 | 12 | 15 | 18 | 21 |

As shown in Table 1, it is assumed that $N_{cs, total}$ is 24. When the quantity $N_{CS1}$ of cyclic shift pairs supported in one interlace is 6, that is, one interlace includes a total of six cyclic shift pairs, for a first cyclic shift pair included in a code domain resource whose index value is 2, m0 corresponding to a first cyclic shift value in the first cyclic shift pair is 8, and m1 corresponding to the second cyclic shift value is 8 + 24 = 32.

In an example, as shown in FIG. 17, it is assumed that a PSFCH period is four slots, that is, P = 4, and a minimum time interval between a PSSCH and a PSFCH associated with the PSSCH is two slots. In an example, PSSCH transmission resources include a slot 7 to a slot 10 in time domain, and an interlace 0 to an interlace 3 in frequency domain. PSFCH transmission resources include an interlace 0 to an interlace 3 in a slot 12. In other words, PSFCHs corresponding to PSSCHs transmitted in the slot 7 to the slot 10 are all transmitted in the slot 12. In this case, if $N_{cs, total} = 24$, and according to network configuration, $N_{CS1} = 8$, then $N_{CS2} = 2$ (that is, $N_{CS2} = N_{csi}/P = 8/4 = 2$). In this case, indexes, determined according to formula $R = [0, 1, ..., N_{CS2}-1]+p·N_{CS2}$, of code domain resources included in a code domain resource set corresponding to each of four PSSCH slots that are associated with a PSFCH slot, and m0 corresponding to the indexes are as follows.

Indexes of code domain resources included in a code domain resource set corresponding to the first PSSCH slot are 0 and 1; and values of m0 corresponding to the indexes are 0 and 3.

Indexes of code domain resources included in a code domain resource set corresponding to the second PSSCH slot are 2 and 3; and values of m0 corresponding to the indexes are 6 and 9.

Indexes of code domain resources included in a code domain resource set corresponding to the third PSSCH slot are 4 and 5; and values of m0 corresponding to the indexes are 12 and 15.

Indexes of code domain resources included in a code domain resource set corresponding to the fourth PSSCH slot are 6 and 7; and values of m0 corresponding to the indexes are 18 and 21.

In another example, as shown in FIG. 17, it is assumed that a PSFCH period is four slots, that is, P = 4, and a minimum time interval between a PSSCH and a PSFCH associated with the PSSCH is two slots. In an example, PSSCH transmission resources include a slot 7 to a slot 10 in time domain, and an interlace 0 to an interlace 3 in frequency domain. PSFCH transmission resources include an interlace 0 to an interlace 3 in a slot 12. In other words, PSFCHs corresponding to PSSCHs transmitted in the slot 7 to the slot 10 are all transmitted in the slot 12. In this case, if $N_{cs, total} = 24$, and according to network configuration, $N_{CS1} = 8$, then $N_{CS2} = 2$ (that is, $N_{CS2} = N_{csi}/P = 8/4 = 2$). In this case, indexes, determined according to formula $R = [0, 1, ..., (N_{CS2}-1)·P]+p$, of code domain resources included in a code domain resource set corresponding to each of four PSSCH slots that are corresponding to a PSFCH slot, and m0 corresponding to the indexes are as follows.

Indexes of code domain resources included in a code domain resource set corresponding to the first PSSCH slot are 0 and 4; and values of m0 corresponding to the indexes are 0 and 12.

Indexes of code domain resources included in a code domain resource set corresponding to the second PSSCH slot are 1 and 5; and values of m0 corresponding to the indexes are 3 and 15.

Indexes of code domain resources included in a code domain resource set corresponding to the third PSSCH slot are 2 and 6; and values of m0 corresponding to the indexes are 6 and 18.

Indexes of code domain resources included in a code domain resource set corresponding to the fourth PSSCH slot are 3 and 7; and values of m0 corresponding to the indexes are 9 and 21.

With reference to FIG. 17, it is assumed that a PSFCH period is four slots, that is, P = 4, and a minimum time interval between a PSSCH and a PSFCH associated with the PSSCH is two slots. In an example, PSSCH transmission resources include a slot 7 to a slot 10 in time domain, and an interlace 0 to an interlace 3 in frequency domain. PSFCH transmission resources include an interlace 0 to an interlace 3 in a slot 12. In other words, PSFCHs corresponding to PSSCHs transmitted in the slot 7 to the slot 10 are all transmitted in the slot 12. In this case, if $N_{cs,\ total}$ = 24, and according to network configuration, $N_{CS1}$ = 8, then $N_{CS2}$ = 2 (that is, $N_{CS2}$ = Ncsi/P = 8/4 = 2). That is, one PSSCH slot is corresponding to two code domain resources in a PSFCH time slot, and each of the two code domain resources includes a first cyclic shift value and a second cyclic shift value. For a PSSCH (that is, the PSSCH transmitted in the slot 7) transmitted in the first PSSCH slot in one PSFCH period, it may be learned from formula R = [0, 1, ..., $N_{CS2}$-1]+p·$N_{CS2}$ that, it is determined that indexes of two code domain resources included in transmission resource of a PSFCH corresponding to the PSSCH are an index 0 and an index 1, respectively. As shown in Table 1, because Ncsi = 8, m0 corresponding to two first cyclic shift values included in the two code domain resources are 0 and 3, respectively. In addition, m1 corresponding to two second cyclic shift values included in the two code domain resources is m0+24, that is, values of m1 corresponding to two second cyclic shift values included in the two code domain resources are 24 and 27, respectively.

It should be noted that an implementation in which the first terminal device determines a corresponding sequence based on a cyclic shift value is not limited in this application. For example, a negative acknowledgement NACK sequence corresponding to the first PSSCH or an acknowledgement ACK sequence corresponding to the first PSSCH may be determined in following manner:

$$x(n) = r_{u,v}^{\alpha,\delta}(n);$$

and

$$n = 0,1, \dots, N_{\mathrm{RB}}^{\mathrm{IRB}} \cdot N_{\mathrm{sc}}^{\mathrm{RB}} - 1.$$

$N_{\mathrm{RB}}^{\mathrm{IRB}}$ denotes a quantity of RBs included in one interlace, $N_{\mathrm{sc}}^{\mathrm{RB}}$ denotes a quantity of subcarriers included in one RB; and $\alpha$ denotes a cyclic shift. Specifically, $\alpha$ is determined based on a first cyclic shift value m0 or a second cyclic shift value m1 of the cyclic shift pair.

In some embodiments, the first cyclic shift value is used to determine a negative acknowledgement NACK sequence corresponding to the first PSSCH, and the second cyclic shift value is used to determine an acknowledgement ACK sequence corresponding to the first PSSCH. Certainly, in another alternative embodiment, the first cyclic shift value may be used to determine an acknowledgement ACK sequence corresponding to the first PSSCH, and the second cyclic shift value is used to determine a negative acknowledgement NACK sequence corresponding to the first PSSCH. This is not specifically limited in this application.

In this embodiment, because sidelink feedback information is carried by using a sequence, different sequences may be generated by using different cyclic shift values. In other words, if an ACK sequence and a NACK sequence are respectively corresponding to different sequences, the ACK sequence and the NACK sequence are corresponding to different cyclic shift values. Therefore, it may be determined that two cyclic shift values included in one cyclic shift pair is one code domain resource, that is, the ACK sequence and the NACK sequence may be respectively generated based on two cyclic shift values included in one code domain resource.

It should be noted that the first code domain resource may be any code domain resource in the first code domain resource set. In other words, the code domain resource supported in one interlace or the code domain resource supported in one resource block includes the first code domain resource. Correspondingly, the code domain resource information supported by one interlace or the code domain resource information supported by one resource block includes index information of the first code domain resource. Optionally, the index information of the first code domain resource may be an index value or an index number of the first code domain resource.

In some embodiments, the method 200 may further include:
determining the first transmission resource in the second transmission resource set based on identity information of the first terminal device and/or identity information of a second terminal device, where the second terminal device is a terminal device that transmits the first PSSCH.

In other words, the first terminal device may determine the first transmission resource from a second transmission resource set available for transmission of the first PSFCH based on identity information of a transmitting terminal of the first PSFCH and identity information of a receiving terminal of the first PSFCH.

Optionally, an index of the first transmission resource in the second transmission resource set is determined according to a formula as follows:

$$S = (P_{ID} + M_{ID}) \bmod N_{total}.$$

S denotes an index of the first transmission resource, $P_{ID}$ denotes the identity of the second terminal device, $M_{ID}$ denotes the identity of the first terminal device, $N_{total}$ denotes a quantity of PSFCH transmission resources included in the second transmission resource set, and mod denotes a modulo operation.

Optionally, the identity information of the first terminal device is determined based on a member identity of the first terminal device in a communication group, or the identity information of the first terminal device is 0.

For example, the identity information of the first terminal device is the member identity of the first terminal device in a communication group.

For example, for multicast communication, when the first terminal device feeds back ACK or NACK, the identity information of the first terminal device is determined based on a member ID (member identity) of the first terminal device in a communication group; for the multicast communication, when the first terminal device feeds back only NACK (namely, a NACK-only feedback manner), the identity information of the first terminal device is 0; and for unicast communication, the identity information of the first terminal device is 0. Certainly, in another alternative embodiment, the identity information of the first terminal device may alternatively be set to another value, which is not limited in this application.

Optionally, the identity information of the second terminal device is determined based on source identity information carried in sidelink control information SCI corresponding to the first PSSCH.

For example, the identity information of the second terminal device is source identity information carried in sidelink control information SCI corresponding to the first PSSCH.

FIG. 20 is a schematic flowchart of a wireless communication method 300 according to an embodiment of this application. The method 300 may be executed by a second terminal device. The second terminal device may be a transmitting terminal used to transmit a PSSCH. For example, the second terminal device may be the foregoing terminal B, or the second terminal device may be the foregoing terminal A.

As shown in FIG. 20, the method 300 may include following steps:

S310: transmitting a first physical sidelink shared channel PSSCH in a first slot;
S320: determining a first transmission resource from a PSFCH transmission resource set included in a second slot; and
S330: receiving a first PSFCH on the first transmission resource.

The second slot is determined based on the first slot, and the first PSFCH carries sidelink feedback information that is in response to the first PSSCH.

In some embodiments, the first PSSCH occupies at least one sub-channel.

The S320 may include:
determining a first transmission resource set based on information about a resource block set where the first PSSCH is located and index information corresponding to a sub-channel occupied by the first PSSCH.

The first transmission resource set includes the first transmission resource, and the index information corresponding to the sub-channel occupied by the first PSSCH includes at least one of following information:

index information corresponding to the first sub-channel in sub-channels occupied by the first PSSCH;
index information corresponding to all sub-channels occupied by the first PSSCH; and
a quantity of sub-channels occupied by the first PSSCH.

In some embodiments, the resource block set where the first PSSCH is located includes at least one first resource block set, the first transmission resource set includes at least one second resource block set, and the at least one second resource block set is determined based on information about the at least one first resource block set.

In some embodiments, the method 300 may further include:
determining the at least one second resource block set based on index information corresponding to the at least one first resource block set, where the index information corresponding to the at least one first resource block set includes at least one of following information:

> index information corresponding to the first first resource block set in the at least one first resource block set;
> index information corresponding to all first resource block sets in the at least one first resource block set; and
> a quantity of resource block sets included in the at least one first resource block set.

In some embodiments, transmission resources included in the first transmission resource set are indexed in following order:
indexing first according to a frequency domain resource, and then according to a code domain resource.

In some embodiments, the first indexing according to a frequency domain resource includes:

> indexing first according to an ascending order of a resource block set index, and then according to an ascending order of a physical resource block index; or
> indexing first according to an ascending order of a physical resource block index, and then according to an ascending order of a resource block set index.

In some embodiments, the method 300 may further include:
determining the first transmission resource in the first transmission resource set based on identity information of the first terminal device and/or identity information of a second terminal device, where the second terminal device is a terminal device that transmits the first PSSCH.

In some embodiments, the identity information of the second terminal device is determined based on source identity information carried in SCI associated with the first PSSCH, and the identity information of the first terminal device is determined based on identity information of a group member of the first terminal device, or the identity information of the first terminal device is 0.

In some embodiments, the first PSSCH occupies at least one first interlace.

The S320 may include:
determining a second transmission resource set in the second slot based on at least one of following information:

> information about a resource block set where the first PSSCH is located;
> information about the at least one first interlace;
> a quantity of code domain resources supported in one interlace;
> code domain resource information supported by one interlace;
> a quantity of code domain resources supported in one resource block;
> code domain resource information supported by one resource block;
> a PSFCH period;
> an index of the first slot;
> a quantity of interlaces included in a PSSCH resource pool; and
> a quantity of interlaces included in a PSFCH slot.

The second transmission resource set includes the first transmission resource.

In some embodiments, the information about the at least one first interlace includes at least one of following information:

> index information corresponding to the first first interlace in the at least one first interlace;
> index information corresponding to all interlaces included in the at least one first interlace; and
> a quantity of interlaces included in the at least one first interlace.

In some embodiments, the transmission resources included in the second transmission resource set are indexed in following order:
indexing first according to a frequency domain resource, and then according to a code domain resource.

In some embodiments, the first indexing according to a frequency domain resource includes:

> indexing first according to an ascending order of a resource block set index, and then according to an ascending order of an interlace index; or
> indexing first according to an ascending order of an interlace index, and then according to an ascending order of a resource block set index.

In some embodiments, the resource block set where the first PSSCH is located includes at least one third resource block set, the second transmission resource set includes at least one fourth resource block set, and the at least one fourth resource block set is determined based on information about the at least one third resource block set.

In some embodiments, the method 300 may further include:
determining the at least one fourth resource block set based on index information corresponding to the at least one third resource block set, where the index information corresponding to the at least one third resource block set includes at least one of following information:

> index information corresponding to the first third resource block set in the at least one third resource block set;
> index information corresponding to all third resource block sets in the at least one third resource block set; and
> a quantity of resource block sets included in the at least one third resource block set.

In some embodiments, the second transmission resource set includes at least one second interlace, and the second interlace is determined based on at least one of following information:

> information about a resource block set where the first PSSCH is located;
> information about the at least one first interlace;
> a PSFCH period;
> an index of the first slot;
> a quantity of interlaces included in a PSSCH resource pool; and
> a quantity of interlaces included in a PSFCH slot.

In some embodiments, the second transmission resource set includes a first code domain resource set, and the first code domain resource set is determined based on at least one of following information:

> a quantity of code domain resources supported in one interlace;
> code domain resource information supported by one interlace;
> a quantity of code domain resources supported in one resource block;
> code domain resource information supported by one resource block;
> a PSFCH period;
> an index of the first slot;
> a quantity of interlaces included in a PSSCH resource pool; and
> a quantity of interlaces included in a PSFCH slot.

In some embodiments, a quantity of code domain resources in the first code domain resource set is determined based on following information: the quantity of code domain resources supported in one interlace or the quantity of code domain resources supported in one resource block, the PSFCH period, the quantity of interlaces included in a PSSCH resource pool, and the quantity of interlaces included in a PSFCH slot.

In some embodiments, the quantity of code domain resources in the first code domain resource set is $(N_{CS1}/(P \times K))$, where $N_{CS1}$ denotes the quantity of code domain resources supported in one interlace or the quantity of code domain resources supported in one resource block, P denotes the PSFCH period, K is determined based on $N_4$ and $N_5$, $N_4$ denotes the quantity of interlaces included in a PSSCH resource pool, and $N_5$ denotes the quantity of interlaces included in a PSFCH slot.

In some embodiments, $K = \max(1, N_4/N_5)$.

In some embodiments, the method 300 may further include:
determining, based on at least one of following information, index information corresponding to a code domain resource in the first code domain resource set:

> an index of the first slot;
> information about the at least one first interlace;
> a quantity of code domain resources in the first code domain resource set;
> the code domain resource information supported by one interlace; and
> the code domain resource information supported by one resource block.

In some embodiments, the method 300 may further include:
obtaining, based on pre-configuration information or network configuration information, the code domain resource information supported by one interlace or the code domain resource information supported by one resource block.

In some embodiments, the method 300 may further include:

obtaining a correspondence between index information of a code domain resource and the code domain resource, where the correspondence is predefined, pre-configured, or configured by a network; and
determining, based on index information corresponding to a code domain resource in the first code domain resource set and the correspondence, a code domain resource included in the first code domain resource set.

In some embodiments, a first code domain resource in the first code domain resource set includes a first cyclic shift pair, and a first cyclic shift value in the first cyclic shift pair is determined based on index information of the first code domain resource; and a second cyclic shift value in the first cyclic shift pair is determined based on the first cyclic shift value and a maximum quantity of cyclic shift pairs supported in one interlace. The maximum quantity of cyclic shift pairs supported in one interlace is determined based on a maximum quantity of code domain resources supported in one interlace; or the second cyclic shift value is determined based on the first cyclic shift value and a maximum quantity of cyclic shift pairs supported in one resource block, and the maximum quantity of cyclic shift pairs supported in one resource block is determined based on a maximum quantity of code domain resources supported in one resource block.
In some embodiments, that a first cyclic shift value in the first cyclic shift pair is determined based on index information of the first code domain resource includes:

the first cyclic shift value is determined based on the index information of the first code domain resource and the quantity of code domain resources supported in one interlace; or
the first cyclic shift value is determined based on the index information of the first code domain resource and the quantity of code domain resources supported in one resource block.

In some embodiments, the first cyclic shift value is used to determine a negative acknowledgement NACK sequence corresponding to the first PSSCH, and the second cyclic shift value is used to determine an acknowledgement ACK sequence corresponding to the first PSSCH.
In some embodiments, the method 300 may further include:
determining the first transmission resource in the second transmission resource set based on identity information of the first terminal device and/or identity information of a second terminal device, where the second terminal device is a terminal device that transmits the first PSSCH.
In some embodiments, the identity information of the second terminal device is determined based on source identity information carried in SCI associated with the first PSSCH, and the identity information of the first terminal device is determined based on identity information of a group member of the first terminal device, or the identity information of the first terminal device is 0.
It should be noted that for related terms and implementations in the method 300, reference may be made to related solutions in the method 200. To avoid repetition, details are not described herein again.
In addition, the method 200 and the method 300 are merely examples of this application. In a process of determining at least one second interlace, only all or some of steps in the method 200 or 300 may be included. One or more of the foregoing steps may be combined into one step. This is not specifically limited in this application.
It should be understood that in various method embodiments of this application, a slot may represent a logical slot in a resource pool, and an interlace resource may represent an interlace resource in a resource pool.
The foregoing describes in detail the preferred implementations of this application with reference to the accompanying drawings. However, this application is not limited to specific details in the foregoing implementations. Within the scope of the technical concepts of this application, various simple variations may be implemented to the technical solutions of this application, and these simple variations are all within the protection scope of this application. For example, specific technical features described in the foregoing specific implementations may be combined in any suitable manner in the case of no conflict. To avoid repetition, various possible combination manners are not described in this application. For another example, any combination may alternatively be performed between different implementations of this application, provided that the combination is not contrary to the idea of this application, the combination should also be considered as the content disclosed in this application.
It should be further understood that, in method embodiments of this application, sequence numbers of the foregoing processes do not mean execution sequences. The execution sequences of the processes should be determined according to functions and internal logic of the processes, and should not be construed as any limitation on the implementation processes of the embodiments of this application. In addition, in embodiments of this application, the terms "downlink" and "uplink" are used to indicate a transmission direction of a signal or data, where "downlink" is used to indicate that a transmission direction of a signal or data is a first direction from a station to a user equipment in a cell, and "uplink" is used to indicate that a transmission direction of a signal or data is a second direction from a user equipment in the cell to a station. For example, "downlink signal" indicates that a transmission direction of the signal is the first direction. In addition, in embodiments of this application, the term "and/or" is merely used to describe an association relationship between associated objects, indicating that there may be three relationships. Specifically, A and/or B may indicate that: only A exists, both A and B exist, and only B exists. In addition, the character "/" herein generally indicates an "or" relationship between the associated objects.

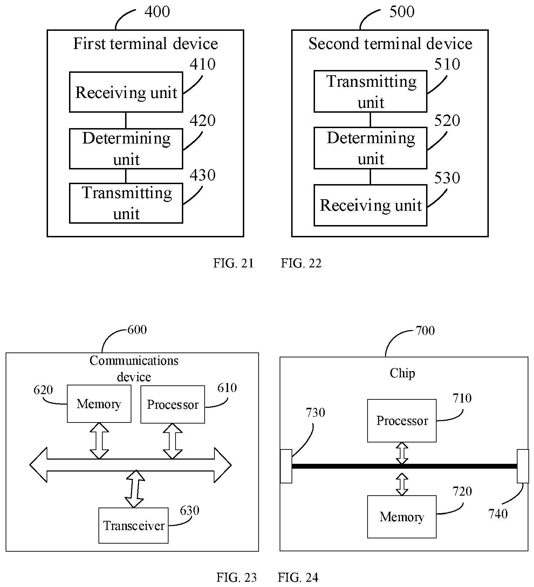

The foregoing describes method embodiments of this application in detail with reference to drawings. The following describes apparatus embodiments of this application in detail with reference to FIG. 21 to FIG. 24.

FIG. 21 is a schematic block diagram of a first terminal device 400 according to an embodiment of this application.

As shown in FIG. 21, the first terminal device 400 may include:

a receiving unit 410, configured to receive a first physical sidelink shared channel PSSCH in a first slot;
a determining unit 420, configured to determine a first transmission resource from a PSFCH transmission resource set included in a second slot; and
a transmitting unit 430, configured to transmit a first PSFCH on the first transmission resource.

The second slot is determined based on the first slot, and the first PSFCH carries sidelink feedback information that is in response to the first PSSCH.

In some embodiments, the first PSSCH occupies at least one sub-channel.

The determining unit 420 is specifically configured to:
determine a first transmission resource set based on information about a resource block set where the first PSSCH is located and index information corresponding to a sub-channel occupied by the first PSSCH.

The first transmission resource set includes the first transmission resource, and the index information corresponding to the sub-channel occupied by the first PSSCH includes at least one of following information:

index information corresponding to the first sub-channel in sub-channels occupied by the first PSSCH;
index information corresponding to all sub-channels occupied by the first PSSCH; and
a quantity of sub-channels occupied by the first PSSCH.

In some embodiments, the resource block set where the first PSSCH is located includes at least one first resource block set, the first transmission resource set includes at least one second resource block set, and the at least one second resource block set is determined based on information about the at least one first resource block set.

In some embodiments, the determining unit 420 is further configured to:
determine the at least one second resource block set based on index information corresponding to the at least one first resource block set, where the index information corresponding to the at least one first resource block set includes at least one of following information:

index information corresponding to the first first resource block set in the at least one first resource block set;
index information corresponding to all first resource block sets in the at least one first resource block set; and
a quantity of resource block sets included in the at least one first resource block set.

In some embodiments, transmission resources included in the first transmission resource set are indexed in following order:
indexing first according to a frequency domain resource, and then according to a code domain resource.

In some embodiments, the first indexing according to a frequency domain resource includes:

indexing first according to an ascending order of a resource block set index, and then in an ascending order of a physical resource block index; or
indexing first according to an ascending order of a physical resource block index, and then according to an ascending order of a resource block set index.

In some embodiments, the determining unit 420 is further configured to:
determine the first transmission resource in the first transmission resource set based on identity information of the first terminal device and/or identity information of a second terminal device, where the second terminal device is a terminal device that transmits the first PSSCH.

In some embodiments, the identity information of the second terminal device is determined based on source identity information carried in SCI associated with the first PSSCH, and the identity information of the first terminal device is determined based on identity information of a group member of the first terminal device, or the identity information of the first terminal device is 0.

In some embodiments, the first PSSCH occupies at least one first interlace.

The determining unit 420 is specifically configured to:
determine a second transmission resource set in the second slot based on at least one of following information:

information about a resource block set where the first PSSCH is located;
information about the at least one first interlace;
a quantity of code domain resources supported in one interlace;
code domain resource information supported by one interlace;
a quantity of code domain resources supported in one resource block;
code domain resource information supported by one resource block;
a PSFCH period;
an index of the first slot;
a quantity of interlaces included in a PSSCH resource pool; and
a quantity of interlaces included in a PSFCH slot.

The second transmission resource set includes the first transmission resource.
In some embodiments, the information about the at least one first interlace includes at least one of following information:

index information corresponding to the first first interlace in the at least one first interlace;
index information corresponding to all interlaces included in the at least one first interlace; and
a quantity of interlaces included in the at least one first interlace.

In some embodiments, the transmission resources included in the second transmission resource set are indexed in following order:
indexing first according to a frequency domain resource, and then according to a code domain resource.
In some embodiments, the first indexing according to a frequency domain resource includes:

indexing first according to an ascending order of a resource block set index, and then according to an ascending order of interlace index; or
indexing first according to an ascending order of an interlace index, and then according to an ascending order of a resource block set index.

In some embodiments, the resource block set where the first PSSCH is located includes at least one third resource block set, the second transmission resource set includes at least one fourth resource block set, and the at least one fourth resource block set is determined based on information about the at least one third resource block set.
In some embodiments, the determining unit 420 is further configured to:
determine the at least one fourth resource block set based on index information corresponding to the at least one third resource block set, where the index information corresponding to the at least one third resource block set includes at least one of following information:

index information corresponding to the first third resource block set in the at least one third resource block set;
index information corresponding to all third resource block sets in the at least one third resource block set; and
a quantity of resource block sets included in the at least one third resource block set.

In some embodiments, the second transmission resource set includes at least one second interlace, and the second interlace is determined based on at least one of following information:

information about a resource block set where the first PSSCH is located;
information about the at least one first interlace;
a PSFCH period;
an index of the first slot;
a quantity of interlaces included in a PSSCH resource pool; and
a quantity of interlaces included in a PSFCH slot.

In some embodiments, the second transmission resource set includes a first code domain resource set, and the first code domain resource set is determined based on at least one of following information:

a quantity of code domain resources supported in one interlace;
code domain resource information supported by one interlace;
a quantity of code domain resources supported in one resource block;
code domain resource information supported by one resource block;

a PSFCH period;
an index of the first slot;
a quantity of interlaces included in a PSSCH resource pool; and
a quantity of interlaces included in a PSFCH slot.

In some embodiments, a quantity of code domain resources in the first code domain resource set is determined based on following information: the quantity of code domain resources supported in one interlace or the quantity of code domain resources supported in one resource block, the PSFCH period, the quantity of interlaces included in a PSSCH resource pool, and the quantity of interlaces included in a PSFCH slot.

In some embodiments, the quantity of code domain resources in the first code domain resource set is $(N_{CS1}/(P \times K))$, where $N_{CS1}$ denotes the quantity of code domain resources supported in one interlace or the quantity of code domain resources supported in one resource block, P denotes the PSFCH period, K is determined based on $N_4$ and $N_5$, $N_4$ denotes the quantity of interlaces included in a PSSCH resource pool, and $N_5$ denotes the quantity of interlaces included in a PSFCH slot.

In some embodiments, $K = \max(1, N_4/N_5)$.

In some embodiments, the determining unit 420 is further configured to:
determine, based on at least one of following information, index information corresponding to a code domain resource in the first code domain resource set:

an index of the first slot;
information about the at least one first interlace;
a quantity of code domain resources in the first code domain resource set;
the code domain resource information supported by one interlace; and
the code domain resource information supported by one resource block.

In some embodiments, the determining unit 420 is further configured to:
obtain, based on pre-configuration information or network configuration information, the code domain resource information supported by one interlace or the code domain resource information supported by one resource block.

In some embodiments, the determining unit 420 is further configured to:

obtain a correspondence between index information of a code domain resource and the code domain resource, where the correspondence is predefined, pre-configured, or configured by a network; and
determine, based on index information corresponding to a code domain resource in the first code domain resource set and the correspondence, a code domain resource included in the first code domain resource set.

In some embodiments, a first code domain resource in the first code domain resource set includes a first cyclic shift pair, and a first cyclic shift value in the first cyclic shift pair is determined based on index information of the first code domain resource. A second cyclic shift value in the first cyclic shift pair is determined based on the first cyclic shift value and a maximum quantity of cyclic shift pairs supported in one interlace, and the maximum quantity of cyclic shift pairs supported in one interlace is determined based on a maximum quantity of code domain resources supported in one interlace.

Alternatively, the second cyclic shift value is determined based on the first cyclic shift value and a maximum quantity of cyclic shift pairs supported in one resource block, and the maximum quantity of cyclic shift pairs supported in one resource block is determined based on a maximum quantity of code domain resources supported in one resource block.

In some embodiments, the determining unit 420 is specifically configured to:

determine the first cyclic shift value based on the index information of the first code domain resource and the quantity of code domain resources supported in one interlace; or
determine the first cyclic shift value based on the index information of the first code domain resource and the quantity of code domain resources supported in one resource block.

In some embodiments, the first cyclic shift value is used to determine a negative acknowledgement NACK sequence corresponding to the first PSSCH, and the second cyclic shift value is used to determine an acknowledgement ACK sequence corresponding to the first PSSCH.

In some embodiments, the determining unit 420 is further configured to:
determine the first transmission resource in the second transmission resource set based on identity information of the first terminal device and/or identity information of a second terminal device, where the second terminal device is a terminal device that transmits the first PSSCH.

In some embodiments, the identity information of the second terminal device is determined based on source identity information carried in SCI associated with the first PSSCH, and the identity information of the first terminal device is determined based on identity information of a group member of the first terminal device, or the identity information of the first terminal device is 0.

It should be understood that the apparatus embodiments may correspond to the method embodiments, and for similar descriptions, reference may be made to the method embodiments. Specifically, the first terminal device 400 shown in FIG. 21 may correspond to a corresponding body that executes the method 200 or 300 in embodiments of this application, and the foregoing and other operations and/or functions of units in the first terminal device 400 are respectively used to implement corresponding processes in methods in FIG. 13 or FIG. 20. For brevity, details are not described herein again.

FIG. 22 is a schematic block diagram of a second terminal device 500 according to an embodiment of this application.

As shown in FIG. 22, the second terminal device 500 may include:

a transmitting unit 510, configured to transmit a first physical sidelink shared channel PSSCH in a first slot;
a determining unit 520, configured to determine a first transmission resource from a PSFCH transmission resource set included in a second slot; and
receive a first PSFCH on the first transmission resource.

The second slot is determined based on the first slot, and the first PSFCH carries sidelink feedback information that is in response to the first PSSCH.

In some embodiments, the first PSSCH occupies at least one sub-channel.

The determining unit 520 is specifically configured to:
determine a first transmission resource set based on information about a resource block set where the first PSSCH is located and index information corresponding to a sub-channel occupied by the first PSSCH.

The first transmission resource set includes the first transmission resource, and the index information corresponding to the sub-channel occupied by the first PSSCH includes at least one of following information:

index information corresponding to the first sub-channel in sub-channels occupied by the first PSSCH;
index information corresponding to all sub-channels occupied by the first PSSCH; and
a quantity of sub-channels occupied by the first PSSCH.

In some embodiments, the resource block set where the first PSSCH is located includes at least one first resource block set, the first transmission resource set includes at least one second resource block set, and the at least one second resource block set is determined based on information about the at least one first resource block set.

In some embodiments, the determining unit 520 is further configured to:
determine the at least one second resource block set based on index information corresponding to the at least one first resource block set, where the index information corresponding to the at least one first resource block set includes at least one of following information:

index information corresponding to the first first resource block set in the at least one first resource block set;
index information corresponding to all first resource block sets in the at least one first resource block set; and
a quantity of resource block sets included in the at least one first resource block set.

In some embodiments, transmission resources included in the first transmission resource set are indexed in following order:
indexing first according to a frequency domain resource, and then according to a code domain resource.

In some embodiments, the first indexing according to a frequency domain resource includes:

indexing first according to an ascending order of a resource block set index, and then according to an ascending order of a physical resource block index; or
indexing first according to an ascending order of a physical resource block index, and then according to an ascending order of a resource block set index.

In some embodiments, the determining unit 520 is further configured to:
determine the first transmission resource in the first transmission resource set based on identity information of the first terminal device and/or identity information of a second terminal device, where the second terminal device is a terminal device that transmits the first PSSCH.

In some embodiments, the identity information of the second terminal device is determined based on source identity information carried in SCI associated with the first PSSCH, and the identity information of the first terminal device is determined based on identity information of a group member of the first terminal device, or the identity information of the first terminal device is 0.

In some embodiments, the first PSSCH occupies at least one first interlace.

The determining unit 520 is specifically configured to:

determine a second transmission resource set in the second slot based on at least one of following information:

information about a resource block set where the first PSSCH is located;
information about the at least one first interlace;
a quantity of code domain resources supported in one interlace;
code domain resource information supported by one interlace;
a quantity of code domain resources supported in one resource block;
code domain resource information supported by one resource block;
a PSFCH period;
an index of the first slot;
a quantity of interlaces included in a PSSCH resource pool; and
a quantity of interlaces included in a PSFCH slot.

The second transmission resource set includes the first transmission resource.

In some embodiments, the information about the at least one first interlace includes at least one of following information:

index information corresponding to the first first interlace in the at least one first interlace;
index information corresponding to all interlaces included in the at least one first interlace; and
a quantity of interlaces included in the at least one first interlace.

In some embodiments, the transmission resources included in the second transmission resource set are indexed in following order:

indexing first according to a frequency domain resource, and then according to a code domain resource.

In some embodiments, the first indexing according to a frequency domain resource includes:

indexing first according to an ascending order of a resource block set index, and then according to an ascending order of an interlace index; or
indexing first according to an ascending order of an interlace index, and then according to an ascending order of a resource block set index.

In some embodiments, the resource block set where the first PSSCH is located includes at least one third resource block set, the second transmission resource set includes at least one fourth resource block set, and the at least one fourth resource block set is determined based on information about the at least one third resource block set.

In some embodiments, the determining unit 520 is further configured to:

determine the at least one fourth resource block set based on index information corresponding to the at least one third resource block set, where the index information corresponding to the at least one third resource block set includes at least one of following information:

index information corresponding to the first third resource block set in the at least one third resource block set;
index information corresponding to all third resource block sets in the at least one third resource block set; and
a quantity of resource block sets included in the at least one third resource block set.

In some embodiments, the second transmission resource set includes at least one second interlace, and the second interlace is determined based on at least one of following information:

information about a resource block set where the first PSSCH is located;
information about the at least one first interlace;
a PSFCH period;
an index of the first slot;
a quantity of interlaces included in a PSSCH resource pool; and

a quantity of interlaces included in a PSFCH slot.

In some embodiments, the second transmission resource set includes a first code domain resource set, and the first code domain resource set is determined based on at least one of following information:

a quantity of code domain resources supported in one interlace;
code domain resource information supported by one interlace;
a quantity of code domain resources supported in one resource block;
code domain resource information supported by one resource block;
a PSFCH period;
an index of the first slot;
a quantity of interlaces included in a PSSCH resource pool; and
a quantity of interlaces included in a PSFCH slot.

In some embodiments, a quantity of code domain resources in the first code domain resource set is determined based on following information: the quantity of code domain resources supported in one interlace or the quantity of code domain resources supported in one resource block, the PSFCH period, the quantity of interlaces included in a PSSCH resource pool, and the quantity of interlaces included in a PSFCH slot.

In some embodiments, the quantity of code domain resources in the first code domain resource set is $(N_{CS1}/(P \times K))$, where $N_{CS1}$ denotes the quantity of code domain resources supported in one interlace or the quantity of code domain resources supported in one resource block, P denotes the PSFCH period, K is determined based on $N_4$ and $N_5$, $N_4$ denotes the quantity of interlaces included in a PSSCH resource pool, and $N_5$ denotes the quantity of interlaces included in a PSFCH slot.

In some embodiments, $K = \max(1, N_4/N_5)$.

In some embodiments, the determining unit 520 is further configured to:
determine, based on at least one of following information, index information corresponding to a code domain resource in the first code domain resource set:

an index of the first slot;
information about the at least one first interlace;
a quantity of code domain resources in the first code domain resource set;
the code domain resource information supported by one interlace; and
the code domain resource information supported by one resource block.

In some embodiments, the determining unit 520 is further configured to:
obtain, based on pre-configuration information or network configuration information, the code domain resource information supported by one interlace or the code domain resource information supported by one resource block.

In some embodiments, the determining unit 520 is further configured to:

obtain a correspondence between index information of a code domain resource and the code domain resource, where the correspondence is predefined, pre-configured, or configured by a network; and
determine, based on index information corresponding to a code domain resource in the first code domain resource set and the correspondence, a code domain resource included in the first code domain resource set.

In some embodiments, a first code domain resource in the first code domain resource set includes a first cyclic shift pair, and a first cyclic shift value in the first cyclic shift pair is determined based on index information of the first code domain resource. A second cyclic shift value in the first cyclic shift pair is determined based on the first cyclic shift value and a maximum quantity of cyclic shift pairs supported in one interlace, and the maximum quantity of cyclic shift pairs supported in one interlace is determined based on a maximum quantity of code domain resources supported in one interlace.

Alternatively, the second cyclic shift value is determined based on the first cyclic shift value and a maximum quantity of cyclic shift pairs supported in one resource block, and the maximum quantity of cyclic shift pairs supported in one resource block is determined based on a maximum quantity of code domain resources supported in one resource block.

In some embodiments, the determining unit 520 is specifically configured to:

determine the first cyclic shift value based on the index information of the first code domain resource and the quantity of code domain resources supported in one interlace; or

determine the first cyclic shift value based on the index information of the first code domain resource and the quantity of code domain resources supported in one resource block.

In some embodiments, the first cyclic shift value is used to determine a negative acknowledgement NACK sequence corresponding to the first PSSCH, and the second cyclic shift value is used to determine an acknowledgement ACK sequence corresponding to the first PSSCH.

In some embodiments, the determining unit 520 is further configured to:
determine the first transmission resource in the second transmission resource set based on identity information of the first terminal device and/or identity information of a second terminal device, where the second terminal device is a terminal device that transmits the first PSSCH.

In some embodiments, the identity information of the second terminal device is determined based on source identity information carried in SCI associated with the first PSSCH, and the identity information of the first terminal device is determined based on identity information of a group member of the first terminal device, or the identity information of the first terminal device is 0.

It should be understood that the apparatus embodiments may correspond to the method embodiments, and for similar descriptions, reference may be made to the method embodiments. Specifically, the second terminal device 500 shown in FIG. 22 may correspond to a corresponding body that executes the method 200 or 300 in embodiments of this application, and the foregoing and other operations and/or functions of units in the second terminal device 500 are respectively used to implement corresponding processes in methods in FIG. 13 or FIG. 20. For brevity, details are not described herein again.

The foregoing describes the communications device in embodiments of this application from a perspective of a functional module with reference to the accompanying drawings. It should be understood that the function module may be implemented in a hardware form, may be implemented in an instruction in a software form, or may be implemented in a combination of hardware and a software module. Specifically, the steps of the method embodiments in embodiments of this application may be completed by using an integrated logic circuit of hardware in a processor and/or an instruction in a form of software. The steps of methods disclosed with reference to embodiments of this application may be directly executed by a hardware decoding processor, or may be executed by using a combination of hardware and a software module in a decoding processor. Optionally, the software module may be located in a known storage medium in the art such as a random access memory, a flash memory, a read-only memory, a programmable read-only memory, an electrically erasable programmable memory, or a register. The storage medium is located in a memory. The processor reads information from the memory, and performs the steps in foregoing method embodiments in combination with its hardware.

For example, the receiving unit 410, the transmitting unit 430, the transmitting unit 510, or the receiving unit 530 described above may be implemented by a transceiver, and the determining unit 420 or the determining unit 520 described above may be implemented by the processor.

FIG. 23 is a schematic structural diagram of a communications device 600 according to an embodiment of this application.

As shown in FIG. 23, the communications device 600 may include a processor 610.

The processor 610 may invoke a computer program from a memory and run the computer program to implement a method in embodiments of this application.

As shown in FIG. 23, the communications device 600 may further include a memory 620.

The memory 620 may be configured to store indication information, and may be further configured to store code, an instruction, and the like that are executed by the processor 610. The processor 610 may invoke a computer program from the memory 620 and run the computer program to implement a method in embodiments of this application. The memory 620 may be a separate component independent of the processor 610, or may be integrated into the processor 610.

As shown in FIG. 23, the communications device 600 may further include a transceiver 630.

The processor 610 may control the transceiver 630 to communicate with another device. Specifically, the processor 610 may transmit information or data to the another device, or receive information or data transmitted by the another device. The transceiver 630 may include a transmitter and a receiver. The transceiver 630 may further include an antenna, and a quantity of antennas may be one or more.

It should be understood that components in the communications device 600 are connected by using a bus system. In addition to a data bus, the bus system includes a power bus, a control bus, and a status signal bus.

It should be further understood that the communications device 600 may be the first terminal device in embodiments of this application, and the communications device 600 may implement a corresponding procedure implemented by the first terminal device in methods in embodiments of this application. In other words, the communications device 600 in the embodiment of this application may correspond to the first terminal device 400 in embodiments of this application, and may correspond to a corresponding body for executing the method 200 or 300 according to embodiments of this application. For brevity, details are not described herein again. Similarly, the communications device 600 may be the second terminal device in embodiments of this application, and the communications device 600 may implement a corresponding procedure implemented by the second terminal device in methods in embodiments of this application. In other words, the communications device 600 in the embodiment of this application may correspond to the second terminal device 500 in embodiments of this application, and may correspond to a corresponding body for executing the method 200 or 300 according to embodiments of this application. For brevity, details are not described herein again.

In addition, an embodiment of this application further provides a chip.

For example, the chip may be an integrated circuit chip, has a signal processing capability, and may implement or execute the methods, steps, and logical block diagrams disclosed in embodiments of this application. The chip may also be referred to as a system-level chip, a system chip, a chip system, or a system-on-chip, or the like. Optionally, the chip may be applied to various communications devices, so that a communications device on which the chip is installed can execute the methods, steps, and logical block diagrams disclosed in embodiments of this application.

FIG. 24 is a schematic structural diagram of a chip 700 according to an embodiment of this application.

As shown in FIG. 24, the chip 700 includes a processor 710.

The processor 710 may invoke and run a computer program from a memory, so as to implement a method in embodiments of this application.

As shown in FIG. 24, the chip 700 may further include a memory 720.

The processor 710 may invoke a computer program from the memory 720 and run the computer program to implement a method in embodiments of this application. The memory 720 may be configured to store indication information, and may be further configured to store code, an instruction, and the like that are executed by the processor 710. The memory 720 may be a separate component independent of the processor 710, or may be integrated into the processor 710.

As shown in FIG. 24, the chip 700 may further include an input interface 730. The processor 710 may control the input interface 730 to communicate with another device or chip, and specifically, may obtain information or data transmitted by the another device or chip.

As shown in FIG. 24, the chip 700 may further include an output interface 740. The processor 710 may control the output interface 740 to communicate with another device or chip, and specifically, may output information or data to the another device or chip.

It should be understood that the chip 700 may be applied to the first terminal device or the second terminal device in embodiments of this application. In other words, the chip may implement a corresponding procedure implemented by the first terminal device in methods in embodiments of this application, or may implement a corresponding procedure implemented by the second terminal device in methods in embodiments of this application. For brevity, details are not described herein again.

It should be further understood that components in the chip 700 are connected by using a bus system. In addition to a data bus, the bus system further includes a power bus, a control bus, and a status signal bus.

The foregoing processor may include but is not limited to a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, a discrete hardware component, or the like.

The processor may be configured to implement or execute the methods, steps, and logical block diagrams disclosed in the embodiments of this application. The steps of methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

The foregoing memory includes but is not limited to a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DR RAM).

It should be noted that the memories described herein are intended to include these and any other suitable types of memories.

An embodiment of this application further provides a computer-readable storage medium, configured to store a computer program. The computer-readable storage medium stores one or more programs, and the one or more programs include an instruction. When the instruction is executed by a portable electronic device including a plurality of application programs, the portable electronic device can execute the wireless communication method provided in this application.

Optionally, the computer-readable storage medium may be applied to the first terminal device in embodiments of this application, and the computer program causes a computer to execute a corresponding procedure implemented by the first terminal device in methods in embodiments of this application. For brevity, details are not described herein again. Optionally, the computer-readable storage medium may be applied to the second terminal device in embodiments of this application, and the computer program causes a computer to execute a corresponding procedure implemented by the second terminal device in methods in embodiments of this application. For brevity, details are not described herein again.

An embodiment of this application further provides a computer program product, including a computer program. When the computer program is executed by a computer, the computer may perform the wireless communication method provided in this application.

Optionally, the computer program product may be applied to the first terminal device in embodiments of this application, and the computer program causes the computer to execute a corresponding procedure implemented by the first terminal device in methods in embodiments of this application. For brevity, details are not described herein again. Optionally, the computer program product may be applied to the second terminal device in embodiments of this application, and the computer program causes the computer to execute a corresponding procedure implemented by the second terminal device in the methods in embodiments of this application. For brevity, details are not described herein again.

An embodiment of this application further provides a computer program. When the computer program is executed by a computer, the computer may perform the wireless communication method provided in this application.

Optionally, the computer program may be applied to a first terminal device in embodiments of this application. When the computer program runs on a computer, the computer executes corresponding procedures implemented by the first terminal device in methods in embodiments of this application. For brevity, details are not described herein again. Optionally, the computer program may be applied to a second terminal device in embodiments of this application. When the computer program runs on the computer, the computer executes corresponding procedures implemented by the second terminal device in methods in embodiments of this application. For brevity, details are not described herein again.

An embodiment of this application further provides a communications system, and the communications system may include the first terminal device and the second terminal device described above. For brevity, details are not described herein again. It should be noted that the terms "system" and the like in this specification may also be referred to as a "network management architecture", a "network system", or the like.

It should be further understood that terms used in embodiments of this application and the appended claims are merely intended to describe specific embodiments, but are not intended to limit embodiments of this application. For example, the singular forms of "alan", "said", "foregoing", and "the" used in embodiments of this application and the appended claims are also intended to include plural forms, unless the context clearly implies otherwise.

Persons of ordinary skill in the art may be aware that, units and algorithm steps in examples described in combination with embodiments disclosed in this specification can be implemented by electronic hardware or a combination of computer software and electronic hardware. Whether the functions are performed by hardware or software depends on particular applications and design constraints of the technical solutions. Those skilled in the art may use different methods for each specific application to implement the described functions, and such implementation is to be encompassed by the scope of embodiments of this application. When the functions are implemented in a form of a software function unit and sold or used as an independent product, the functions may be stored in a computer-readable storage medium. Based on such an understanding, the technical solutions of embodiments of this application essentially, or the part contributing to the conventional technology, or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

It may be aware by a person skilled in the art that, for the purpose of convenient and brief description, for a detailed working process of the foregoing system, apparatus, and unit, reference may be made to a corresponding process in the foregoing method embodiments. Details are not described herein again. In the several embodiments provided in this application, it should be understood that the disclosed system, apparatus, and method may be implemented in another manner. For example, the unit division, or module division, or component division in foregoing apparatus embodiments is merely a logical function division, and there may be other divisions in actual implementation. For example, a plurality of units or modules or components may be combined or integrated into another system, or some units or modules or components may be ignored or omitted. For another example, the foregoing units/modules/components described as separate/display components may be or may not be physically separated, that is, may be located in one place, or may be distributed on a plurality of network units. Some or all of the units/modules/components may be selected according to an actual need to achieve the objectives of embodiments of this application. Finally, it should be noted that the foregoing displayed or discussed mutual coupling or direct coupling or communication connections may be implemented by using some interfaces. The indirect couplings or communication connections between the apparatus or units may be implemented in electronic, mechanical, or other forms.

The foregoing descriptions are merely specific implementations of embodiments of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A wireless communication method, wherein the method is applicable to a first terminal device, and the method comprises:

   receiving a first physical sidelink shared channel PSSCH in a first slot;
   determining a first transmission resource from a physical sidelink feedback channel PSFCH transmission resource set comprised in a second slot; and
   transmitting a first PSFCH on the first transmission resource,
   wherein the second slot is determined based on the first slot, and the first PSFCH carries sidelink feedback information that is in response to the first PSSCH.

2. The method according to claim 1, wherein the first PSSCH occupies at least one sub-channel; and
   the determining a first transmission resource from a physical sidelink feedback channel PSFCH transmission resource set comprised in a second slot comprises:

   determining a first transmission resource set based on information about a resource block set where the first PSSCH is located and index information corresponding to a sub-channel occupied by the first PSSCH,
   wherein the first transmission resource set comprises the first transmission resource, and the index information corresponding to the sub-channel occupied by the first PSSCH comprises at least one of following information:

   index information corresponding to the first sub-channel in sub-channels occupied by the first PSSCH;
   index information corresponding to all sub-channels occupied by the first PSSCH; and
   a quantity of sub-channels occupied by the first PSSCH.

3. The method according to claim 2, wherein the resource block set where the first PSSCH is located comprises at least one first resource block set, the first transmission resource set comprises at least one second resource block set, and the at least one second resource block set is determined based on information about the at least one first resource block set.

4. The method according to claim 3, wherein the method comprises:
   determining the at least one second resource block set based on index information corresponding to the at least one first resource block set, wherein the index information corresponding to the at least one first resource block set comprises at least one of following information:

   index information corresponding to the first first resource block set in the at least one first resource block set;
   index information corresponding to all first resource block sets in the at least one first resource block set; and
   a quantity of resource block sets comprised in the at least one first resource block set.

5. The method according to any one of claims 2 to 4, wherein transmission resources comprised in the first transmission resource set are indexed in following order:
indexing first according to a frequency domain resource, and then according to a code domain resource.

6. The method according to claim 5, wherein the indexing first according to a frequency domain resource comprises:

indexing first according to an ascending order of a resource block set index, and then according to an ascending order of a physical resource block index; or
indexing first according to an ascending order of a physical resource block index, and then according to an ascending order of a resource block set index.

7. The method according to any one of claims 2 to 6, wherein the method further comprises:
determining the first transmission resource in the first transmission resource set based on identity information of the first terminal device and/or identity information of a second terminal device, wherein the second terminal device is a terminal device that transmits the first PSSCH.

8. The method according to claim 7, wherein the identity information of the second terminal device is determined based on source identity information carried in sidelink control information SCI associated with the first PSSCH, and the identity information of the first terminal device is determined based on identity information of a group member of the first terminal device, or the identity information of the first terminal device is 0.

9. The method according to claim 1, wherein the first PSSCH occupies at least one first interlace; and
the determining a first transmission resource from a physical sidelink feedback channel PSFCH transmission resource set comprised in a second slot comprises:

determining a second transmission resource set in the second slot based on at least one of following information:
information about a resource block set where the first PSSCH is located;
information about the at least one first interlace;
a quantity of code domain resources supported in one interlace;
code domain resource information supported by one interlace;
a quantity of code domain resources supported in one resource block;
code domain resource information supported by one resource block;
a PSFCH period;
an index of the first slot;
a quantity of interlaces comprised in a PSSCH resource pool; and
a quantity of interlaces comprised in a PSFCH slot,
wherein the second transmission resource set comprises the first transmission resource.

10. The method according to claim 9, wherein the information about the at least one first interlace comprises at least one of following information:

index information corresponding to the first first interlace in the at least one first interlace;
index information corresponding to all interlaces comprised in the at least one first interlace; and
a quantity of interlaces comprised in the at least one first interlace.

11. The method according to claim 9 or 10, wherein transmission resources comprised in the second transmission resource set are indexed in following order:
indexing first according to a frequency domain resource, and then according to a code domain resource.

12. The method according to claim 11, wherein the indexing first according to a frequency domain resource comprises:

indexing first according to an ascending order of a resource block set index, and then according to an ascending order of an interlace index; or
indexing first according to an ascending order of an interlace index, and then according to an ascending order of a resource block set index.

13. The method according to any one of claims 9 to 12, wherein the resource block set where the first PSSCH is located comprises at least one third resource block set, the second transmission resource set comprises at least one fourth resource block set, and the at least one fourth resource block set is determined based on information about the at least one third resource block set.

14. The method according to claim 13, wherein the method comprises:
determining the at least one fourth resource block set based on index information corresponding to the at least one third resource block set, wherein the index information corresponding to the at least one third resource block set comprises at least one of following information:

    index information corresponding to the first third resource block set in the at least one third resource block set;
    index information corresponding to all third resource block sets in the at least one third resource block set; and
    a quantity of resource block sets comprised in the at least one third resource block set.

15. The method according to any one of claims 9 to 14, wherein the second transmission resource set comprises at least one second interlace, and the second interlace is determined based on at least one of following information:

    information about a resource block set where the first PSSCH is located;
    information about the at least one first interlace;
    a PSFCH period;
    an index of the first slot;
    a quantity of interlaces comprised in a PSSCH resource pool; and
    a quantity of interlaces comprised in a PSFCH slot.

16. The method according to any one of claims 9to 15, wherein the second transmission resource set comprises a first code domain resource set, and the first code domain resource set is determined based on at least one of following information:

    a quantity of code domain resources supported in one interlace;
    code domain resource information supported by one interlace;
    a quantity of code domain resources supported in one resource block;
    code domain resource information supported by one resource block;
    a PSFCH period;
    an index of the first slot;
    a quantity of interlaces comprised in a PSSCH resource pool; and
    a quantity of interlaces comprised in a PSFCH slot.

17. The method according to claim 16, wherein a quantity of code domain resources in the first code domain resource set is determined based on following information: the quantity of code domain resources supported in one interlace or the quantity of code domain resources supported in one resource block, the PSFCH period, the quantity of interlaces comprised in a PSSCH resource pool, and the quantity of interlaces comprised in a PSFCH slot.

18. The method according to claim 17, wherein the quantity of code domain resources in the first code domain resource set is $(N_{CS1}/(P \times K))$, wherein Ncsi denotes the quantity of code domain resources supported in one interlace or the quantity of code domain resources supported in one resource block, P denotes the PSFCH period, K is determined based on $N_4$ and $N_5$, $N_4$ denotes the quantity of interlaces comprised in a PSSCH resource pool, and $N_5$ denotes the quantity of interlaces comprised in a PSFCH slot.

19. The method according to claim 18, wherein $K = max(1, N_4/N_5)$.

20. The method according to any one of claims 16 to 19, wherein the method further comprises:
determining, based on at least one of following information, index information corresponding to a code domain resource in the first code domain resource set:

    an index of the first slot;
    information about the at least one first interlace;
    a quantity of code domain resources in the first code domain resource set;
    the code domain resource information supported by one interlace; and
    the code domain resource information supported by one resource block.

21. The method according to any one of claims 16 to 20, wherein the method further comprises:

obtaining, based on pre-configuration information or network configuration information, the code domain resource information supported by one interlace or the code domain resource information supported by one resource block.

22. The method according to any one of claims 16 to 21, wherein the method further comprises:

obtaining a correspondence between index information of a code domain resource and the code domain resource, wherein the correspondence is predefined, pre-configured, or configured by a network; and
determining, based on index information corresponding to a code domain resource in the first code domain resource set and the correspondence, a code domain resource comprised in the first code domain resource set.

23. The method according to claim 22, wherein a first code domain resource in the first code domain resource set comprises a first cyclic shift pair, and a first cyclic shift value in the first cyclic shift pair is determined based on index information of the first code domain resource; and a second cyclic shift value in the first cyclic shift pair is determined based on the first cyclic shift value and a maximum quantity of cyclic shift pairs supported in one interlace, and the maximum quantity of cyclic shift pairs supported in one interlace is determined based on a maximum quantity of code domain resources supported in one interlace; or
the second cyclic shift value is determined based on the first cyclic shift value and a maximum quantity of cyclic shift pairs supported in one resource block, and the maximum quantity of cyclic shift pairs supported in one resource block is determined based on a maximum quantity of code domain resources supported in one resource block.

24. The method according to claim 23, wherein that a first cyclic shift value in the first cyclic shift pair is determined based on index information of the first code domain resource comprises:

the first cyclic shift value is determined based on the index information of the first code domain resource and the quantity of code domain resources supported in one interlace; or
the first cyclic shift value is determined based on the index information of the first code domain resource and the quantity of code domain resources supported in one resource block.

25. The method according to claim 23 or 24, wherein the first cyclic shift value is used to determine a negative acknowledgement NACK sequence corresponding to the first PSSCH, and the second cyclic shift value is used to determine an acknowledgement ACK sequence corresponding to the first PSSCH.

26. The method according to any one of claims 9 to 25, wherein the method further comprises:
determining the first transmission resource in the second transmission resource set based on identity information of the first terminal device and/or identity information of a second terminal device, wherein the second terminal device is a terminal device that transmits the first PSSCH.

27. The method according to claim 26, wherein the identity information of the second terminal device is determined based on source identity information carried in SCI associated with the first PSSCH, and the identity information of the first terminal device is determined based on identity information of a group member of the first terminal device, or the identity information of the first terminal device is 0.

28. A wireless communication method, wherein the method is applicable to a second terminal device, and the method comprises:

transmitting a first physical sidelink shared channel PSSCH in a first slot;
determining a first transmission resource from a physical sidelink feedback channel PSFCH transmission resource set comprised in a second slot; and
receiving a first PSFCH on the first transmission resource,
wherein the second slot is determined based on the first slot, and the first PSFCH carries sidelink feedback information that is in response to the first PSSCH.

29. The method according to claim 28, wherein the first PSSCH occupies at least one sub-channel; and
the determining a first transmission resource from a PSFCH transmission resource set comprised in a second slot comprises:

determining a first transmission resource set based on information about a resource block set where the first PSSCH is located and index information corresponding to a sub-channel occupied by the first PSSCH,

wherein the first transmission resource set comprises the first transmission resource, and the index information corresponding to the sub-channel occupied by the first PSSCH comprises at least one of following information:

index information corresponding to the first sub-channel in sub-channels occupied by the first PSSCH;
index information corresponding to all sub-channels occupied by the first PSSCH; and
a quantity of sub-channels occupied by the first PSSCH.

30. The method according to claim 29, wherein the resource block set where the first PSSCH is located comprises at least one first resource block set, the first transmission resource set comprises at least one second resource block set, and the at least one second resource block set is determined based on information about the at least one first resource block set.

31. The method according to claim 30, wherein the method comprises:
determining the at least one second resource block set based on index information corresponding to the at least one first resource block set, wherein the index information corresponding to the at least one first resource block set comprises at least one of following information:

index information corresponding to the first first resource block set in the at least one first resource block set;
index information corresponding to all first resource block sets in the at least one first resource block set; and
a quantity of resource block sets comprised in the at least one first resource block set.

32. The method according to any one of claims 29 to 31, wherein transmission resources comprised in the first transmission resource set are indexed in following order:
indexing first according to a frequency domain resource, and then according to a code domain resource.

33. The method according to claim 32, wherein the indexing first according to a frequency domain resource comprises:

indexing first according to an ascending order of a resource block set index, and then according to an ascending order of physical resource block index; or
indexing first according to an ascending order of a physical resource block index, and then according to an ascending order of resource block set index.

34. The method according to any one of claims 29 to 33, wherein the method further comprises:
determining the first transmission resource in the first transmission resource set based on identity information of the first terminal device and/or identity information of a second terminal device, wherein the second terminal device is a terminal device that transmits the first PSSCH.

35. The method according to claim 34, wherein the identity information of the second terminal device is determined based on source identity information carried in SCI associated with the first PSSCH, and the identity information of the first terminal device is determined based on identity information of a group member of the first terminal device, or the identity information of the first terminal device is 0.

36. The method according to claim 28, wherein the first PSSCH occupies at least one first interlace; and
the determining a first transmission resource from a physical sidelink feedback channel PSFCH transmission resource set comprised in a second slot comprises:

determining a second transmission resource set in the second slot based on at least one of following information:
information about a resource block set where the first PSSCH is located;
information about the at least one first interlace;
a quantity of code domain resources supported in one interlace;
code domain resource information supported by one interlace;
a quantity of code domain resources supported in one resource block;
code domain resource information supported by one resource block;
a PSFCH period;
an index of the first slot;
a quantity of interlaces comprised in a PSSCH resource pool; and
a quantity of interlaces comprised in a PSFCH slot,
wherein the second transmission resource set comprises the first transmission resource.

**37.** The method according to claim 36, wherein the information about the at least one first interlace comprises at least one of following information:

index information corresponding to the first first interlace in the at least one first interlace;
index information corresponding to all interlaces comprised in the at least one first interlace; and
a quantity of interlaces comprised in the at least one first interlace.

**38.** The method according to claim 36 or 37, wherein transmission resources comprised in the second transmission resource set are indexed in following order:
indexing first according to a frequency domain resource, and then according to a code domain resource.

**39.** The method according to claim 38, wherein the indexing first according to a frequency domain resource comprises:

indexing first according to an ascending order of a resource block set index, and then according to an ascending order of an interlace index; or
indexing first according to an ascending order of an interlace index, and then according to an ascending order of resource block set index.

**40.** The method according to any one of claims 9 to 39, wherein the resource block set where the first PSSCH is located comprises at least one third resource block set, the second transmission resource set comprises at least one fourth resource block set, and the at least one fourth resource block set is determined based on information about the at least one third resource block set.

**41.** The method according to claim 40, wherein the method comprises:

determining the at least one fourth resource block set based on index information corresponding to the at least one third resource block set, wherein the index information corresponding to the at least one third resource block set comprises at least one of following information:

index information corresponding to the first third resource block set in the at least one third resource block set;
index information corresponding to all third resource block sets in the at least one third resource block set; and
a quantity of resource block sets comprised in the at least one third resource block set.

**42.** The method according to any one of claims 36 to 41, wherein the second transmission resource set comprises at least one second interlace, and the second interlace is determined based on at least one of following information:

information about a resource block set where the first PSSCH is located;
information about the at least one first interlace;
a PSFCH period;
an index of the first slot;
a quantity of interlaces comprised in a PSSCH resource pool; and
a quantity of interlaces comprised in a PSFCH slot.

**43.** The method according to any one of claims 36 to 42, wherein the second transmission resource set comprises a first code domain resource set, and the first code domain resource set is determined based on at least one of following information:

a quantity of code domain resources supported in one interlace;
code domain resource information supported by one interlace;
a quantity of code domain resources supported in one resource block;
code domain resource information supported by one resource block;
a PSFCH period;
an index of the first slot;
a quantity of interlaces comprised in a PSSCH resource pool; and
a quantity of interlaces comprised in a PSFCH slot.

**44.** The method according to claim 43, wherein a quantity of code domain resources in the first code domain resource set is determined based on following information: the quantity of code domain resources supported in one interlace

or the quantity of code domain resources supported in one resource block, the PSFCH period, the quantity of interlaces comprised in a PSSCH resource pool, and the quantity of interlaces comprised in a PSFCH slot.

45. The method according to claim 44, wherein the quantity of code domain resources in the first code domain resource set is (NCS1/(P×K)), wherein NCS1 denotes the quantity of code domain resources supported in one interlace or the quantity of code domain resources supported in one resource block, P denotes the PSFCH period, K is determined based on N4 and N5, N4 denotes the quantity of interlaces comprised in a PSSCH resource pool, and N5 denotes the quantity of interlaces comprised in a PSFCH slot.

46. The method according to claim 45, wherein K = max(1, N4/N5).

47. The method according to any one of claims 43 to 46, wherein the method further comprises:
determining, based on at least one of following information, index information corresponding to a code domain resource in the first code domain resource set:

an index of the first slot;
information about the at least one first interlace;
a quantity of code domain resources in the first code domain resource set;
the code domain resource information supported by one interlace; and
the code domain resource information supported by one resource block.

48. The method according to any one of claims 43 to 47, wherein the method further comprises:
obtaining, based on pre-configuration information or network configuration information, the code domain resource information supported by one interlace or the code domain resource information supported by one resource block.

49. The method according to any one of claims 43 to 48, wherein the method further comprises:

obtaining a correspondence between index information of a code domain resource and the code domain resource, wherein the correspondence is predefined, pre-configured, or configured by a network; and
determining, based on index information corresponding to a code domain resource in the first code domain resource set and the correspondence, a code domain resource comprised in the first code domain resource set.

50. The method according to claim 49, wherein a first code domain resource in the first code domain resource set comprises a first cyclic shift pair, and a first cyclic shift value in the first cyclic shift pair is determined based on index information of the first code domain resource; and a second cyclic shift value in the first cyclic shift pair is determined based on the first cyclic shift value and a maximum quantity of cyclic shift pairs supported in one interlace, and the maximum quantity of cyclic shift pairs supported in one interlace is determined based on a maximum quantity of code domain resources supported in one interlace; or
the second cyclic shift value is determined based on the first cyclic shift value and a maximum quantity of cyclic shift pairs supported in one resource block, and the maximum quantity of cyclic shift pairs supported in one resource block is determined based on a maximum quantity of code domain resources supported in one resource block.

51. The method according to claim 50, wherein that a first cyclic shift value in the first cyclic shift pair is determined based on index information of the first code domain resource comprises:

the first cyclic shift value is determined based on the index information of the first code domain resource and the quantity of code domain resources supported in one interlace; or
the first cyclic shift value is determined based on the index information of the first code domain resource and the quantity of code domain resources supported in one resource block.

52. The method according to claim 50 or 51, wherein the first cyclic shift value is used to determine a negative acknowledgement NACK sequence corresponding to the first PSSCH, and the second cyclic shift value is used to determine an acknowledgement ACK sequence corresponding to the first PSSCH.

53. The method according to any one of claims 36 to 52, wherein the method further comprises:
determining the first transmission resource in the second transmission resource set based on identity information of the first terminal device and/or identity information of a second terminal device, wherein the second terminal device is a terminal device that transmits the first PSSCH.

**54.** The method according to claim 53, wherein the identity information of the second terminal device is determined based on source identity information carried in SCI associated with the first PSSCH, and the identity information of the first terminal device is determined based on identity information of a group member of the first terminal device, or the identity information of the first terminal device is 0.

**55.** A first terminal device, comprising:

a receiving unit, configured to receive a first physical sidelink shared channel PSSCH in a first slot;
a determining unit, configured to determine a first transmission resource from a physical sidelink feedback channel PSFCH transmission resource set comprised in a second slot; and
a transmitting unit, configured to transmit a first PSFCH on the first transmission resource,
wherein the second slot is determined based on the first slot, and the first PSFCH carries sidelink feedback information that is in response to the first PSSCH.

**56.** A second terminal device, comprising:

a transmitting unit, configured to transmit a first physical sidelink shared channel PSSCH in a first slot;
a determining unit, configured to determine a first transmission resource from a physical sidelink feedback channel PSFCH transmission resource set comprised in a second slot; and
a receiving unit, configured to receive a first PSFCH on the first transmission resource,
wherein the second slot is determined based on the first slot, and the first PSFCH carries sidelink feedback information that is in response to the first PSSCH.

**57.** A first terminal device, comprising:
a processor and a memory, wherein the memory is configured to store a computer program, and the processor is configured to invoke and run the computer program stored in the memory to execute the method according to any one of claims 1 to 27.

**58.** A second terminal device, comprising:
a processor and a memory, wherein the memory is configured to store a computer program, and the processor is configured to invoke and run the computer program stored in the memory to execute the method according to any one of claims 28 to 54.

**59.** A chip, comprising:
a processor, configured to invoke and run a computer program from a memory, to cause a device installed with the chip to execute the method according to any one of claims 1 to 27 or the method according to any one of claims 28 to 54.

**60.** A computer-readable storage medium, configured to store a computer program, and the computer program causes a computer to execute the method according to any one of claims 1 to 27 or the method according to any one of claims 28 to 54.

**61.** A computer program product, comprising computer program instructions that cause a computer to execute the method according to any one of claims 1 to 27 or the method according to any one of claims 28 to 54.

**62.** A computer program, wherein the computer program causes a computer to execute the method according to any one of claims 1 to 27 or the method according to any one of claims 28 to 54.

FIG. 1

FIG. 2

FIG. 3

FIG. 4

FIG. 5

FIG. 6

FIG. 7

FIG. 8

| AGC | PSCCH | PSSCH | PSFCH | GP |

FIG. 9

FIG. 10

PSSCH        PSFCH

f

t

0  1  2  3  4  5  6  7  8  9  10  11  12  13  14  15  16  17  18  19  20  21  22  23  24  25  26  27  28  29

Interlace 1        Interlace 2

FIG. 11

f (RB)   f (Interlace)

t (OFDM symbol)

ACG        PSCCH1        PSSCH1        PSCCH2        PSSCH2        GP

FIG. 12

f (RB)   f (Interlace)

t (OFDM symbol)

ACG     PSCCH1     PSSCH1     PSCCH2     PSSCH2     GP

PSFCH     PSFCH0

FIG. 13

Starting position of guard band 0

Starting position of guard band 1

Starting position of guard band 2

Resource block

Resource block set 0   Resource block set 1   Resource block set 2   Resource block set 3

Common resource block reference

Starting position of a sidelink BWP

Length of guard band 0

Length of guard band 1

Length of guard band 2

Ending position of a sidelink BWP

Starting position of a resource pool

Ending position of a resource pool

Frequency domain

FIG. 14

200

| Receive a first physical sidelink shared channel PSSCH in a first slot | S210 |

| Determine a first transmission resource from a PSFCH transmission resource set included in a second slot | S220 |

| Transmit a first PSFCH on the first transmission resource, where the second slot is determined based on the first slot, and the first PSFCH carries sidelink feedback information that is in response to the first PSSCH | S230 |

FIG. 15

FIG. 16

PSSCH transmission resource

PSFCH transmission resource

Slot 7    Slot 8    Slot 9    Slot 10    Slot 11    Slot 12

Interlace 0    Interlace 1    Interlace 2    Interlace 3

FIG. 17

PSSCH transmission
resource

PSFCH transmission
resource

Slot 7    Slot 8    Slot 9    Slot 10    Slot 11    Slot 12

Interlace 0    Interlace 1    Interlace 2    Interlace3

FIG. 18

PSSCH transmission
resource

PSFCH transmission
resource

Slot 7    Slot 8    Slot 9    Slot 10    Slot 11    Slot 12

Interlace 0    Interlace 1    Interlace 2    Interlace 3

FIG. 19

300

Transmit a first physical sidelink shared channel PSSCH in a first slot — S310

Determine a first transmission resource from a PSFCH transmission resource set included in a second slot — S320

Transmit a first PSFCH on the first transmission resource, where the second slot is determined based on the first slot, and the first PSFCH carries sidelink feedback information that is in response to the first PSSCH — S330

FIG. 20

400

**First terminal device**

Receiving unit 410

Determining unit 420

Transmitting unit 430

FIG. 21

500

**Second terminal device**

Transmitting unit 510

Determining unit 520

Receiving unit 530

FIG. 22

600

Communications device

620 Memory    Processor 610

Transceiver 630

FIG. 23

700

Chip

730    Processor 710

Memory 720    740

FIG. 24

## INTERNATIONAL SEARCH REPORT

International application No.

**PCT/CN2021/131920**

**A.    CLASSIFICATION OF SUBJECT MATTER**

H04W 72/04(2009.01)i;  H04W 4/48(2018.01)i;  H04L 5/00(2006.01)i;  H04L 1/18(2006.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT, ENTXTC, VEN, CNKI, 3GPP: 侧, 直连, 旁, 边, 共享, 反馈, 信道, 子, 索引, 频域, 时域, 时隙, 资源, 块, 梳齿, PSSCH, PSFCH, sidelink, share, feedback, channel, sub, index, frequency, time, slot, resource, block, RB, comb

**C.    DOCUMENTS CONSIDERED TO BE RELEVANT**

| Category* | Citation of document, with indication, where appropriate, of the relevant passages | Relevant to claim No. |
|---|---|---|
| X | US 2021288778 A1 (INNOVATIVE TECH LAB CO., LTD.) 16 September 2021 (2021-09-16)<br>    description, paragraphs [0162]-[0273], and figures 8-18 | 1-62 |
| X | CN 112671521 A (MEDIATEK SINGAPORE PTE. LTD.) 16 April 2021 (2021-04-16)<br>    description, paragraphs [0019]-[0086], and figures 2-8 | 1-62 |
| X | CMCC. "Discussion on HARQ feedback for NR V2X"<br>*3GPP TSG RAN WG1#98bis, R1-1910164,* 20 October 2019 (2019-10-20),<br>    section 2 | 1, 28, 55-62 |
| A | CN 112087799 A (HUAWEI TECHNOLOGIES CO., LTD.) 15 December 2020 (2020-12-15)<br>    entire document | 1-62 |
| A | US 2021337527 A1 (OFINNO LLC.) 28 October 2021 (2021-10-28)<br>    entire document | 1-62 |

☐ Further documents are listed in the continuation of Box C.      ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **19 August 2022** | **25 August 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/131920**

| Patent document cited in search report | | | Publication date (day/month/year) | Patent family member(s) | | | Publication date (day/month/year) |
|---|---|---|---|---|---|---|---|
| US | 2021288778 | A1 | 16 September 2021 | EP | 3876460 | A1 | 08 September 2021 |
| | | | | KR | 20200050848 | A | 12 May 2020 |
| | | | | CN | 112930658 | A | 08 June 2021 |
| CN | 112671521 | A | 16 April 2021 | WO | 2021072620 | A1 | 22 April 2021 |
| CN | 112087799 | A | 15 December 2020 | None | | | |
| US | 2021337527 | A1 | 28 October 2021 | EP | 3871358 | A1 | 01 September 2021 |
| | | | | KR | 20220073823 | A | 03 June 2022 |
| | | | | WO | 2021067912 | A1 | 08 April 2021 |
| | | | | CA | 3154624 | A1 | 08 April 2021 |

Form PCT/ISA/210 (patent family annex) (January 2015)